# FASCICULE DE BREVET EUROPEEN

(11) **EP 3 826 863 B1**
(45) Date de publication et mention de la délivrance du brevet: **18.05.2022**
(21) Numéro de dépôt: 19755287.0
(22) Date de dépôt: 25.07.2019
(51) Int. Cl.: B60C 9/00, D07B 1/06, D02G 3/48, B60C 9/20, B60C 9/22

(54) **CABLES METALLIQUES BI-MODULES**
METALLSEILE MIT BI-MODUL
BI-MODULUS METAL CORDS

(30) Priorité: 25.07.2018 FR 1856922
(43) Date de publication de la demande: 02.06.2021
(73) Titulaire: COMPAGNIE GENERALE DES ETABLISSEMENTS MICHELIN, 63000 Clermont-Ferrand (FR)
(72) Inventeur: CORNILLE, Richard, 63040 Clermont-Ferrand Cedex 9 (FR); BARGUET, Henri, 63040 Clermont-Ferrand Cedex 9 (FR); ROTY, Gael, 63040 Clermont-Ferrand Cedex 9 (FR)
(74) Mandataire: Louret, Sylvain
(86) Numéro de dépôt international: PCT/EP2019/070034
(87) Numéro de publication internationale: WO 2020/021007

(56) Documents cités:
- WO-A1-2007/128335
- WO-A1-2016/083265
- WO-A1-2016/189073
- WO-A2-2012/055677
- JP-A- H06 346 386
- JP-A- 2007 092 259
- US-A1- 2013 048 185

## Description

La présente invention est relative aux câbles métalliques utilisables pour le renforcement des pneumatiques pour véhicules. Par pneumatique, on entend un bandage destiné à former une cavité en coopérant avec un élément support, par exemple une jante, cette cavité étant apte à être pressurisée à une pression supérieure à la pression atmosphérique. Un pneumatique selon l'invention présente une structure de forme sensiblement toroïdale.

On connait de l'état de la technique des pneumatiques pour véhicules de tourisme comprenant un sommet et deux flancs. Ces pneumatiques comprennent classiquement une armature de carcasse ancrée dans deux bourrelets et surmontée radialement par une armature de sommet elle-même surmontée radialement d'une bande de roulement, l'armature de sommet étant réunie auxdits bourrelets par les deux flancs. L'armature de carcasse comprend une unique nappe de carcasse comprenant des éléments filaires de renfort de carcasse. L'armature de sommet comprend une armature de travail comprenant deux nappes de travail comprenant des éléments filaires de renfort de travail, les éléments filaires de renfort de travail des deux nappes faisant des angles avec la direction circonférentielle du pneumatique d'orientations opposées d'une nappe de travail à l'autre. L'armature de sommet comprend également une armature de frettage comprenant une unique nappe de frettage comprenant des éléments filaires textiles de renfort de frettage. Les éléments filaires de renfort de carcasse et de travail sont agencés de façon à définir, dans le sommet, un maillage triangulaire. Un tel pneumatique est notamment décrit dans US2007006957. Du fait de la présence de deux nappes de travail, les éléments filaires textiles de renfort de frettage de US2007006957 présentent des propriétés mécaniques relativement faibles.

On connait de WO2016/166056 un pneumatique dans lequel l'armature de travail comprend une unique nappe de travail. Ainsi, on allège l'armature de sommet du pneumatique. Dans ce pneumatique, le maillage triangulaire est assuré par l'agencement particulier, dans le sommet, des éléments filaires de renfort de carcasse, de travail et de frettage. WO2016/166056 décrit des éléments filaires de renfort de frettage textiles et métalliques. En particulier, WO2016/166056 décrit un câble 3.26 formant un élément filaire de renfort de frettage comprenant une unique couche de N=3 éléments filaires métalliques enroulés en hélice, chaque élément filaire métallique étant constitué d'un monofilament en acier et présente un diamètre égal à 0,26 mm. Du fait de la présence d'une seule nappe de travail, les éléments filaires de renfort de frettage de WO2016/166056 présentent des propriétés mécaniques relativement élevées.

Dans US2007006957 et WO2016/166056, les éléments filaires de renfort de frettage doivent assurer une fonction de frettage du pneumatique, c'est-à-dire de contrebalancer les effets de la force centrifuge liés à la vitesse de rotation du pneumatique, comme par exemple une déformation du profil du pneumatique ou une modification de l'aire de contact lorsqu'on exerce de fortes sollicitations sur le pneumatique. A cet égard, le pneumatique de US2007006957 présente des éléments filaires de renfort de frettage dont la capacité de frettage est perfectible.

Par ailleurs, il est souhaitable de disposer de pneumatiques émettant le moins de bruit possible, notamment le bruit dit « coast-by » qui est par exemple évalué par un procédé de mesure conforme à la norme ISO13325:2003. A cet égard, le pneumatique de WO2016/166056 émet un bruit relativement élevé.

En outre, que ce soit dans le cas du pneumatique de US2007006957 ou du pneumatique de WO2016/166056, en raison d'un coût relativement élevé des matériaux textiles, notamment de l'aramide, les éléments filaires textiles de renfort de frettage sont relativement coûteux. D'autre part, à des températures élevées, par exemple à haute vitesse, les propriétés mécaniques de ces matériaux textiles se dégradent significativement du fait de leur faible stabilité thermique. Enfin, les éléments filaires textiles ne présentent peu ou pas de rôle protecteur vis-à-vis des agressions mécaniques, par exemple les perforations, que subit le pneumatique.

Des câbles comprenant des éléments filaires métalliques sont divulgués dans WO 2016/083265 et WO 2016/189073.

L'invention a pour but de fournir un élément filaire de renfort de frettage métallique permettant à la fois d'assurer la fonction de frettage d'un pneumatique et à la fois de réduire le bruit émis par le pneumatique.

### CABLE SELON L'INVENTION

A cet effet, l'invention a pour objet un câble comprenant une unique couche d'éléments filaires métalliques enroulés en hélice, chaque élément filaire métallique de la couche décrivant, lorsque le câble s'étend selon une direction sensiblement rectiligne, une trajectoire en forme d'hélice autour d'un axe principal sensiblement parallèle à la direction sensiblement rectiligne, de sorte que, dans un plan de coupe sensiblement perpendiculaire à l'axe principal, la distance entre le centre de chaque élément filaire métallique de la couche et l'axe principal est sensiblement constante et égale pour tous les éléments filaires métalliques de la couche, câble dans lequel:
- 5 GPa ≤ M₁ ≤ 16 GPa, et
- 40 GPa ≤ M₂ ≤ 160 GPa, et
- 3 ≤ M₂/M₁,
M₁ et M₂ étant exprimés en GPa avec :
- M₁=10 / A₁₀₀ avec :
   - A₁₀₀ étant l'allongement, exprimé en %, du câble sous un effort de 100 MPa, et
- M2=[(F₄₀-F₃₀) / (A₄₀-A₃₀)] / S avec :
   - S étant la section, exprimée en mm², telle que S=MI /Mv avec :
      ▪ MI étant la masse linéique des éléments filaires métalliques, exprimée en g par m de câble,
      ▪ Mv étant la masse volumique des éléments filaires métalliques, exprimée en g par cm³,
   - F₄₀ étant la force, exprimée en daN, égale à 40 % de la force théorique maximale Fₜ du câble,
   - F₃₀ étant la force, exprimée en daN, égale à 30 % de la force théorique maximale Fₜ du câble,
   - A₄₀ étant l'allongement du câble, exprimé en %, à 40% de la force théorique maximale Fₜ du câble,
   - A₃₀ étant l'allongement du câble, exprimé en %, à 30% de la force théorique maximale Fₜ du câble,
   avec Fₜ= MI x Rm /Mv, exprimée en daN, avec Rm étant la résistance mécanique à rupture moyenne, exprimée en MPa, des éléments filaires métalliques constituant la couche unique.

D'une part, le câble selon l'invention, comme le démontre les essais comparatifs décrits ci-dessous, permet de réduire le bruit émis par le pneumatique en raison d'une valeur de M₁ allant de 5 GPa à 16 GPa. M₁ est représentatif du module du câble pour des efforts subis par le câble lors d'un roulage dans des conditions normales et donc représentatives des conditions dans lesquelles est émis le bruit dit « coast-by ». En dessous de 5 GPa, dans le cas d'un effort subi relativement faible, le câble se déformerait de façon trop importante et atteindrait alors la plage d'allongements correspondant au module M₂ bien plus élevé, module qui serait alors néfaste notamment au bruit émis par le pneumatique mais également à son confort. Au-dessus de 16 GPa, le câble présenterait un module trop élevé et donc serait relativement rigide, augmentant alors le bruit généré par le roulage du pneumatique.

D'autre part, le câble selon l'invention, comme le démontre les essais comparatifs décrits ci-dessous, présente également une excellente capacité de frettage en raison d'une valeur de M₂ allant de 40 GPa à 160 GPa. M₂ est représentatif du module du câble pour des efforts subis par le câble lorsqu'on exerce de fortes sollicitations sur le pneumatique. En dessous de 40 GPa, le câble ne pourra pas assurer une capacité de frettage suffisante pour contrebalancer les effets de la force centrifuge liés à la vitesse de rotation du pneumatique. Au-dessus de 160 GPa, il existe un risque d'endommager le câble en cas de déformation imposée importante, par exemple lors du franchissement d'un obstacle comme un trottoir, une bosse ou un nid de poule.

Enfin, le rapport M₂/M₁ assure que l'on obtient, à la fois, un bruit émis le plus bas possible et une excellente capacité de frettage du câble selon l'invention et que l'on ne sacrifie pas une performance par rapport à une autre.

Les valeurs de A₃₀ et A₄₀ sont obtenues en déterminant, sur une courbe force-allongement obtenue en tractionnant un câble dans les conditions de la norme ASTM D2969-04 de 2014, respectivement les valeurs à 30% et 40% de la force théorique maximale Fₜ du câble. De façon analogue, la valeur de A₁₀₀ est obtenue en déterminant, sur une courbe force-allongement obtenue en tractionnant un câble dans les conditions de la norme ASTM D2969-04 de 2014, l'allongement du câble sous un effort de 100 MPa.

Par résistance mécanique moyenne Rm, on entend la moyenne de la résistance mécanique des éléments filaires métalliques constituant la couche unique pondérée par le nombre de ces éléments filaires métalliques. Ainsi, par exemple, si tous les éléments filaires métalliques présentent la même résistance mécanique, la résistance mécanique moyenne Rm est égale à la résistance mécanique de chaque élément filaire métallique. La résistance mécanique ou résistance mécanique à rupture de chaque élément filaire métallique est sa contrainte maximale à la rupture en traction et est déterminée en appliquant la norme ASTM D2969-04 de 2014 à chaque élément filaire métallique.

La masse linéique MI des éléments filaires métalliques est déterminée, par exemple, en appliquant la norme ASTM D2969-04 de 2014 à chaque élément filaire métallique, puis en sommant les valeurs des masses linéiques de chaque élément filaire métallique.

La masse volumique Mv des éléments filaires métalliques est la masse volumique du métal constituant chacun des éléments filaires métalliques. Par exemple, pour un acier au carbone utilisé dans le domaine des pneumatiques, la masse volumique Mv est égale à 7,8 g.CM⁻³.

En plus des avantages décrits ci-dessus, le câble selon l'invention permet la fabrication d'une armature de frettage, du fait de l'utilisation d'éléments filaires métalliques, moins chère, plus stable thermiquement et conférant une protection mécanique au pneumatique par rapport aux éléments filaires textiles de renfort de frettage de l'état de la technique décrit dans US2007006957 et WO2016/166056. De plus, l'utilisation d'éléments filaires métalliques permet de faciliter le contrôle de l'armature de frettage par radiographie après sa fabrication.

Les valeurs des caractéristiques M1, M2, M2/M1, M1', M1", Ft, MI, Mv, Rm ainsi que des autres caractéristiques décrites ci-dessous sont mesurées sur ou déterminées à partir des câbles soit directement après fabrication, c'est-à-dire avant toute étape de noyage dans une matrice élastomérique, soit extrait d'une matrice élastomérique, par exemple d'un pneumatique, et ayant alors subit une étape de nettoyage durant laquelle on retire du câble toute matrice élastomérique, notamment tout matériau présent à l'intérieur du câble. Pour garantir un état d'origine, l'interface adhésive entre chaque élément filaire métallique et la matrice élastomérique doit être supprimée, par exemple par procédé électro-chimique dans un bain de carbonate de sodium. Les effets associés à l'étape de conformation décrits ci-dessous, notamment l'allongement des câbles, sont annulés par l'extraction de la nappe et du câble qui reprennent, lors de l'extraction, sensiblement leurs caractéristiques d'avant l'étape de conformation.

L'homme du métier pourra faire varier les caractéristiques géométriques du câble afin de faire varier les valeurs de M₁ et M₂ dans les limites des intervalles de l'invention. Ainsi, afin d'augmenter le module M₁, on pourra diminuer le rayon de courbure des éléments filaires métalliques ce qui revient à augmenter le diamètre de la voûte interne définie par les éléments filaires métalliques. A l'inverse, afin de baisser le module M₁, on pourra augmenter le rayon de courbure des éléments filaires métalliques, ce qui revient à diminuer le diamètre de la voûte interne. On pourra, afin d'augmenter le module M₂, baisser l'angle d'hélice de chaque élément filaire métallique ce qui revient à diminuer le diamètre de la voûte interne. A l'inverse, on pourra, afin de baisser le module M₂, augmenter l'angle d'hélice de chaque élément filaire métallique ce qui revient à augmenter le diamètre de la voûte interne.

On rappelle à cet effet que l'angle d'hélice α est une grandeur bien connue de l'homme du métier et peut être déterminé par le calcul itératif suivant comprenant 3 itérations et dans lequel l'indice i indique le numéro de l'itération 1, 2 ou 3. Connaissant l'allongement structural As exprimé en %, l'angle d'hélice α(i) est tel que α(i)=Arcos [ (100/(100+As) × Cos [ Arctan ((π × Df) / (P × Cos(α(i-1)) × Sin(π/N)) ] ], formule dans laquelle P est le pas exprimé en millimètres auquel chaque élément filaire métallique est enroulé, N est le nombre d'éléments filaires métalliques de la couche, Df est le diamètre de chaque élément filaire métallique exprimé en millimètres, Arcos, Cos et Arctan et Sin désignant respectivement les fonctions arcosinus, cosinus, arctangente et sinus. Pour la première itération, c'est-à-dire pour le calcul de α(1), on prend α(0)=0. A la troisième itération, on obtient α(3)=α avec au moins un chiffre significatif après la virgule quand α est exprimé en degrés.

L'allongement structural As, grandeur bien connue de l'homme du métier, est déterminé par exemple en appliquant la norme ASTM D2969-04 de 2014 à un câble testé de façon à obtenir une courbe force-allongement. On déduit l'As sur la courbe obtenue comme l'allongement, en %, correspondant à la pente maximale de la courbe force-allongement. Pour rappel, une courbe force allongement comprend, en se déplaçant vers les allongements croissants, une partie structurale, une partie élastique et une partie plastique. La partie structurale correspond à l'allongement structural As résultant de l'aération du câble, c'est-à-dire l'espace vacant entre les différents éléments filaires métalliques constituants le câble. La partie élastique correspond à un allongement élastique résultant de la construction du câble, notamment des angles des différentes couches et des diamètres des fils. La partie plastique correspond à l'allongement plastique résultant de la plasticité (déformation irréversible au-delà de la limite d'élasticité) d'un ou plusieurs éléments filaires métalliques.

On rappelle que le pas P auquel chaque élément filaire métallique est enroulé est la longueur parcourue par cet élément filaire, mesurée parallèlement à l'axe du câble dans lequel il se trouve, au bout de laquelle l'élément filaire ayant ce pas effectue un tour complet autour dudit axe du câble.

Le diamètre d'hélice Dh, exprimé en millimètres, est calculé selon la relation Dh=P × Tan(α) / π dans laquelle P est le pas exprimé en millimètres auquel chaque élément filaire métallique est enroulé, α est l'angle d'hélice de chaque élément filaire métallique déterminé ci-dessus et Tan la fonction tangente. Le diamètre d'hélice Dh correspond au diamètre du cercle théorique passant par les centres des éléments filaires métalliques de la couche dans un plan perpendiculaire à l'axe principal du câble.

Les éléments filaires métalliques du câble selon l'invention définissent une voûte interne du câble de diamètre Dv. Le diamètre de voûte Dv, exprimé en millimètres, est calculé selon la relation Dv=Dh-Df dans laquelle Df est le diamètre de chaque élément filaire métallique et Dh le diamètre d'hélice, tous deux exprimés en millimètres.

Le rayon de courbure Rf de chaque élément filaire métallique, exprimé en millimètres, est calculé selon la relation Rf=P/(π × Sin(2α)) dans laquelle P est le pas exprimé en millimètres de chaque élément filaire métallique, α est l'angle d'hélice de chaque élément filaire métallique et Sin la fonction sinus.

Le câble selon l'invention comprend une unique couche d'éléments filaires métalliques enroulés en hélice. En d'autres termes, le câble selon l'invention comprend une seule, pas deux, ni plus de deux couches d'éléments filaires métalliques enroulés en hélice. La couche est constituée d'éléments filaires métalliques, c'est-à-dire plusieurs éléments filaires métalliques, pas d'un seul élément filaire métallique. Dans un mode de réalisation du câble, par exemple lorsque le câble est issu de son procédé de fabrication, le câble tel que défini ci-dessus est constitué de la couche d'éléments filaires métalliques enroulés, autrement dit le câble ne comprend pas d'autre élément filaire métallique que ceux de la couche.

Le câble selon l'invention est à simple hélice. Par définition, un câble à simple hélice est un câble dans lequel l'axe de chaque élément filaire métallique de la couche décrit une unique hélice, contrairement à un câble à double hélice dans lequel l'axe de chaque élément filaire métallique décrit une première hélice autour de l'axe du câble et une deuxième hélice autour d'une hélice décrite par l'axe du câble. En d'autres termes, lorsque le câble s'étend selon une direction sensiblement rectiligne, le câble comprend une unique couche d'éléments filaires métallique enroulés ensemble en hélice, chaque élément filaire métallique de la couche décrivant une trajectoire en forme d'hélice autour d'un axe principal sensiblement parallèle à la direction sensiblement rectiligne de sorte que, dans un plan de coupe sensiblement perpendiculaire à l'axe principal, la distance entre le centre de chaque élément filaire métallique de la couche et l'axe principal soit sensiblement constante et égale pour tous les éléments filaires métalliques de la couche. Cette distance entre le centre de chaque élément filaire métallique de la couche et l'axe principal est égale à la moitié du diamètre d'hélice Dh. Au contraire, lorsqu'un câble à double hélice s'étend selon une direction sensiblement rectiligne, la distance entre le centre de chaque élément filaire métallique de la couche et la direction sensiblement rectiligne est différente pour tous les éléments filaires métalliques de la couche.

Le câble selon l'invention est dépourvu d'âme centrale métallique. On parle également de câble de structure 1xN dans laquelle N est le nombre d'éléments filaires métalliques ou bien encore de câble à structure ouverte (« open-cord » en anglais). Dans le câble selon l'invention défini ci-dessus, la voûte interne est vide et donc dépourvue de tout matériau de remplissage, notamment dépourvue de toute composition élastomérique. On parle alors d'un câble dépourvu de matériau de remplissage.

La voûte du câble selon l'invention est délimitée par les éléments filaires métalliques et correspond au volume délimité par un cercle théorique, d'une part, radialement intérieur à chaque élément filaire métallique et, d'autre part, tangent à chaque élément filaire métallique. Le diamètre de ce cercle théorique est égal au diamètre de voûte Dv.

Par élément filaire, on entend un élément s'étendant longitudinalement selon un axe principal et présentant une section perpendiculaire à l'axe principal dont la plus grande dimension G est relativement faible par rapport à la dimension L selon l'axe principal. Par relativement faible, on entend que L/G est supérieur ou égal à 100, de préférence supérieur ou égal à 1000. Cette définition couvre aussi bien les éléments filaires de section circulaire que les éléments filaires de section non circulaire, par exemple de section polygonale ou oblongue. De façon très préférée, chaque élément filaire métallique présente une section circulaire.

Par métallique, on entend par définition un élément filaire constitué majoritairement (c'est-à-dire pour plus de 50% de sa masse) ou intégralement (pour 100% de sa masse) d'un matériau métallique. Chaque élément filaire métallique est préférentiellement en acier, plus préférentiellement en acier perlitique ou ferrito-perlitique au carbone, appelé couramment par l'homme du métier acier au carbone, ou encore en acier inoxydable (par définition, acier comportant au moins 10,5% de chrome).

Le câble est fabriqué conformément à un procédé et en mettant en oeuvre une installation décrits dans les documents WO2016083265 et WO2016083267. Un tel procédé mettant en oeuvre une étape de fractionnement est à distinguer d'un procédé de câblage classique comprenant une unique étape d'assemblage dans lequel les éléments filaires métalliques sont enroulés en hélice, l'étape d'assemblage étant précédée d'une étape de préformation individuelle de chaque élément filaire métalliques afin notamment d'augmenter la valeur de l'allongement structural. De tels procédés et installations sont décrits dans les documents EP0548539, EP1000194, EP0622489, WO2012055677, JP2007092259, WO2007128335, JPH06346386 ou encore EP0143767. Lors de ces procédés, afin d'obtenir l'allongement structural le plus élevé possible, on préforme individuellement les monofilaments métalliques. Toutefois, cette étape de préformation individuelle des monofilaments métalliques, qui nécessite une installation particulière, d'une part, rend le procédé relativement peu productif par rapport à un procédé dépourvu d'étape de préformation individuelle sans pour autant permettre d'atteindre des allongements structuraux élevés et, d'autre part, altère les monofilaments métalliques ainsi préformés en raison des frottements avec les outils de préformation. Une telle altération crée des amorces de ruptures en surface des monofilaments métalliques et est donc néfaste pour l'endurance des monofilaments métalliques, notamment pour leur endurance en compression. L'absence ou la présence de telles marques de préformation est observable au microscope électronique à l'issue du procédé de fabrication, ou bien plus simplement, en connaissant le procédé de fabrication du câble.

En raison du procédé utilisé, chaque élément filaire métallique du câble est dépourvu de marque de préformation. De telles marques de préformation comprennent notamment des méplats. Les marques de préformations comprennent également des fissures s'étendant dans des plans de coupe sensiblement perpendiculaires à l'axe principal selon lequel s'étend chaque élément filaire métallique. De telles fissures s'étendent, dans un plan de coupe sensiblement perpendiculaire à l'axe principal, depuis une surface radialement externe de chaque élément filaire métallique radialement vers l'intérieur de chaque élément filaire métallique. Comme décrits ci-dessus, de telles fissures sont initiées par les outils mécaniques de préformation en raison des efforts en flexion, c'est-à-dire perpendiculairement à l'axe principal de chaque élément filaire métallique, ce qui les rend très néfastes pour l'endurance. A l'inverse, dans le procédé décrit dans WO2016083265 et WO2016083267 dans lequel les éléments filaires métalliques sont préformés collectivement et simultanément sur un noyau transitoire, les efforts de préformations sont exercés en torsion et donc non perpendiculairement à l'axe principal de chaque élément filaire métallique. Les éventuelles fissures créées s'étendent non pas radialement depuis la surface radialement externe de chaque élément filaire métallique radialement vers l'intérieur de chaque élément filaire métallique mais le long de la surface radialement externe de chaque élément filaire métallique ce qui les rend peu néfastes pour l'endurance.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Les caractéristiques optionnelles décrites ci-dessous pourront être combinées les unes avec les autres dans la mesure où de telles combinaisons sont techniquement compatibles.

Avantageusement, 6 GPa ≤ M₁, de préférence 8 GPa ≤ M₁. Ainsi, le câble reprend des efforts relativement importants sans risquer d'atteindre trop rapidement la plage d'allongements correspondant au module M₂ bien plus élevé.

Avantageusement, M₁ ≤ 14 GPa, de préférence M₁ ≤ 12 GPa. Ainsi, on réduit encore davantage le bruit émis par le pneumatique.

Avantageusement, 65 GPa ≤ M₂, de préférence 80 GPa ≤ M₂ et plus préférentiellement 90 GPa ≤ M2. Ainsi, on améliore encore davantage la capacité de frettage du câble.

Avantageusement, M₂ ≤ 150 GPa, de préférence M₂ ≤ 140 GPa et plus préférentiellement M₂ ≤ 130 GPa. Ainsi, on réduit le risque d'endommagement du câble en cas de déformation imposée importante.

Avantageusement, 6 ≤ M₂/M₁, de préférence 8 ≤ M₂/M₁ et plus préférentiellement 10 ≤ M₂/M₁. Ainsi, on favorise encore davantage la réduction du bruit émis par le pneumatique et la capacité de frettage du câble.

Avantageusement, M₂/M₁ ≤ 19, de préférence M₂/M₁ ≤ 17 et plus préférentiellement M₂/M₁ ≤ 15. Ainsi, on évite d'avoir, à module M₁ donné, un module M₂ trop élevé ou à module M₂ module donné, un module M₁ trop faible.

Avantageusement, M₁=20/A₂₀₀ avec A₂₀₀ étant l'allongement, exprimé en %, du câble sous un effort de 200 MPa est tel que 5 GPa ≤ M₁, ≤ 16 GPa.

Avantageusement, 6 GPa ≤ M_{1'}, de préférence 8 GPa ≤ M_{1'}.

Avantageusement, M₁, ≤ 14 GPa, de préférence M₁, ≤ 12 GPa.

Les caractéristiques avantageuses relatives à M₁, décrites ci-dessus permettent de s'assurer que le câble présente un module relativement faible même pour l'ensemble des sollicitations inférieures à 200 MPa. Ainsi, le pneumatique émet un bruit relativement faible sur une plage encore plus grande de sollicitations et donc pour des usages variés.

Encore plus avantageusement, M_{1"}=30/A₃₀₀ avec A₃₀₀ étant l'allongement, exprimé en %, du câble sous un effort de 300 MPa est tel que 5 GPa ≤ M₁ ≤ 16 GPa.

Avantageusement, 6 GPa ≤ M₁, de préférence 8 GPa ≤ M₁.

Avantageusement, M_{1"} ≤ 14 GPa, de préférence M_{1"}≤ 12 GPa.

Les caractéristiques avantageuses relatives à M_{1"} décrites ci-dessus permettent de s'assurer que le câble présente un module relativement faible même pour l'ensemble des sollicitations inférieures à 300 MPa. Ainsi, le pneumatique émet un bruit relativement faible sur une plage très grande de sollicitations et donc pour des usages très variés.

Avantageusement, le câble présente un allongement structural As tel que As ≥ 1 %, de préférence As ≥ 2,5%, plus préférentiellement As ≥ 3% et encore plus préférentiellement 3% ≤ As ≤ 5,5%, l'allongement structural As étant déterminé en appliquant la norme ASTM D2969-04 de 2014 au câble de façon à obtenir une courbe force-allongement, l'allongement structural As étant égal à l'allongement, en %, correspondant à la pente maximale de la courbe force-allongement.

Avantageusement, chaque élément filaire métallique est dépourvu de marques de préformation. En d'autres termes, le câble est obtenu par un procédé dépourvu d'étapes de préformation individuelle de chacun des éléments filaires métalliques.

Comme décrit ci-dessus, le câble selon l'invention est fabriqué conformément à un procédé et en mettant en oeuvre une installation décrits dans les documents WO2016083265 et WO2016083267. Ce procédé comprend une étape d'assemblage par retordage d'un assemblage transitoire comprenant M éléments filaires métalliques durant laquelle les M éléments de renfort métalliques sont préformés collectivement et simultanément sur un noyau transitoire, puis une étape de séparation de l'assemblage transitoire entre le noyau transitoire et le câble selon l'invention durant laquelle on sépare l'assemblage transitoire entre le noyau transitoire et au moins une partie des M éléments filaires métalliques de l'assemblage transitoire pour former le câble selon l'invention. Plus précisément, un tel procédé comprend une étape d'assemblage de M éléments filaires métalliques ensemble en une couche des M éléments filaires métalliques autour d'un noyau transitoire pour former un assemblage transitoire, et une étape de fractionnement de l'assemblage transitoire en au moins des premier et deuxième assemblages de M1 éléments filaires métalliques et M2 éléments filaires métalliques. Au moins l'un des premier et deuxième assemblages forme alors le câble selon l'invention, c'est-à-dire que M1=N et/ou M2=N.

En raison du retour élastique de chaque élément filaire métallique en réponse à l'étape de retordage, le pas de chaque élément filaire métallique de l'assemblage transitoire passe d'un pas transitoire au pas P qui lui est supérieur. L'homme du métier saura déterminer quel pas transitoire appliquer afin d'obtenir le pas P désiré.

De façon analogue, le diamètre d'hélice Dh de chaque élément filaire métallique dans le câble est sensiblement supérieur au diamètre d'hélice transitoire de chaque élément filaire dans l'assemblage transitoire et ce en raison du retour élastique. Le diamètre d'hélice Dh de chaque élément filaire métallique dans le câble est d'autant plus supérieur au diamètre d'hélice transitoire de chaque élément filaire dans l'assemblage transitoire que le taux de retordage est important. L'homme du métier saura déterminer quel diamètre d'hélice transitoire appliquer afin d'obtenir le diamètre d'hélice Dh désiré, et ce en fonction du taux de retordage et de la nature du noyau transitoire. Il en est de même pour le diamètre de voûte Dv.

Avantageusement, dans un premier mode de réalisation, l'étape de fractionnement de l'assemblage transitoire comprend une étape de séparation du noyau transitoire des premier et deuxième assemblages. Dans ce mode de réalisation, le premier assemblage est constitué de M1 éléments filaires métalliques enroulés ensemble et répartis en une seule couche autour de l'axe du premier assemblage. De façon analogue, le deuxième assemblage de ce mode de réalisation est constitué de M2 éléments filaires métalliques enroulés ensemble et répartis en une seule couche autour de l'axe du deuxième assemblage. En d'autres termes, dans ce premier mode de réalisation, le noyau transitoire comprenant au moins un élément filaire, chaque élément filaire du noyau transitoire n'appartient pas aux premier et deuxième assemblages de M1 éléments filaires métalliques et M2 éléments filaires métalliques. On a donc M1+M2=M.

Dans une première variante préférée de ce premier mode de réalisation, durant l'étape de fractionnement, on sépare le premier assemblage d'un ensemble transitoire formé par le deuxième assemblage et le noyau transitoire, puis on sépare le deuxième assemblage et le noyau transitoire l'un de l'autre. Dans une deuxième variante, durant l'étape de fractionnement, on sépare simultanément le noyau transitoire, le premier assemblage et le deuxième assemblage deux à deux les uns des autres.

Avantageusement, le procédé comprend une étape de recyclage du noyau transitoire durant laquelle:
- on récupère le noyau transitoire en aval de l'étape de fractionnement, et
- on introduit le noyau transitoire récupéré précédemment en amont de l'étape d'assemblage.

Dans un mode de réalisation préférentiel, l'étape de recyclage du noyau transitoire peut se faire en continu, c'est-à-dire dans laquelle on ré-introduit, sans étape de stockage intermédiaire du noyau transitoire, le noyau transitoire sortant de l'étape de séparation, dans l'étape d'assemblage. Dans un autre mode de réalisation, l'étape de recyclage du noyau transitoire est discontinue, c'est-à-dire avec une étape de stockage intermédiaire du noyau transitoire.

Plus préférentiellement, on utilise un noyau transitoire textile.

Dans un deuxième mode de réalisation, l'étape de fractionnement de l'assemblage transitoire comprend une étape de fractionnement du noyau transitoire entre au moins les premier et deuxième assemblages. Ainsi, dans ce deuxième mode de réalisation, on obtient deux assemblages d'éléments filaires métalliques comprenant chacun une couche respectivement de P1, P2 éléments filaires métalliques enroulés ensemble en hélice, et pour au moins un des assemblages, une âme centrale comprenant ou constituée d'au moins une partie du noyau transitoire autour de laquelle sont enroulés les éléments filaires métalliques de la couche. En d'autres termes, dans ce deuxième mode de réalisation, le noyau transitoire comprenant K élément(s) filaire(s) métallique(s), au moins un du ou des K élément(s) filaire(s) métallique(s)du noyau transitoire appartient à au moins l'un des premier et deuxième assemblages de M1 éléments filaires métalliques et M2 éléments filaires métalliques.

Avantageusement, durant l'étape de fractionnement, on fractionne au moins une première partie du noyau transitoire avec des premiers éléments filaires métalliques de l'assemblage transitoire de façon à former le premier assemblage.

Ainsi, le premier assemblage comprend une couche de P1 éléments filaires métalliques enroulés ensemble en hélice et une âme centrale comprenant ou constituée par une première partie (K1 élément(s) filaire(s)) des K éléments filaires métalliques du noyau transitoire et autour de laquelle sont enroulés ensemble en hélice les P1 éléments filaires métalliques. On a P1+K1=M1.

Avantageusement, durant l'étape de fractionnement, on fractionne au moins une deuxième partie du noyau transitoire avec des deuxièmes éléments filaires métalliques de l'assemblage transitoire de façon à former le deuxième assemblage.

Ainsi, le deuxième assemblage comprend une couche de P2 éléments filaires métalliques enroulés ensemble en hélice et une âme centrale comprenant ou constituée par une deuxième partie (K2 élément(s) filaire(s)) des K éléments filaires du noyau transitoire et autour de laquelle sont enroulés ensemble en hélice les P2 éléments filaires métalliques. On a P2+K2=M2.

De préférence, on forme simultanément les premier et deuxième assemblages.

De préférence, avant l'étape de fractionnement, les première et deuxième parties du noyau transitoire constituent le noyau transitoire. Ainsi, les première et deuxième parties du noyau transitoire sont complémentaires. On a donc K1+K2=K. Dans une variante, on pourrait avoir K1+K2<K.

Dans une variante, le premier assemblage comprend une couche de P1 éléments filaires métalliques enroulés ensemble en hélice autour d'une âme centrale comprenant ou constituée par le noyau transitoire et le deuxième assemblage comprend une couche de P2=M2 éléments filaires métalliques enroulés ensemble en hélice et dépourvu d'âme centrale.

Dans un mode de réalisation, on réalise l'étape d'assemblage par retordage. Dans un tel cas, les éléments filaires métalliques subissent à la fois une torsion collective et une torsion individuelle autour de leur propre axe, ce qui génère un couple de détorsion sur chacun des éléments filaires métalliques. Dans un autre mode de réalisation, on réalise l'étape d'assemblage par câblage. Dans ce cas, les éléments filaires métalliques ne subissent pas de torsion autour de leur propre axe, en raison d'une rotation synchrone avant et après le point d'assemblage.

De façon préférée, dans le cas d'une étape d'assemblage par retordage, le procédé comprend une étape d'équilibrage de l'assemblage transitoire. Ainsi, l'étape d'équilibrage étant réalisée sur l'assemblage constitué des M éléments filaires métalliques et du noyau transitoire, l'étape d'équilibrage est implicitement réalisée en amont de l'étape de fractionnement.

Avantageusement, le procédé comprend une étape d'équilibrage d'au moins un des premier et deuxième assemblages après l'étape de fractionnement.

Avantageusement, le procédé comprend une étape d'entretien de la rotation des premier et deuxième assemblages autour de leur direction de défilement respective. On réalise cette étape après l'étape de fractionnement et avant l'étape d'équilibrage d'au moins un des premier et deuxième assemblages.

Dans un mode de réalisation, les éléments filaires métalliques définissant une voûte interne du câble de diamètre Dv, chaque élément filaire métallique présentant un diamètre Df et un rayon de courbure d'hélice Rf, Dv, Df et Rf étant exprimés en millimètres, le câble satisfaisant les relations suivantes : 9 ≤ Rf / Df ≤ 30, et 1,30 ≤ Dv / Df ≤ 2,10.

De telles caractéristiques permettent d'obtenir un câble présentant un module M₁ conforme à l'invention permettant de réduire le bruit émis par le pneumatique tout en conservant un diamètre relativement faible.

D'une part, les inventeurs à l'origine de l'invention émettent l'hypothèse que, du fait d'un rayon de courbure Rf suffisamment élevé par rapport au diamètre Df de chaque élément filaire métallique, le câble est suffisamment aéré du fait de l'éloignement relativement important de chaque élément filaire métallique de l'axe longitudinal du câble, éloignement permettant aux éléments filaires métalliques de se rapprocher progressivement les uns des autres et permettant d'obtenir un module M₁ relativement faible. D'autre part, pour un rayon de courbure Rf de chaque élément filaire métallique trop élevé, le câble présenterait une rigidité longitudinale en compression insuffisante pour assurer un rôle de renforcement, par exemple de pneumatiques.

De plus, pour un diamètre Dv de voûte interne trop élevé, le câble présenterait, relativement au diamètre des éléments filaires métalliques, un diamètre trop élevé. A l'inverse, pour un diamètre Dv de voûte interne trop faible, le câble présenterait trop peu d'espace entre les éléments filaires métalliques pour que ces derniers puissent accommoder les sollicitations. Le module M₁ serait alors trop élevé et le pneumatique trop bruyant.

En outre, pour de tels rapports de Rf / Df et Dv / Df, le câble présente une excellente compressibilité longitudinale lui conférant une endurance en compression particulièrement élevée.

Dans des modes de réalisation préférés, 11 ≤ Rf / Df ≤ 19.

Dans des modes de réalisation préférés, 1,30 ≤ Dv / Df ≤ 2,05 et plus préférentiellement 1,30 ≤ Dv / Df ≤ 2,00.

Avantageusement, le rayon de courbure d'hélice Rf est tel que 2 mm ≤ Rf ≤ 7 mm.

Dans un mode de réalisation d'un câble destiné au renforcement d'un pneumatique pour véhicules de tourisme, mais également pour des véhicules deux-roues tels que des motos, et préférentiellement pour véhicules de tourisme, on a 2 mm ≤ Rf ≤ 5 mm et de préférence 3 mm ≤ Rf ≤ 5 mm.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a 4 mm ≤ Rf ≤ 6 mm et de préférence 4 mm ≤ Rf ≤ 5 mm.

Dans un mode de réalisation d'un câble destiné au renforcement d'un pneumatique pour véhicules hors-la-route, par exemple des engins agricoles ou de génie civil, on a 4 mm ≤ Rf ≤ 7 mm et de préférence 4,5 mm ≤ Rf ≤ 6,5 mm.

Avantageusement, le diamètre d'hélice Dh de chaque élément filaire métallique est tel que 0,40 mm ≤ Dh ≤ 1,50 mm.

Dans un mode de réalisation d'un câble destiné au renforcement d'un pneumatique pour véhicules de tourisme, mais également pour des véhicules deux-roues tels que des motos, et préférentiellement pour véhicules de tourisme, on a 0,50 mm ≤ Dh ≤ 1,00 mm et de préférence 0,70 mm ≤ Dh ≤ 1,00 mm.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a 0,85 mm ≤ Dh ≤ 1,20 mm et de préférence 0,90 mm ≤ Dh ≤ 1,15 mm.

Dans un mode de réalisation d'un câble destiné au renforcement d'un pneumatique pour véhicules hors-la-route, par exemple des engins agricoles ou de génie civil, on a 0,95 mm ≤ Dh ≤ 1,40 mm et de préférence 1,00 mm ≤ Dh ≤ 1,35 mm.

Avantageusement, Dv est tel que Dv ≥ 0,46 mm.

Dans un mode de réalisation d'un câble destiné au renforcement d'un pneumatique pour véhicules de tourisme, mais également pour des véhicules deux-roues tels que des motos, et préférentiellement pour véhicules de tourisme, on a 0,46 mm ≤ Dv ≤ 0,70 mm.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a 0,50 mm ≤ Dv ≤ 0,80 mm.

Dans un mode de réalisation d'un câble destiné au renforcement d'un pneumatique pour véhicules hors-la-route, par exemple des engins agricoles ou de génie civil, on a 0,55 mm ≤ Dv ≤ 1,00 mm.

Dans des modes de réalisation préférés, chaque élément filaire métallique est enroulé à un pas P tel que 3 mm ≤ P ≤ 15 mm et de préférence 3 mm ≤ P ≤ 9 mm.

Dans un mode de réalisation d'un câble destiné au renforcement d'un pneumatique pour véhicules de tourisme, mais également pour des véhicules deux-roues tels que des motos, et préférentiellement pour véhicules de tourisme, on a 3 mm ≤ P ≤ 9 mm.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a 7 mm ≤ P ≤ 15 mm.

Dans un mode de réalisation d'un câble destiné au renforcement d'un pneumatique pour véhicules hors-la-route, par exemple des engins agricoles ou de génie civil, on a 9 mm ≤ P ≤ 15 mm.

Dans un mode de réalisation avantageux, tous les éléments filaires métalliques présentent le même diamètre Df.

Avantageusement, Df est tel que 0,10 mm ≤ Df ≤ 0,50 mm.

Dans un mode de réalisation d'un câble destiné au renforcement d'un pneumatique pour véhicules de tourisme, mais également pour des véhicules deux-roues tels que des motos, et préférentiellement pour véhicules de tourisme, on a 0,20 mm ≤ Df ≤ 0,35 mm et de préférence 0,25 mm ≤ Df ≤ 0,33 mm.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a 0,22 mm ≤ Df ≤ 0,40 mm et de préférence 0,25 mm ≤ Df ≤ 0,38 mm.

Dans un mode de réalisation d'un câble destiné au renforcement d'un pneumatique pour véhicules hors-la-route, par exemple des engins agricoles ou de génie civil, on a 0,32 mm ≤ Df ≤ 0,50 mm et de préférence 0,35 mm ≤ Df ≤ 0,50 mm.

Avantageusement, le câble présente un diamètre D tel que D ≤ 2,00 mm.

Le diamètre ou diamètre apparent, noté D, est mesuré au moyen d'un comparateur d'épaisseur dont le diamètre des touches est au moins égal à 1,5 fois le pas P d'enroulage des éléments filaires (on peut citer par exemple le modèle JD50 de la marque KAEFER permettant d'atteindre une précision de 1/100 de millimètre, équipé de touche type a, et ayant une pression de contact proche de 0,6N). Le protocole de mesure consiste en trois répétitions d'une série de trois mesures (effectuées perpendiculairement à l'axe du câble et sous tension nulle) dont la seconde et la troisième de ces mesures sont réalisées selon une direction décalée angulairement de la précédente d'un tiers de tour, par la rotation de la direction de mesure autour de l'axe du câble.

Dans un mode de réalisation d'un câble destiné au renforcement d'un pneumatique pour véhicules de tourisme, mais également pour des véhicules deux-roues tels que des motos, et préférentiellement pour véhicules de tourisme, on a 0,75 mm ≤ D ≤ 1,40 mm et de préférence 1,00 mm ≤ D ≤ 1,30 mm.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a 1,15 mm ≤ D ≤ 1,55 mm.

Dans un mode de réalisation d'un câble destiné au renforcement d'un pneumatique pour véhicules hors-la-route, par exemple des engins agricoles ou de génie civil, on a 1,5 mm ≤ D ≤ 2 mm.

Dans un mode de réalisation, chaque élément filaire métallique comprend un unique monofilament métallique. Ici, chaque élément filaire métallique est avantageusement constitué d'un monofilament métallique. Dans une variante de ce mode de réalisation, le monofilament métallique est directement revêtu d'une couche d'un revêtement métallique comprenant du cuivre, du zinc, de l'étain, du cobalt ou un alliage de ces métaux, par exemple le laiton ou le bronze. Dans cette variante, chaque élément filaire métallique est alors constitué du monofilament métallique, par exemple en acier, formant une âme, directement revêtu de la couche de revêtement métallique.

Dans ce mode de réalisation, chaque monofilament élémentaire métallique est, comme décrit-ci-dessus, de préférence en acier, et présente une résistance mécanique allant de 1000 MPa à 5000 MPa. De telles résistances mécaniques correspondent aux grades d'acier couramment rencontrés dans le domaine du pneumatique, à savoir, les grades NT (Normal Tensile), HT (High Tensile), ST (Super Tensile), SHT (Super High Tensile), UT (Ultra Tensile), UHT (Ultra High Tensile) et MT (Mega Tensile), l'utilisation de résistances mécaniques élevées permettant éventuellement un renforcement amélioré de la matrice dans laquelle le câble est destiné à être noyé et un allègement de la matrice ainsi renforcée.

Avantageusement, la couche étant constituée de N éléments filaire métalliques enroulés en hélice, N va de 3 à 6.

Avantageusement, le rapport K du pas P sur le diamètre Df de chaque élément filaire métallique, P et Df étant exprimés en millimètres, est tel que 19 ≤ K ≤ 44.

Avantageusement, l'angle d'hélice α de chaque élément filaire métallique est tel que 13° ≤ α ≤ 21°.

Pour des valeurs trop élevées du rapport K ou pour des valeurs d'angle d'hélice trop faibles, la compressibilité longitudinale du câble est réduite et le pneumatique trop bruyant. Pour des valeurs trop faibles du rapport K ou pour des valeurs d'angle d'hélice trop élevées, la rigidité longitudinale du câble et donc sa capacité de renforcement sont réduite.

### CABLE REMPLI SELON L'INVENTION

L'invention a également pour objet un câble rempli comprenant une unique couche d'éléments filaires métalliques enroulés en hélice, chaque élément filaire métallique de la couche décrivant, lorsque le câble s'étend selon une direction sensiblement rectiligne, une trajectoire en forme d'hélice autour d'un axe principal sensiblement parallèle à la direction sensiblement rectiligne, de sorte que, dans un plan de coupe sensiblement perpendiculaire à l'axe principal, la distance entre le centre de chaque élément filaire métallique de la couche et l'axe principal est sensiblement constante et égale pour tous les éléments filaires métalliques de la couche, les éléments filaires métalliques définissant une voûte interne du câble, le câble rempli comprenant un matériau de remplissage de la voûte interne à base d'une composition élastomérique et située dans la voûte interne du câble rempli, câble rempli dans lequel :
- 5 GPa ≤ M_{c1} ≤ 30 GPa, et
- 40 GPa ≤ M_{c2} ≤ 150 GPa, et
- 3 ≤ M_{c2}/M_{c1,}
M_{c1} et M_{c2} étant exprimés en GPa avec :
- M_{c1}=10 / A_{c100} avec :
   - A_{c100} étant l'allongement, exprimé en %, du câble rempli sous un effort de 100 MPa, et
- M_{c2}=[(F_{c40}-F_{c30}) / (A_{c40}-A_{c30})] / S avec :
   - S étant la section, exprimée en mm², telle que S=MI /Mv avec :
      ▪ MI étant la masse linéique des éléments filaires métalliques, exprimée en g par m de câble,
      ▪ Mv étant la masse volumique des éléments filaires métalliques, exprimée en g par cm³,
   - F_{c40} étant la force, exprimée en daN, égale à 40 % de la force théorique maximale F_{ct} du câble dépourvu du matériau de remplissage,
   - F_{c30} étant la force, exprimée en daN, égale à 30 % de la force théorique maximale F_{ct} du câble dépourvu du matériau de remplissage,
   - A_{c40} étant l'allongement du câble rempli, exprimé en %, à 40% de la force théorique maximale F_{ct} du câble dépourvu du matériau de remplissage,
   - A_{c30} étant l'allongement du câble rempli, exprimé en %, à 30% de la force théorique maximale F_{ct} du câble dépourvu du matériau de remplissage,
   avec F_{ct}=MI x Rm / Mv, exprimée en daN, avec Rm étant la résistance mécanique à rupture moyenne, exprimée en MPa, des éléments filaires métalliques constituant la couche unique.

Le câble rempli selon l'invention est obtenu par noyage dans une matrice élastomérique d'un câble dépourvu de matériau de remplissage tel que défini précédemment. La matrice élastomérique est à base d'une composition élastomérique. Le matériau de remplissage est à base d'une composition élastomérique, ici la même composition que celle de la matrice dans laquelle est noyé le câble rempli.

La voûte du câble dépourvu de matériau de remplissage ou du câble rempli selon l'invention est délimitée par les éléments filaires métalliques et correspond au volume délimité par un cercle théorique, d'une part, radialement intérieur à chaque élément filaire métallique et, d'autre part, tangent à chaque élément filaire métallique.

En raison de la présence du matériau de remplissage, le câble rempli présente un module M_{c1} plus élevé que le module M₁ du câble dépourvu du matériau de remplissage. En effet, pour des efforts relativement faibles, le matériau de remplissage empêche le rapprochement radial des éléments filaires métallique de l'unique couche, générant alors une augmentation du module M_{c1} par rapport au module M₁ d'un câble dépourvu du matériau de remplissage et dans lequel rien n'empêche le rapprochement radial des éléments filaires métallique de l'unique couche.

En raison de la présence du matériau de remplissage, le câble rempli présente un module M_{c2} plus faible que le module M₂ du câble dépourvu du matériau de remplissage. En effet, pour des efforts relativement importants, le matériau de remplissage ayant figé la position des éléments filaires les uns par rapport aux autres, les éléments filaires du câble rempli sont sollicités alors qu'ils présentent un angle d'hélice plus important que les éléments filaires du câble dépourvu du matériau de remplissage. Cette valeur d'angle d'hélice plus importante des éléments filaires du câble rempli entraine alors une baisse du module M_{c2} par rapport au module M₂ du câble dépourvu du matériau de remplissage.

Par matrice élastomérique, on entend une matrice à comportement élastomérique issue de la réticulation d'une composition élastomérique. La matrice élastomérique est ainsi à base de la composition élastomérique. Tout comme la matrice élastomérique, le matériau de remplissage est à base d'une composition élastomérique, ici la même composition que celle de la matrice dans laquelle est noyé le câble.

Par l'expression "à base de", il faut entendre que la composition comporte le mélange et/ou le produit de réaction in situ des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par composition élastomérique, on entend que la composition comprend au moins un élastomère et au moins un autre composant. De préférence, la composition comprenant au moins un élastomère et au moins un autre composant comprend un élastomère, un système de réticulation et une charge. Les compositions utilisées pour ces nappes sont des compositions conventionnelles pour calandrage d'éléments filaires de renfort, comprennent un élastomère diénique, par exemple du caoutchouc naturel, une charge renforçante, par exemple du noir de carbone et/ou de la silice, un système de réticulation, par exemple un système de vulcanisation, de préférence comprenant du soufre, de l'acide stéarique et de l'oxyde de zinc, et éventuellement un accélérateur et/ou retardateur de vulcanisation et/ou divers additifs. L'adhésion entre les éléments filaires de renfort et la matrice dans laquelle ils sont noyés est assurée par exemple par une composition adhésive usuelle, par exemple une colle du type RFL ou colle équivalente.

Comme pour le câble dépourvu de matériau de remplissage, M₁ est représentatif du module du câble pour des efforts subis par le câble lors d'un roulage dans des conditions normales et donc représentatives des conditions dans lesquelles est émis le bruit dit « coast-by » et M₂ est représentatif du module du câble pour des efforts subis par le câble lors des lorsqu'on exerce de fortes sollicitations sur le pneumatique.

Les valeurs de A_{c30} et A_{c40} sont obtenues en déterminant, sur une courbe force-allongement obtenue en tractionnant un câble rempli dans les conditions de la norme ASTM D2969-04 de 2014, respectivement les valeurs à 30% et 40% de la force théorique maximale F_{ct} du câble dépourvu du matériau de remplissage. Au regard de ce qui précède, F_{ct} est égale à Fₜ car Fₜ. De façon analogue à la valeur A₁₀₀, la valeur de A_{c100} est obtenue en déterminant, sur une courbe force-allongement obtenue en tractionnant un câble rempli dans les conditions de la norme ASTM D2969-04 de 2014, l'allongement du câble rempli sous un effort de 100 MPa.

La résistance mécanique à rupture moyenne Rm des éléments filaires métalliques du câble rempli est identique à la résistance mécanique à rupture moyenne Rm des éléments filaires métalliques du câble dépourvu de matériau de remplissage. Les masses linéique MI et volumique Mv du câble rempli sont, par définition, identiques respectivement aux masses linéique MI et volumique Mv du câble dépourvu de matériau de remplissage.

Les valeurs des caractéristiques M_{c1}, M_{c2}, M_{c2}/M_{c1}, M_{c1'}, M_{c1"}, Fₙₜ, MI, Mv, Rm ainsi que des autres caractéristiques décrites ci-dessous sont mesurées sur ou déterminées à partir de câbles extraits d'une matrice élastomérique, par exemple d'un pneumatique et dans lesquels on conserve le matériau de remplissage.

Le câble rempli selon l'invention est fabriqué comme le câble selon l'invention dépourvu de matériau de remplissage conformément à un procédé et en mettant en oeuvre une installation décrits dans les documents WO2016083265 et WO2016083267.

Les caractéristiques optionnelles décrites ci-dessous pourront être combinées les unes avec les autres dans la mesure où de telles combinaisons sont techniquement compatibles.

Avantageusement, 7 GPa ≤ M_{c1}, de préférence 10 GPa ≤ M_{c1}. Ainsi, le câble rempli reprend des efforts relativement importants sans risquer d'atteindre trop rapidement la plage d'allongements correspondant au module M_{c2} bien plus élevé.

Avantageusement, M_{c1} ≤ 25 GPa, de préférence M_{c1} ≤ 20 GPa. Ainsi, on réduit encore davantage le bruit émis par le pneumatique.

Avantageusement, 60 GPa ≤ M_{c2}, de préférence 70 GPa ≤ M_{c2} et plus préférentiellement 80 GPa ≤ M_{c2}. Ainsi, on améliore encore davantage la capacité de frettage du câble.

Avantageusement, M_{c2} ≤ 140 GPa, de préférence M_{c2} ≤ 130 GPa et plus préférentiellement M_{c2} ≤ 120 GPa. Ainsi, on réduit le risque d'endommagement du câble rempli en cas de déformation imposée importante.

Avantageusement, 4 ≤ M_{c2}/M_{c1}, de préférence 5 ≤ M_{c2}/M_{c1}, et plus préférentiellement 6 ≤ M_{c2}/M_{c1}. Ainsi, on favorise encore davantage la réduction du bruit émis par le pneumatique et la capacité de frettage du câble rempli.

Avantageusement, M_{c2}/M_{c1} ≤ 12, de préférence M_{c2}/M_{c1} ≤ 11 et plus préférentiellement M_{c2}/M_{c1} ≤ 10. Ainsi, on évite d'avoir, à module M_{c1} donné, un module M_{c2} trop élevé ou à module M_{c2} module donné, un module M_{c1} trop faible.

Avantageusement, M_{c1'}=20/A_{c200} avec A_{c200} étant l'allongement, exprimé en %, du câble rempli sous un effort de 200 MPa est tel que 5 GPa ≤ M_{c1'} ≤ 30 GPa.

Avantageusement, 7 GPa ≤ M_{c1'}, de préférence 10 GPa ≤ M_{c1'},

Avantageusement, M_{c1'} ≤ 25 GPa, de préférence M_{c1'} ≤ 20 GPa.

Les caractéristiques avantageuses relatives à M_{c1'} décrites ci-dessus permettent de s'assurer que le câble rempli présente un module relativement faible même pour l'ensemble des sollicitations inférieures à 200 MPa. Ainsi, le pneumatique émet un bruit relativement faible sur une plage encore plus grande de sollicitations et donc pour des usages variés.

Avantageusement, M_{c1"}=30/A_{c300} avec A_{c300} étant l'allongement, exprimé en %, du câble rempli sous un effort de 300 MPa est tel que 5 GPa ≤ M_{c1"} ≤ 30 GPa.

Avantageusement, 7 GPa ≤ M_{c1"}, de préférence 10 GPa ≤ M_{c1"}.

Avantageusement, M_{c1"} ≤ 25 GPa, de préférence M_{c1"} ≤ 20 GPa.

Les caractéristiques avantageuses relatives à M_{c1"} décrites ci-dessus permettent de s'assurer que le câble rempli présente un module relativement faible même pour l'ensemble des sollicitations inférieures à 300 MPa. Ainsi, le pneumatique émet un bruit relativement faible sur une plage très grande de sollicitations et donc pour des usages très variés.

Avantageusement, le câble rempli présente un allongement structural Asc tel que Asc ≥ 1%, de préférence Asc ≥ 1,5%, plus préférentiellement Asc ≥ 2% et encore plus préférentiellement 2% ≤ Asc ≤ 4%, l'allongement structural Asc étant déterminé en appliquant la norme ASTM D2969-04 de 2014 au câble rempli de façon à obtenir une courbe force-allongement, l'allongement structural Asc étant égal à l'allongement, en %, correspondant à la pente maximale de la courbe force-allongement.

### AUTRES OBJETS SELON L'INVENTION

L'invention a également pour objet l'utilisation d'un câble dépourvu de matériau de remplissage ou d'un câble rempli tels que définis ci-dessus pour le renforcement d'articles ou produits semi-finis comprenant une matrice élastomérique dans laquelle est noyé le câble.

De tels articles ou produits semi-finis sont des tuyaux, des courroies, des bandes transporteuses, des chenilles, des pneumatiques pour véhicules, tant à l'état cru (c'est-à-dire avant réticulation ou vulcanisation) qu'à l'état cuit (après réticulation ou vulcanisation). De tels articles ou produits semi-finis prennent, dans des modes préférés, la forme d'une nappe.

L'invention a également pour objet un article ou produit semi-fini comprenant une matrice élastomérique dans laquelle est noyé au moins un câble rempli tel que défini ci-dessus.

Un autre objet de l'invention est l'utilisation d'un câble dépourvu de matériau de remplissage ou d'un câble rempli tels que définis ci-dessus pour le renforcement d'un pneumatique comprenant le câble.

Au sein de l'article ou produit semi-fini selon l'invention, par exemple au sein des pneumatiques selon l'invention, le câble rempli est noyé dans une matrice élastomérique. Au sein de l'article ou produit semi-fini selon l'invention, par exemple au sein des pneumatiques selon l'invention, le câble rempli comprend un matériau de remplissage de la voûte interne à base d'une composition élastomérique et située dans la voûte interne du câble rempli. Le matériau de remplissage est ici à base de la même composition élastomérique que celle à base de la matrice élastomérique dans laquelle est noyé le câble.

### PNEUMATIQUES SELON L'INVENTION

Un autre objet de l'invention est un pneumatique comprenant un sommet comprenant une bande de roulement et une armature de sommet, deux flancs, deux bourrelets, chaque flanc reliant chaque bourrelet au sommet, l'armature de sommet s'étendant dans le sommet selon une direction circonférentielle du pneumatique, le pneumatique comprenant une armature de carcasse ancrée dans chacun des bourrelets et s'étendant dans les flancs et dans le sommet, l'armature de sommet étant radialement intercalée entre l'armature de carcasse et la bande de roulement,
l'armature de sommet comprenant une armature de frettage comprenant au moins une nappe de frettage comprenant au moins un élément filaire de renfort de frettage noyé dans une matrice élastomérique à base d'une composition élastomérique et une armature de travail comprenant au moins une nappe de travail comprenant des éléments filaires de renfort de travail,
l'armature de carcasse comprenant au moins une nappe de carcasse comprenant des éléments filaires de renfort de carcasse,
au moins les éléments filaires de renfort de travail et les éléments filaires de renfort de carcasse étant agencés de façon à définir, en projection sur le plan circonférentiel équatorial selon la direction radiale du pneumatique, un maillage triangulaire, le ou chaque élément filaire de renfort de frettage est constitué par un câble rempli comprenant une unique couche d'éléments filaires métalliques enroulés en hélice, les éléments filaires métalliques définissant une voûte interne du câble rempli, le câble rempli comprenant un matériau de remplissage de la voûte interne à base de la composition élastomérique et située dans la voûte interne du câble rempli, le câble rempli étant, après extraction du pneumatique, tel que défini ci-dessus.

Le pneumatique défini ici utilise les caractéristiques du câble rempli défini ci-dessus afin de réduire le bruit émis et de présenter une armature de frettage performante. L'homme du métier choisira les caractéristiques dimensionnelles du câble et la densité de câbles dans la nappe de frettage en fonction de l'utilisation souhaitée du pneumatique. Ainsi, les pneumatiques de l'invention peuvent être destinés à des véhicules à moteur de tourisme (comprenant notamment les véhicules 4x4 et les "SUV" (Sport Utility Vehicles)), mais également à des véhicules deux-roues tels que motos, ou à des véhicules industriels choisis parmi camionnettes, "Poids-lourd" - i.e., métro, bus, engins de transport routier (camions, tracteurs, remorques), véhicules hors-la-route -, engins agricoles ou de Génie civil, avions, autres véhicules de transport ou de manutention.

Les caractéristiques avantageuses et optionnelles décrites ci-avant en référence au câble rempli s'appliquent également au pneumatique défini ci-dessus.

Encore un autre objet de l'invention est un pneumatique comprenant un sommet comprenant une bande de roulement et une armature de sommet, deux flancs, deux bourrelets, chaque flanc reliant chaque bourrelet au sommet, l'armature de sommet s'étendant dans le sommet selon une direction circonférentielle du pneumatique, le pneumatique comprenant une armature de carcasse ancrée dans chacun des bourrelets et s'étendant dans les flancs et dans le sommet, l'armature de sommet étant radialement intercalée entre l'armature de carcasse et la bande de roulement, l'armature de sommet comprenant une armature de frettage comprenant au moins une nappe de frettage comprenant au moins un élément filaire de renfort de frettage noyé dans une matrice élastomérique à base d'une composition élastomérique et une armature de travail comprenant au moins une nappe de travail comprenant des éléments filaires de renfort de travail, l'armature de carcasse comprenant au moins une nappe de carcasse comprenant des éléments filaires de renfort de carcasse, au moins les éléments filaires de renfort de travail et les éléments filaires de renfort de carcasse étant agencés de façon à définir, en projection sur le plan circonférentiel équatorial selon la direction radiale du pneumatique, un maillage triangulaire, le ou chaque élément filaire de renfort de frettage est constitué par un câble rempli comprenant une unique couche d'éléments filaires métalliques enroulés en hélice, chaque élément filaire métallique de la couche décrivant, lorsque le câble s'étend selon une direction sensiblement rectiligne, une trajectoire en forme d'hélice autour d'un axe principal sensiblement parallèle à la direction sensiblement rectiligne, de sorte que, dans un plan de coupe sensiblement perpendiculaire à l'axe principal, la distance entre le centre de chaque élément filaire métallique de la couche et l'axe principal est sensiblement constante et égale pour tous les éléments filaires métalliques de la couche, les éléments filaires métalliques définissant une voûte interne du câble rempli, le câble rempli comprenant un matériau de remplissage de la voûte interne à base de la composition élastomérique et située dans la voûte interne du câble rempli, la nappe de frettage présentant, après extraction du pneumatique, les caractéristiques suivantes :
- 100 daN.mm⁻¹ ≤ Mₙ₁ ≤ 600 daN.mm⁻¹, et
- 1000 daN.mm⁻¹ ≤ Mₙ₂ ≤ 4500 daN.mm⁻¹, et
- 3 ≤ Mₙ₂/Mₙ₁,
Mₙ₁ et Mₙ₂ étant exprimés en daN.mm⁻¹ avec
- Mₙ₁=250 / Aₙ₂₅₀ avec :
   - Aₙ₂₅₀ étant l'allongement équivalent, exprimé en %, de la nappe de frettage sous un effort de 250 daN.dm⁻¹, Aₙ₂₅₀ étant obtenu en divisant l'effort de 250 daN.dm⁻¹ par la densité d'éléments filaires de renfort de frettage par décimètre de nappe de frettage de façon à obtenir un effort unitaire, puis, en déterminant sur une courbe force-allongement obtenue en tractionnant le câble rempli dans les conditions de la norme ASTM D2969-04 de 2014, l'allongement du câble rempli sous cet effort unitaire, et
- Mₙ₂=[(Fₙ₄₀-Fₙ₃₀) / (Aₙ₄₀-Aₙ₃₀)] avec :
   - Fₙ₄₀ étant la force, exprimée en daN.dm⁻¹, égale à 40 % de la force théorique maximale Fₙₜ de la nappe de frettage,
   - Fₙ₃₀ étant la force, exprimée en daN.dm⁻¹, égale à 30 % de la force théorique maximale Fₙₜ de la nappe de frettage,
   - Aₙ₄₀ étant l'allongement équivalent de la nappe de frettage, exprimé en %, à 40% de la force théorique maximale Fₙₜ de la nappe de frettage, Aₙ₄₀ étant obtenu en divisant 40% de la force théorique maximale Fₙₜ de la nappe de frettage par la densité d d'éléments filaires de renfort de frettage par décimètre de nappe de frettage de façon à obtenir un effort unitaire à 40%, puis en déterminant sur une courbe force-allongement obtenue en tractionnant le câble rempli dans les conditions de la norme ASTM D2969-04 de 2014, l'allongement du câble rempli sous cet effort unitaire,
   - Aₙ₃₀ étant l'allongement équivalent de la nappe de frettage, exprimé en %, à 30% de la force théorique maximale Fₙₜ de la nappe de frettage, Aₙ₃₀ étant obtenu en divisant 30% de la force théorique maximale Fₙₜ de la nappe de frettage par la densité d d'éléments filaires de renfort de frettage par décimètre de nappe de frettage de façon à obtenir un effort unitaire à 30%, puis en déterminant sur une courbe force-allongement obtenue en tractionnant le câble rempli dans les conditions de la norme ASTM D2969-04 de 2014, l'allongement du câble rempli sous cet effort unitaire,
      avec Fₙₜ= MI × Rm × d / Mv, exprimée en daN.dm⁻¹, avec :
      ▪ MI étant la masse linéique des éléments filaires métalliques, exprimée en g par m de câble,
      ▪ Mv étant la masse volumique des éléments filaires métalliques, exprimée en g par cm³,
      ▪ Rm étant la résistance mécanique à rupture moyenne, exprimée en MPa, des éléments filaires métalliques constituant la couche unique, et
      ▪ d étant la densité du ou des éléments filaires de renfort de frettage dans la nappe de frettage, exprimée en nombre par dm de nappe de frettage.

Le pneumatique défini ici présente des caractéristiques compatibles avec des véhicules à moteur de tourisme (comprenant notamment les véhicules 4x4 et les "SUV" (Sport Utility Vehicles)).

D'une façon analogue au câble dépourvu de matériau de remplissage ou au câble rempli, le pneumatique selon l'invention émet un bruit relativement réduit en raison d'une valeur de Mₙ₁ allant de 100 daN.mm⁻¹ à 600 daN.mm⁻¹. Mₙ₁ est représentatif du module de la nappe de frettage pour des efforts subis par la nappe lors d'un roulage dans des conditions normales et donc représentatives des conditions dans lequel est émis le bruit dit « coast-by ».

D'une façon analogue au câble dépourvu de matériau de remplissage ou au câble rempli, le pneumatique selon l'invention présente une armature de frettage performante en raison d'une valeur de Mₙ₂ allant de 1000 daN.mm⁻¹ à 4500 daN.mm⁻¹. Mₙ₂ est représentatif du module de la nappe de frettage pour des efforts subis par la nappe de frettage lors des lorsqu'on exerce de fortes sollicitations sur le pneumatique.

Enfin, le rapport Mₙ₂/Mₙ₁ assure que l'on obtient, à la fois, un bruit émis le plus bas possible et une armature de frettage performante et que l'on ne sacrifie pas une performance par rapport à une autre. L'allongement équivalent Aₙ₂₅₀ est déterminé en rapportant l'effort de 250 daN.dm⁻¹ à un effort unitaire subit par chaque élément filaire de renfort de frettage de la nappe de frettage. Pour cela, on divise l'effort de 250 daN.dm⁻¹ par la densité d'éléments filaires de renfort de frettage par décimètre de nappe de frettage. On obtient alors un effort unitaire. Puis, on détermine sur une courbe force-allongement obtenue en tractionnant un câble du pneumatique dans les conditions de la norme ASTM D2969-04 de 2014, l'allongement du câble du pneumatique sous cet effort unitaire. On obtient alors l'allongement équivalent Aₙ₂₅₀.

Chaque allongement équivalent Aₙ₄₀ et Aₙ₃₀ est déterminé d'une façon analogue à l'allongement Aₙ₂₅₀ en rapportant l'effort à 30% ou 40% de la force théorique maximale Fₙₜ de la nappe de frettage à un effort unitaire subit par chaque élément filaire de renfort de frettage de la nappe. Pour cela, on divise 30% ou 40% de la force théorique maximale Fₙₜ de la nappe de frettage par la densité d d'éléments filaires de renfort de frettage par décimètre de nappe de frettage. On obtient alors un effort unitaire à 30% ou 40%. Puis, on détermine sur une courbe force-allongement obtenue en tractionnant un câble du pneumatique dans les conditions de la norme ASTM D2969-04 de 2014, l'allongement du câble du pneumatique sous cet effort unitaire. On obtient alors l'allongement équivalent Aₙ₃₀ ou Aₙ₄₀.

La résistance mécanique à rupture moyenne Rm des éléments filaires métalliques du câble du pneumatique est identique à la résistance mécanique à rupture moyenne Rm des éléments filaires métalliques du câble dépourvu de matériau de remplissage ou du câble rempli. Les masses linéique MI et volumique Mv du câble du pneumatique sont, par définition, identiques respectivement aux masses linéique MI et volumique Mv du câble dépourvu de matériau de remplissage ou du câble rempli.

La densité d d'éléments filaires de renfort dans une nappe est le nombre d'éléments filaires de renfort présents dans la nappe selon une direction perpendiculaire à la direction selon laquelle les éléments filaires de renfort s'étendent dans la nappe. La densité d peut également être déterminée à partir du pas de pose p exprimée en mm, le pas de pose étant égal à la distance axe à axe entre deux éléments filaires de renfort consécutifs selon la direction perpendiculaire à la direction selon laquelle les éléments de renfort s'étendent dans la nappe. La relation entre d et p est d=100/p.

Les valeurs des caractéristiques Mₙ₁, Mₙ₂, Mₙ₂/Mₙ₁, M_{n1'}, M_{n1"}, Fₙₜ, MI, Mv, Rm, d ainsi que des autres caractéristiques décrites ci-dessous sont mesurées sur ou déterminées à partir de nappes et de câbles extraits d'un pneumatique.

Par pneumatique, on entend un bandage destiné à former une cavité en coopérant avec un élément support, par exemple une jante, cette cavité étant apte à être pressurisée à une pression supérieure à la pression atmosphérique. Un pneumatique selon l'invention présente une structure de forme sensiblement toroïdale.

Par coupe radiale ou section radiale on entend ici une coupe ou une section selon un plan qui comporte l'axe de rotation du pneumatique.

Par direction axiale, on entend la direction sensiblement parallèle à l'axe de rotation du pneumatique.

Par direction circonférentielle, on entend la direction qui est sensiblement perpendiculaire à la fois à la direction axiale et à un rayon du pneumatique (en d'autres termes, tangente à un cercle dont le centre est sur l'axe de rotation du pneumatique).

Par direction radiale, on entend la direction selon un rayon du pneumatique, c'est-à-dire une direction quelconque intersectant l'axe de rotation du pneumatique et sensiblement perpendiculairement à cet axe.

Le plan médian (noté M) est le plan perpendiculaire à l'axe de rotation du pneumatique qui est situé à mi-distance des deux bourrelets et passe par le milieu de l'armature de sommet.

Le plan circonférentiel équatorial (noté E) du pneumatique est le plan théorique passant par l'équateur du pneumatique, perpendiculaire au plan médian et à la direction radiale. L'équateur du pneumatique est, dans un plan de coupe circonférentielle (plan perpendiculaire à la direction circonférentielle et parallèle aux directions radiale et axiales), l'axe parallèle à l'axe de rotation du pneumatique et situé à équidistance entre le point radialement le plus externe de la bande de roulement destiné à être au contact avec le sol et le point radialement le plus interne du pneumatique destiné à être en contact avec un support, par exemple une jante, la distance entre ces deux points étant égale à H.

Par orientation d'un angle, on entend le sens, horaire ou anti-horaire, dans lequel il faut tourner à partir d'une droite de référence, ici la direction circonférentielle du pneumatique, définissant l'angle pour atteindre l'autre droite définissant l'angle.

Le module sécant en traction d'une nappe pour une force égale à 15% de la force à rupture est notée MA₁₅ est exprimé en daN/mm. On calcule le module MA₁₅ à partir d'une courbe force-allongement obtenue en appliquant la norme ASTM D2969-04 de 2014 à un câble de la nappe. On calcule le module sécant en traction du câble en déterminant la pente de la droite tracée entre les points (0,0) et le point de la courbe présentant une ordonnée égale à 15% de la force à rupture. On détermine le module MA₁₅ en multipliant le module sécant en traction du câble par la densité d de câbles par mm de nappe, cette densité étant telle que définie précédemment.

La force à rupture d'un câble est mesurée selon la norme ASTM D2969-04 de 2014. On calcule la force à rupture d'une nappe à partir d'une courbe force-allongement obtenue en appliquant la norme ASTM D2969-04 de 2014 à un câble de la nappe. On détermine la force à rupture de la nappe en multipliant la force à rupture du câble par la densité d de câbles par unité de largeur de la nappe, cette densité étant telle que définie précédemment.

Les caractéristiques optionnelles décrites ci-dessous pourront être combinées les unes avec les autres dans la mesure où de telles combinaisons sont techniquement compatibles.

Avantageusement, 125 daN.mm⁻¹ ≤ Mₙ₁, de préférence 150 daN.mm⁻¹ ≤ Mₙ₁. Ainsi, la nappe de frettage reprend des efforts relativement importants sans risquer d'atteindre trop rapidement la plage d'allongements correspondant au module Mₙ₂ bien plus élevé.

Avantageusement, Mₙ₁ ≤ 500 daN.mm⁻¹, de préférence Mₙ₁ ≤ 400 daN.mm⁻¹. Ainsi, on réduit encore davantage le bruit émis par le pneumatique.

Avantageusement, 1500 daN.mm⁻¹ ≤ Mₙ₂, de préférence 1750 daN.mm⁻¹ ≤ Mₙ₂ et plus préférentiellement 2000 daN.mm⁻¹ ≤ Mₙ₂. Ainsi, on améliore encore davantage la capacité de frettage du câble.

Avantageusement, Mₙ₂ ≤ 4000 daN.mm⁻¹, de préférence Mₙ₂ ≤ 3800 daN.mm⁻¹ et Mₙ₂ ≤ 3200 daN.mm⁻¹. Ainsi, on réduit le risque d'endommagement de la nappe de frettage en cas de déformation imposée importante.

Avantageusement, 4 ≤ Mₙ₂/Mₙ₁, de préférence 5 ≤ Mₙ₂/Mₙ₁ et plus préférentiellement 6 ≤ Mₙ₂/Mₙ₁. Ainsi, on favorise encore davantage la réduction du bruit émis par le pneumatique et la capacité de frettage du câble.

Avantageusement, Mₙ₂/Mₙ₁ ≤ 12, de préférence Mₙ₂/Mₙ₁ ≤ 11 et plus préférentiellement Mₙ₂/Mₙ₁ ≤ 10. R36 Ainsi, on évite d'avoir, à module Mₙ₁ donné, un module Mₙ₂ trop élevé ou à module Mₙ₂ module donné, un module Mₙ₁ trop faible.

Avantageusement, M_{n1'}=500/Aₙ₅₀₀ avec Aₙ₅₀₀ étant l'allongement équivalent, exprimé en %, de la nappe de frettage sous un effort de 500 daN.dm⁻¹ est tel que 100 daN.mm⁻¹ ≤ Mₙ₁' ≤ 600 daN.mm⁻¹.

Avantageusement, 125 daN.mm⁻¹ ≤ M_{n1'}, de préférence 150 daN.mm⁻¹ ≤ M_{n1'},

Avantageusement, M_{n1'}≤ 500 daN.mm⁻¹, de préférence M_{n1'}≤ 400 daN.mm⁻¹.

Les caractéristiques avantageuses relatives à M_{n1'} décrites ci-dessus permettent de s'assurer que la nappe de frettage présente un module relativement faible même pour l'ensemble des sollicitations inférieures à 500 daN.dm⁻¹. Ainsi, le pneumatique émet un bruit relativement faible sur une plage encore plus grande de sollicitations et donc pour des usages variés.

Avantageusement, M_{n1"}=750/Aₙ₇₅₀ avec Aₙ₇₅₀ étant l'allongement équivalent, exprimé en %, de la nappe de frettage sous un effort de 750 daN.dm⁻¹ est tel que 100 daN.mm⁻¹ ≤ M_{n1"} ≤ 600 daN.mm⁻¹.

Avantageusement, 125 daN.mm⁻¹ ≤ M_{n1"}, de préférence 150 daN.mm⁻¹ ≤ M_{n1"},

Avantageusement, M_{n1"} ≤ 500 daN.mm⁻¹, de préférence M_{n1"} ≤ 400 daN.mm⁻¹.

Les caractéristiques avantageuses relatives à M_{n1"} décrites ci-dessus permettent de s'assurer que la nappe de frettage présente un module relativement faible même pour l'ensemble des sollicitations inférieures à 750 daN.dm⁻¹. Ainsi, le pneumatique émet un bruit relativement faible sur une plage très grande de sollicitations et donc pour des usages très variés.

Dans un mode de réalisation préféré, le câble rempli est, après extraction du pneumatique, tel que défini précédemment. Très préférentiellement, le câble rempli est, après extraction du pneumatique, tel que 5 GPa ≤ M_{c1} ≤ 30 GPa, 40 GPa ≤ M_{c2} ≤ 150 GPa, et 3 ≤ M_{c2}/M_{c1}. Encore plus préférentiellement, le câble rempli présente, après extraction du pneumatique, les caractéristiques avantageuses décrites ci-dessus relatives à M_{c1}, M_{c2}, M_{c2}/M_{c1}, M_{c1'} et M_{c1"}.

Dans un mode de réalisation avantageux, l'armature de frettage comprend une unique nappe de frettage. Avantageusement, l'armature de frettage comprend une unique nappe de frettage. Ainsi, l'armature de frettage est, à l'exception de la nappe de frettage, dépourvue de toute nappe renforcée par des éléments de renfort filaires. Les éléments de renfort filaires de telles nappes renforcées exclues de l'armature de frettage du pneumatique comprennent les éléments de renfort filaires métalliques et les éléments de renfort filaires textiles. De façon très préférentielle, l'armature de frettage est constituée par une nappe de frettage. Ce mode de réalisation est particulièrement approprié à un pneumatique pour véhicules de tourisme, véhicules deux-roues, véhicules industriels choisis parmi camionnettes, "Poids-lourd", par exemple métro, bus, engins de transport routier (camions, tracteurs, remorques), et préférentiellement pour véhicules de tourisme.

Dans un mode de réalisation avantageux, l'armature de frettage est radialement intercalée entre l'armature de travail et la bande de roulement. Ainsi, grâce à l'utilisation de câbles métalliques, l'armature de frettage exerce, en plus de sa fonction de frettage, une fonction de protection contre les perforations et les chocs bien plus efficace qu'une armature de frettage comprenant des éléments filaires de renfort de frettage textiles.

Dans un mode de réalisation avantageux, le ou chaque élément filaire de renfort de frettage fait un angle strictement inférieur à 10°, de préférence inférieur ou égal à 7° et plus préférentiellement inférieur ou égal à 5° avec la direction circonférentielle du pneumatique.

Dans un mode de réalisation avantageux, chaque élément filaire de renfort de travail est un élément filaire métallique.

Dans un mode de réalisation avantageux, les éléments filaires de renfort de travail de chaque nappe de travail sont agencés côte à côte sensiblement parallèlement les uns aux autres. Plus préférentiellement, chaque élément filaire de renfort de travail s'étend axialement d'une extrémité axiale de l'armature de travail du pneumatique à l'autre extrémité axiale de l'armature de travail du pneumatique.

Dans un mode de réalisation avantageux, l'armature de carcasse comprend une unique nappe de carcasse. Ainsi, l'armature de carcasse est, à l'exception de la nappe de carcasse, dépourvue de toute nappe renforcée par des éléments de renfort filaires. Les éléments de renfort filaires de telles nappes renforcées exclues de l'armature de carcasse du pneumatique comprennent les éléments de renfort filaires métalliques et les éléments de renfort filaires textiles. De façon très préférentielle, l'armature de carcasse est constituée par une nappe de carcasse. Ce mode de réalisation est particulièrement approprié à un pneumatique pour véhicules de tourisme, véhicules deux-roues, véhicules industriels choisis parmi camionnettes, "Poids-lourd", par exemple métro, bus, engins de transport routier (camions, tracteurs, remorques), et préférentiellement pour véhicules de tourisme.

Dans un mode de réalisation avantageux, chaque élément filaire de renfort de carcasse est un élément filaire textile.

Par textile, on entend par définition un élément filaire non-métallique constitué d'un ou plusieurs monofilament élémentaire textile éventuellement revêtu d'une ou plusieurs couches d'un revêtement à base d'une composition adhésive. Chaque monofilament élémentaire textile est obtenu, par exemple, par filage au fondu, filage en solution ou filage de gel. Chaque monofilament élémentaire textile est réalisé dans un matériau organique, notamment polymérique, ou inorganique, comme par exemple le verre ou le carbone. Les matériaux polymériques peuvent être du type thermoplastique, comme par exemple les polyamides aliphatiques, notamment les polyamides 6-6, et les polyesters, notamment le polyéthylène téréphthalate. Les matériaux polymériques peuvent être du type non thermoplastique, comme par exemple les polyamides aromatiques, notamment l'aramide, et la cellulose, naturelle comme artificielle, notamment la rayonne.

De préférence, chaque élément filaire de renfort de carcasse s'étend axialement d'un bourrelet du pneumatique à l'autre bourrelet du pneumatique.

Dans un mode de réalisation avantageux, l'armature de sommet est constituée par l'armature de travail et l'armature de frettage.

Par nappe, on entend l'assemblage, d'une part, d'un ou de plusieurs éléments filaires de renfort et, d'autre part, d'une matrice élastomérique, le ou les éléments filaires de renfort étant noyés dans la matrice élastomérique.

Avantageusement, les éléments filaires de renfort de chaque nappe sont noyés dans une matrice élastomérique. Les différentes nappes peuvent comprendre la même matrice élastomérique ou bien des matrices élastomériques distinctes.

Dans un premier mode de réalisation du pneumatique selon l'invention, l'armature de travail comprend deux nappes de travail et préférentiellement l'armature de travail est constituée de deux nappes de travail.

Dans ce premier mode de réalisation, les éléments filaires de renfort de travail et les éléments filaires de renfort de carcasse sont agencés de façon à définir, en projection sur un plan circonférentiel équatorial selon la direction radiale du pneumatique, un maillage triangulaire. Dans ce premier mode de réalisation, les éléments filaires de renfort de frettage ne sont pas nécessaires pour définir le maillage triangulaire.

Avantageusement, dans ce premier mode de réalisation, chaque élément filaire de renfort de travail de chaque nappe de travail forme un angle allant de 10° à 40°, de préférence allant de 20° à 30° avec la direction circonférentielle du pneumatique.

Avantageusement, l'orientation de l'angle fait par les éléments filaires de renfort de travail avec la direction circonférentielle du pneumatique dans une nappe de travail est opposée à l'orientation de l'angle fait par les éléments filaires de renfort de travail avec la direction circonférentielle du pneumatique dans l'autre nappe de travail. En d'autres termes, les éléments filaires de renfort de travail d'une nappe de travail sont croisés avec les éléments filaires de renfort de travail de l'autre nappe de travail.

Avantageusement, chaque élément filaire de renfort de carcasse fait un angle supérieur ou égal à 80°, de préférence allant de 80° à 90° avec la direction circonférentielle du pneumatique dans le plan médian du pneumatique, autrement dit dans le sommet du pneumatique.

Avantageusement, chaque élément filaire de renfort de carcasse fait un angle supérieur ou égal à 80°, de préférence allant de 80° à 90° avec la direction circonférentielle du pneumatique dans le plan circonférentiel équatorial du pneumatique, autrement dit dans chaque flanc.

Dans un deuxième mode de réalisation de l'invention, l'armature de travail comprend une unique nappe de travail. Ainsi, l'armature de travail est, à l'exception de la nappe de travail, dépourvue de toute nappe renforcée par des éléments de renfort filaires. Les éléments de renfort filaires de telles nappes renforcées exclues de l'armature de travail du pneumatique comprennent les éléments de renfort filaires métalliques et les éléments de renfort filaires textiles. De façon très préférentielle, l'armature de travail est constituée par une nappe de travail. Ce mode de réalisation est particulièrement avantageux lorsque le ou chaque élément filaire de renfort de frettage est constitué par câble tel que défini ci-dessus. Les propriétés de résistance mécanique et d'endurance de l'armature de frettage précédemment décrites permettent alors de supprimer une nappe de travail de l'armature de travail. On obtient un pneumatique significativement allégé.

Dans ce deuxième mode de réalisation, le ou les éléments filaires de renfort de frettage, les éléments filaires de renfort de travail et les éléments filaires de renfort de carcasse sont agencés de façon à définir, en projection sur un plan circonférentiel équatorial selon la direction radiale du pneumatique, un maillage triangulaire. Dans ce deuxième mode de réalisation, contrairement au premier mode de réalisation, les éléments filaires de renfort de frettage sont nécessaires pour définir le maillage triangulaire.

Avantageusement, chaque élément filaire de renfort de carcasse fait un angle A_{C1} supérieur ou égal à 55°, de préférence allant de 55° à 80° et plus préférentiellement allant de 60° à 70°, avec la direction circonférentielle du pneumatique dans le plan médian du pneumatique, autrement dit dans le sommet du pneumatique. Ainsi, les éléments filaires de renfort de carcasse, de par l'angle formé avec la direction circonférentielle, participe à la formation du maillage triangulaire dans le sommet du pneumatique.

Dans un mode de réalisation, chaque élément filaire de renfort de carcasse fait un angle A_{C2} supérieur ou égal à 85° avec la direction circonférentielle du pneumatique dans le plan circonférentiel équatorial du pneumatique, autrement dit dans chaque flanc du pneumatique. Les éléments filaires de renfort de carcasse sont sensiblement radiaux dans chaque flanc, c'est-à-dire sensiblement perpendiculaires à la direction circonférentielle, ce qui permet de conserver tous les avantages d'un pneumatique à carcasse radiale.

Dans un mode de réalisation, chaque élément filaire de renfort de travail fait un angle A_{T} supérieur ou égal à 10°, de préférence allant de 30° à 50° et plus préférentiellement de 35° à 45° avec la direction circonférentielle du pneumatique dans le plan médian du pneumatique. Ainsi, les éléments filaires de renfort de travail, de par l'angle formé avec la direction circonférentielle, participent à la formation du maillage triangulaire dans le sommet du pneumatique.

Afin de former un maillage triangulaire le plus efficace possible, l'orientation de l'angle A_{T} et l'orientation de l'angle A_{C1} sont préférentiellement opposées par rapport à la direction circonférentielle du pneumatique.

Que ce soit dans le premier ou le deuxième mode de réalisation du pneumatique, le sommet comprend la bande de roulement et l'armature de sommet. On entend par bande de roulement une bande de matériau polymérique, de préférence élastomérique, délimitée :
- radialement vers l'extérieur, par une surface destinée à être au contact d'un sol et
- radialement vers l'intérieur, par l'armature de sommet.

La bande de matériau polymérique est constituée d'une nappe d'un matériau matériau polymérique, de préférence élastomérique ou bien constituée d'un empilement de plusieurs nappes, chaque nappe étant constituée d'un matériau matériau polymérique, de préférence élastomérique.

Que ce soit dans le premier ou le deuxième mode de réalisation du pneumatique, l'armature de sommet comprend avantageusement une unique armature de frettage et une unique armature de travail. Ainsi, l'armature de sommet est, à l'exception de l'armature de frettage et de l'armature de travail, dépourvue de toute armature renforcée par des éléments de renfort. Les éléments de renfort de telles armatures exclues de l'armature de sommet du pneumatique comprennent les éléments de renfort filaires, les tricots ou bien encore les tissus. De façon très préférentielle, l'armature de sommet est constituée de l'armature de frettage et de l'armature de travail.

Que ce soit dans le premier ou le deuxième mode de réalisation du pneumatique, dans un mode de réalisation très préférentiel, le sommet est, à l'exception, de l'armature de sommet, dépourvue de toute armature renforcée par des éléments de renfort. Les éléments de renfort de telles armatures exclues du sommet du pneumatique comprennent les éléments de renfort filaires, les tricots ou bien encore les tissus. De façon très préférentielle, le sommet est constitué par la bande de roulement et l'armature de sommet.

Que ce soit dans le premier ou le deuxième mode de réalisation du pneumatique, dans un mode de réalisation très préférentiel, l'armature de carcasse est agencée directement radialement au contact de l'armature de sommet et l'armature de sommet est agencée directement radialement au contact de la bande de roulement. Dans ce mode de réalisation très préférentiel, l'unique nappe de frettage et l'unique nappe de travail sont avantageusement agencées directement radialement au contact l'une de l'autre.

Par directement radialement au contact, on comprend que les objets considérés directement radialement au contact l'un de l'autre, ici les nappes, armatures ou la bande de roulement, ne sont séparés radialement par aucun objet, par exemple par aucune nappe, armature ni bande qui serait interposé radialement entre les objets considérés directement radialement au contact l'un de l'autre.

Que ce soit dans le premier ou le deuxième mode de réalisation décrit ci-dessus, avantageusement, la nappe de frettage présente avantageusement un module sécant en traction supérieur ou égal à 300 daN.mm⁻¹, de préférence supérieur ou égal à 350 daN.mm⁻¹ et plus préférentiellement supérieur ou égal à 400 daN.mm⁻¹ pour une force égale à 15% de la force à rupture de la nappe de frettage. Dans un mode de réalisation, la nappe de frettage présente avantageusement un module sécant en traction inférieur ou égal à 500 daN.mm⁻¹, de préférence inférieur ou égal à 450 daN.mm⁻¹ pour une force égale à 15% de la force à rupture de la nappe de frettage.

Que ce soit dans le premier ou le deuxième mode de réalisation décrit ci-dessus, la force à rupture de la nappe de frettage est supérieure ou égale à 55 daN.mm⁻¹, de préférence supérieure ou égale à 60 daN.mm⁻¹ et plus préférentiellement supérieure ou égale à 65 daN.mm⁻¹. Avantageusement, la force à rupture de la nappe de frettage est inférieure ou égale à 85 daN.mm⁻¹, de préférence inférieure ou égale à 80 daN.mm⁻¹ et plus préférentiellement inférieure ou égale à 75 daN.mm⁻¹.

### PROCEDE DE FABRICATION DU PNEUMATIQUE SELON L'INVENTION

On fabrique le pneumatique selon l'invention selon le procédé décrit ci-dessous.

Tout d'abord, on fabrique chaque nappe de carcasse, chaque nappe de travail et chaque nappe de frettage. On fabrique chaque nappe en noyant les éléments filaires de renfort de chaque nappe dans une composition élastomérique non réticulée.

Puis, on agence l'armature de carcasse, l'armature de travail, l'armature de frettage et la bande de roulement de façon à former une ébauche de pneumatique.

Ensuite, on conforme l'ébauche de pneumatique de façon à agrandir au moins radialement l'ébauche de pneumatique. Cette étape a pour effet d'allonger circonférentiellement chaque nappe de l'ébauche de pneumatique. Cette étape a ainsi pour effet d'allonger le ou chaque élément filaire de renfort de frettage selon la direction circonférentielle du pneumatique. Ainsi, le ou chaque élément filaire de renfort de frettage présente, avant l'étape de conformation, des caractéristiques différentes de celles après l'étape de conformation.

Les caractéristiques du câble dépourvu de matériau de remplissage décrites ci-dessus assurent, qu'à l'issue du procédé de fabrication du pneumatique, compte tenu de l'étape de conformation, le pneumatique présentera les avantages décrits ci-dessus.

Enfin, on réticule les compositions de l'ébauche de pneumatique conformée, par exemple par cuisson ou vulcanisation, afin d'obtenir le pneumatique dans lequel chaque composition présente un état réticulé et forme une matrice élastomérique à base de la composition.

L'invention sera mieux comprise à la lecture de la description qui va suivre, donnée uniquement à titre d'exemple non limitatif et faite en se référant aux dessins dans lesquels:
- la figure 1 est une vue en coupe radiale d'un pneumatique selon un premier mode de réalisation de l'invention ;
- la figure 2 est une vue en arraché du pneumatique de la figure 1 illustrant la projection sur le plan circonférentiel équatorial E des éléments filaires de renfort de frettage, des éléments filaires de renfort de travail et des éléments filaires de renfort de carcasse ;
- la figure 3 est une vue des éléments filaires de renfort de carcasse agencés dans le flanc du pneumatique de la figure 1 en projection sur le plan médian M du pneumatique ;
- la figure 4 est une vue en coupe perpendiculaire à son axe d'un câble selon l'invention (supposé rectiligne et au repos) ;
- la figure 5 est une vue en perspective du câble de la figure 4 ;
- la figure 6 est une vue en coupe perpendiculaire à son axe d'un câble rempli selon l'invention (supposé rectiligne et au repos) ;
- la figure 7 est une courbe force-allongement de chaque câble des figures 4 et 6 illustrant la variation de la contrainte subie par chaque câble en fonction de l'allongement ainsi que les tangentes à chaque courbe illustrant les modules M₁ et M_{c1};
- la figure 8 est une courbe force-allongement de chaque câble des figures 4 et 6 illustrant la variation de la force subie par chaque câble en fonction de l'allongement ainsi que les tangentes à chaque courbe illustrant les modules M₂ et M_{c2};
- la figure 9 est une courbe force-allongement de chaque câble des figures 4 et 6 illustrant la variation de la contrainte subie par chaque câble en fonction de l'allongement ainsi que les tangentes à chaque courbe illustrant les modules M₁, et M_{c1'};
- la figure 10 est une courbe force-allongement de chaque câble des figures 4 et 6 illustrant la variation de la contrainte subie par chaque câble en fonction de l'allongement ainsi que les tangentes à chaque courbe illustrant les modules M_{1"} et M_{c1"};
- la figure 11 est une courbe représentant la variation de la dérivée de chaque courbe de la figure 8 en fonction de l'allongement ;
- la figure 12 est une courbe force-allongement équivalente de la nappe de frettage du pneumatique de la figure 1 illustrant la variation de la force subie par la nappe en fonction de l'allongement ainsi que les tangentes à cette courbe illustrant les modules Mₙ₁ et Mₙ₂ ;
- la figure 13 est une courbe force-allongement équivalente de la nappe de frettage du pneumatique de la figure 1 illustrant la variation de la force subie par la nappe en fonction de l'allongement ainsi que les tangentes à cette courbe illustrant les modules M_{n1"} et Mₙ₂ ;
- la figure 14 est une courbe force-allongement équivalente de la nappe de frettage du pneumatique de la figure 1 illustrant la variation de la force subie par la nappe en fonction de l'allongement ainsi que les tangentes à cette courbe illustrant les modules M_{n1"} et Mₙ₂ ;
- la figure 15 est une vue analogue à celle de la figure 1 d'un pneumatique selon un deuxième mode de réalisation de l'invention ;
- les figures 16 et 17 sont des vues analogues à celles des vues des figures 2 et 3 du pneumatique de la figure 15 selon le deuxième mode de réalisation de l'invention ;
- les figures 18 et 19 sont des courbes analogues à celles des figures 7 et 8 du câble de la figure 4, du câble rempli de la figure 6 et d'éléments filaires de renfort de frettage de l'état de la technique ; et
- la figure 20 est une courbe force-allongement équivalente de chaque nappe de frettage des pneumatiques des figures 1 et 15 et de pneumatiques de l'état de la technique illustrant la variation de la force subie par la nappe de frettage en fonction de l'allongement ainsi que les tangentes à chaque courbe illustrant les modules Mₙ₁ et Mₙ₂ de chaque nappe de frettage.

### PNEUMATIQUE SELON UN PREMIER MODE DE REALISATION DE L'INVENTION

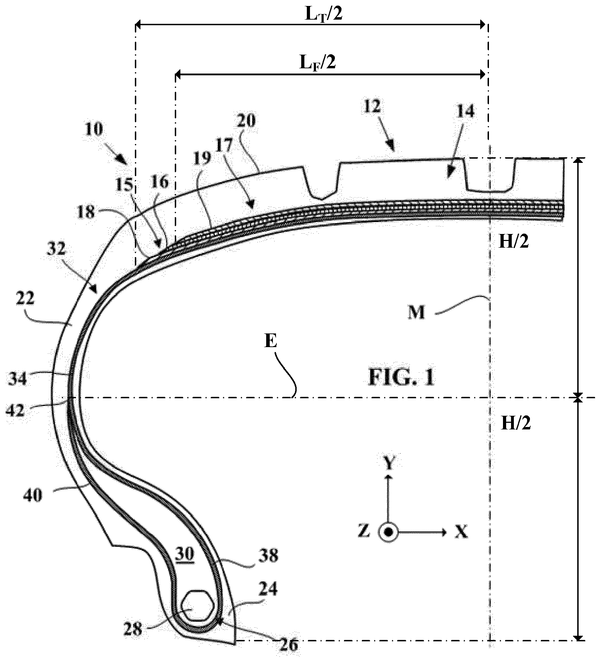

Sur la figure 1, on a représenté un repère X, Y, Z correspondant aux directions habituelles respectivement axiale (X), radiale (Y) et circonférentielle (Z) d'un pneumatique.

On a représenté schématiquement sur la figure 1, une vue en coupe radiale, d'un pneumatique selon l'invention et désigné par la référence générale 10. Le pneumatique 10 est sensiblement de révolution autour d'un axe sensiblement parallèle à la direction axiale X. Le pneumatique 10 est ici destiné à un véhicule de tourisme.

Le pneumatique 10 comporte un sommet 12 comprenant une armature de sommet 14 comprenant une armature de travail 15 comprenant deux nappes de travail 16, 18 comprenant respectivement des éléments filaires de renfort de travail 46, 47 et une armature de frettage 17 comprenant une nappe de frettage 19 comprenant au moins un élément filaire de renfort de frettage 48. L'armature de sommet 14 s'étend dans le sommet 12 selon la direction circonférentielle Z du pneumatique 10. Le sommet 12 comprend une bande de roulement 20 agencée radialement extérieure à l'armature de sommet 14.. Ici, le sommet 12 est constitué par la bande de roulement 20 et l'armature de sommet 14. Ici, l'armature de frettage 17, ici la nappe de frettage 19, est radialement intercalée entre l'armature de travail 15 et la bande de roulement 20. Ici, l'armature de travail 15 comprend uniquement deux nappes de travail 16, 18 et l'armature de frettage 17 comprenant une unique nappe de frettage 19. Ici, l'armature de travail 15 est constituée des deux nappes de travail 16, 18 et l'armature de frettage 17 est constituée de la nappe de frettage 19. L'armature de sommet 14 est constituée par l'armature de travail 15 et l'armature de frettage 17.

Le pneumatique 10 comprend également deux flancs 22 prolongeant le sommet 12 radialement vers l'intérieur. Le pneumatique 10 comporte en outre deux bourrelets 24 radialement intérieur aux flancs 22 et comportant chacun une structure annulaire de renfort 26, en l'occurrence une tringle 28, surmontée d'une masse de gomme 30 de bourrage sur tringle, ainsi qu'une armature de carcasse radiale 32. Chaque flanc 22 relie chaque bourrelet 24 au sommet 12.

L'armature de carcasse 32 comporte une nappe de carcasse 34 comprenant plusieurs éléments filaires de renfort de carcasse 44, la nappe de carcasse 34 étant ancrée à chacun des bourrelets 24 par un retournement autour de la tringle 28, de manière à former dans chaque bourrelet 24 un brin aller 38 s'étendant depuis les bourrelets à travers les flancs vers le sommet 12, et un brin retour 40, l'extrémité radialement extérieure 42 du brin retour 40 étant radialement à l'extérieur de la structure annulaire de renfort 26. L'armature de carcasse 32 s'étend ainsi depuis les bourrelets 24 dans et à travers les flancs 22 jusque dans le sommet 12 et dans le sommet 12. L'armature de carcasse 32 est agencée radialement à l'intérieur de l'armature de sommet 14 et de l'armature de frettage 17. L'armature de sommet 14 est donc radialement intercalée entre l'armature de carcasse 32 et la bande de roulement 20. L'armature de carcasse 32 comprend une seule et unique nappe carcasse 34. Ici, l'armature de carcasse 32 est constituée de la nappe de carcasse 34.

Le pneumatique 10 comprend également une couche interne 46 d'étanchéité, de préférence en butyl, située axialement intérieure aux flancs 22 et radialement intérieure à l'armature de sommet 14 et s'étendant entre les deux bourrelets 24.

Chaque nappe de travail 16, 18, de frettage 19 et de carcasse 34 comprend une matrice élastomérique dans laquelle sont noyés des éléments de renfort de la nappe correspondante. Chaque matrice élastomérique des nappes de travail 16, 18, de frettage 19 et de carcasse 34 est à base d'une composition élastomérique conventionnelle pour calandrage d'éléments de renfort comprenant de façon classique un élastomère diénique, par exemple du caoutchouc naturel, une charge renforçante, par exemple du noir de carbone et/ou de la silice, un système de réticulation, par exemple un système de vulcanisation, de préférence comprenant du soufre, de l'acide stéarique et de l'oxyde de zinc, et éventuellement un accélérateur et/ou retardateur de vulcanisation et/ou divers additifs.

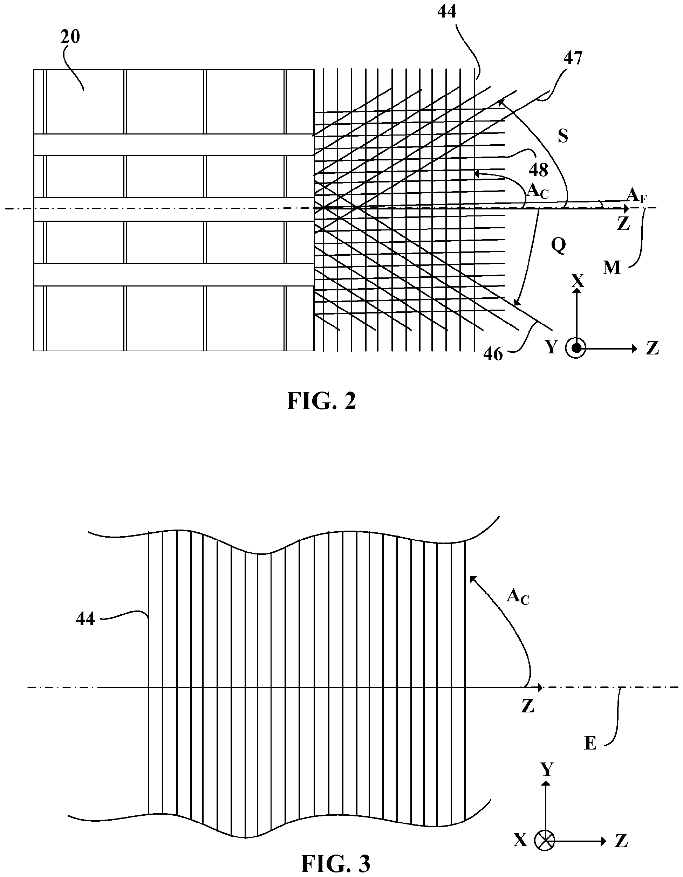

En référence aux figures 2 et 3, chaque élément filaire de renfort de carcasse 44 s'étend axialement d'un bourrelet 24 du pneumatique 10 à l'autre bourrelet 24 du pneumatique 10. Chaque élément filaire de renfort de carcasse 44 fait un angle A_{C} supérieur ou égal à 80°, de préférence allant de 80° à 90°, avec la direction circonférentielle Z du pneumatique 10 dans les plans médian M et circonférentiel équatorial E du pneumatique 10, autrement dit dans le sommet 12 et dans chaque flanc 22.

En référence à la figure 2, les éléments filaires de renfort de travail 46, 47 de chaque nappe de travail 16, 18 sont agencés côte à côte sensiblement parallèlement les uns aux autres. Chaque élément filaire de renfort de travail 46, 47 s'étend axialement d'une extrémité axiale de l'armature de travail 15 du pneumatique 10 à l'autre extrémité axiale de l'armature de travail 15 du pneumatique 10. Chaque élément filaire de renfort de travail 46, 48 fait un angle allant de 10° et 40°, de préférence allant de 20° à 30° et ici égal à 26° avec la direction circonférentielle Z du pneumatique 10 dans le plan médian M. L'orientation de l'angle S fait par les éléments filaires de renfort de travail 46 avec la direction circonférentielle Z du pneumatique 10 dans la nappe de travail 16 est opposée à l'orientation de l'angle Q fait par les éléments filaires de renfort de travail 47 avec la direction circonférentielle Z du pneumatique 10 dans l'autre nappe de travail 18. En d'autres termes, les éléments filaires de renfort de travail 46 de nappe de travail 16 sont croisés avec les éléments filaires de renfort de travail 47 de l'autre nappe de travail 18.

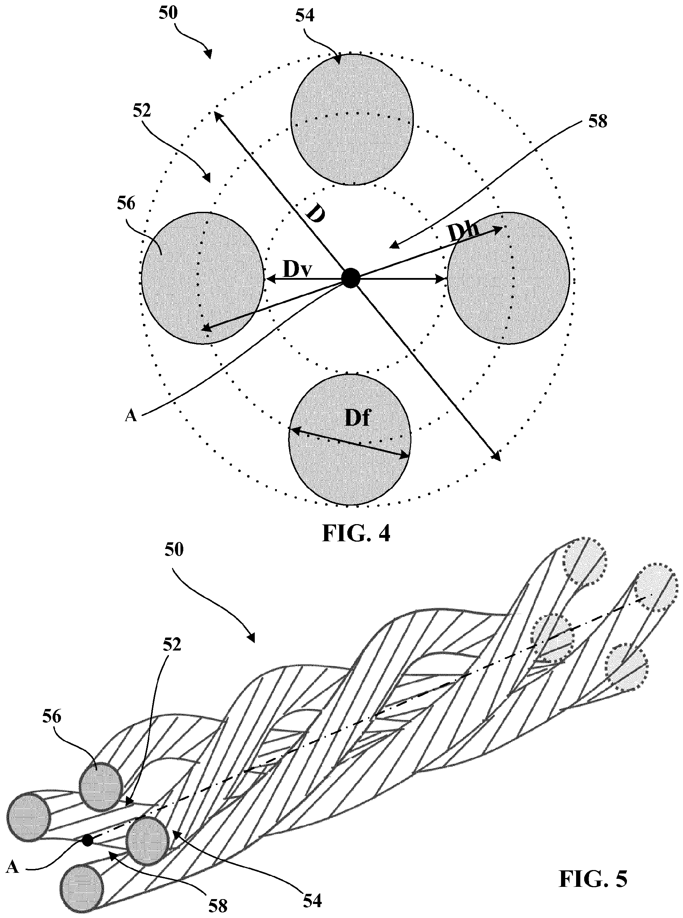

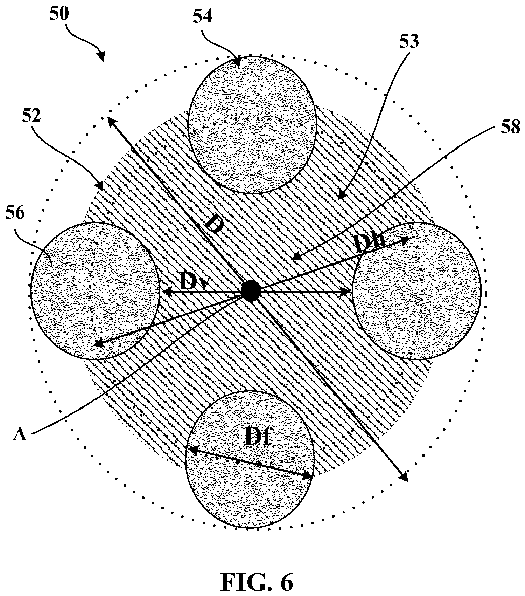

En référence à la figure 2, l'unique nappe de frettage 19 comprend au moins l'élément filaire de renfort de frettage 48 constitué ou formé par un câble rempli 51 selon l'invention noyé dans la matrice élastomérique de la nappe de frettage 19 à base de la composition élastomérique de la nappe de frettage 19. Le câble 51 rempli est décrit plus en détails ci-dessous en référence à la figure 6. Le câble rempli 51 est issu d'un procédé de calandrage d'un câble 50 selon l'invention dans la matrice élastomérique à base de la composition élastomérique de la nappe de frettage 19. Le câble 50 est décrit plus en détails également ci-dessous en référence aux figures 4 et 5. Ainsi, l'élément filaire de renfort de frettage 48 est obtenu par noyage du câble 50 dans une matrice élastomérique à base de la composition élastomérique de la nappe de frettage 19.

En l'espèce, la nappe de frettage 19 comprend un unique élément filaire de renfort de frettage 48 enroulé continûment sur une largeur axiale L_{F} du sommet 12 du pneumatique 10. Avantageusement, la largeur axiale L_{F} est inférieure à la largeur L_{T} de la nappe de travail 18. L'élément filaire de renfort de frettage 48 fait un angle A_{F} strictement inférieur à 10° avec la direction circonférentielle Z du pneumatique 10, de préférence inférieur ou égal à 7°, et plus préférentiellement inférieur ou égal à 5°. En l'espèce, l'angle est ici égal à 5°. d est la densité de l'élément filaire de renfort de frettage 48 dans la nappe de frettage 19, exprimée en nombre par dm de nappe de frettage 19. Ici d=73 dm⁻¹.

Les éléments filaires de renfort de carcasse 44 et de travail 46, 47 sont agencés, dans le sommet 12, de façon à définir, en projection sur le plan circonférentiel équatorial E selon la direction radiale du pneumatique, un maillage triangulaire.

Chaque élément filaire de renfort de carcasse 44 est un élément filaire textile et comprend classiquement deux brins multifilamentaires, chaque brin multifilamentaire étant constitué d'un filé de monofilaments de polyesters, ici de PET, ces deux brins multifilamentaires étant surtordus individuellement à 240 tours.m⁻¹ dans un sens puis retordus ensemble à 240 tours.m⁻¹ dans le sens opposé. Ces deux brins multifilamentaires sont enroulés en hélice l'un autour de l'autre. Chacun de ces brins multifilamentaires présente un titre égal à 220 tex.

Chaque élément filaire de renfort de travail 46, 47 est un élément filaire métallique et est ici un assemblage de deux monofilaments en acier présentant chacun un diamètre égal à 0,30 mm, les deux monofilaments en acier étant enroulés l'un avec l'autre au pas de 14 mm.

### CABLES SELON L'INVENTION

En référence aux figures 4, 5 et 6, chaque câble 50 et 51 selon l'invention comprend une unique couche 52 d'éléments filaires métalliques 54 enroulés en hélice. En l'espèce, chaque câble 50, 51 est constitué de l'unique couche 52, autrement dit chaque câble 50, 51 ne comprend pas d'autre élément filaire métallique que ceux de la couche 52. La couche 52 est constituée de N éléments filaires métalliques enroulés en hélice, N allant de 3 à 6 et ici N=4. Chaque câble 50 et 51 présente un axe principal A s'étendant sensiblement parallèlement à la direction selon laquelle le câble s'étend selon sa plus grande longueur. Chaque élément filaire métallique 54 de la couche décrit, lorsque chaque câble 50, 51 s'étend selon une direction sensiblement rectiligne, une trajectoire en forme d'hélice autour de l'axe principal A sensiblement parallèle à la direction sensiblement rectiligne, de sorte que, dans un plan de coupe sensiblement perpendiculaire à l'axe principal A, la distance entre le centre de chaque élément filaire métallique 54 de la couche 52 et l'axe principal A est sensiblement constante et égale pour tous les éléments filaires métalliques 54 de la couche 52. Cette distance constante entre le centre de chaque élément filaire métallique 54 de la couche 52 et l'axe principal A est égale à la moitié du diamètre d'hélice Dh.

Dans le mode de réalisation illustré, chaque élément filaire métallique 54 comprend un unique monofilament métallique 56. Chaque élément filaire métallique 54 comprend également une couche (non représentée) d'un revêtement métallique comprenant du cuivre, du zinc, de l'étain, du cobalt ou un alliage de ces métaux, ici du laiton. Chaque monofilament métallique 56 est en acier au carbone et présente une résistance mécanique à rupture ici égale à 3100 MPa.

Le diamètre Df de chaque élément filaire métallique 54 est tel que 0,10 mm ≤ Df ≤ 0,50 mm, de préférence 0,20 mm ≤ Df ≤ 0,35 mm et plus préférentiellement 0,25 mm ≤ Df ≤ 0,33 mm et ici Df=0,32 mm pour tous les éléments filaires métalliques 54. Chaque élément filaire métallique 54 est dépourvu de marques de préformation.

Chaque câble 50 et 51 présente un diamètre D tel que D ≤ 2,00 mm, de préférence 0,75 mm ≤ D < 1,40 mm et plus préférentiellement 1,00 mm ≤ D ≤ 1,30 mm et ici D=1,27 mm.

Avantageusement, chaque élément filaire métallique 54 de chaque câble 50 et 51 est enroulé à un pas P tel que 3 mm ≤ P ≤ 15 mm, de préférence 3 mm ≤ P ≤ 9 mm et ici P=8 mm.

Le rapport K du pas P sur le diamètre Df de chaque élément filaire métallique, P et Df étant exprimés en millimètres, est tel que 19 ≤ K ≤ 44 et ici K=25.

Les éléments filaires métalliques 54 de chaque câble 50 et 51 définissent une voûte interne 58 de diamètre Dv.

En référence à la figure 6, le câble rempli 51 comprend un matériau de remplissage 53 de la voûte interne 58 à base de la composition élastomérique de la nappe de frettage 19, ce matériau de remplissage 53 étant située dans la voûte interne 58 du câble 51. Le câble 50 est, comme visible sur les figures 4 et 5, dépourvu de matériau de remplissage, c'est-à-dire que la voûte interne 58 du câble 50 est vide.

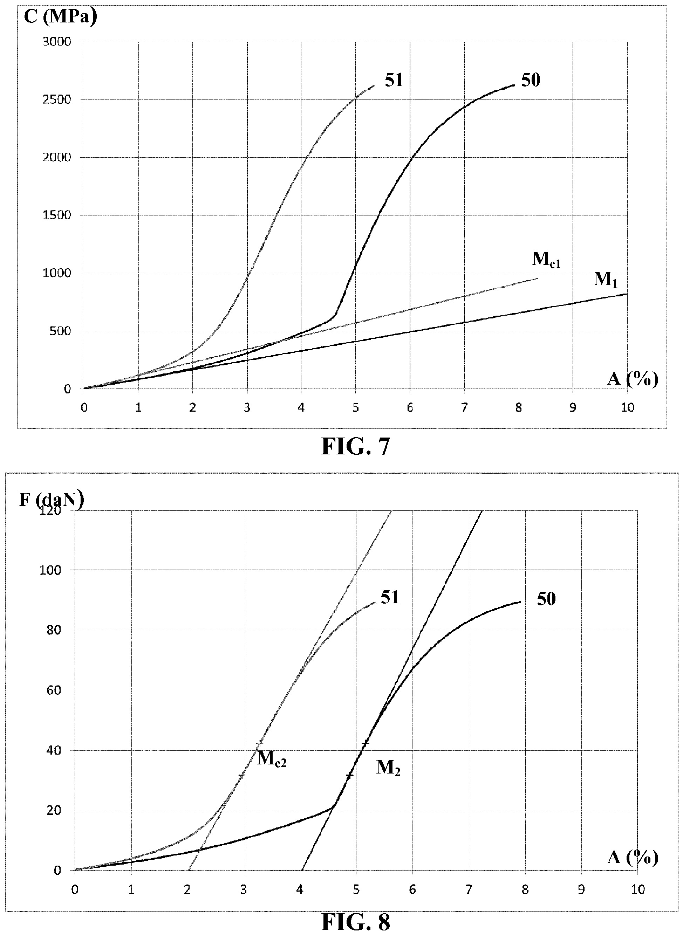

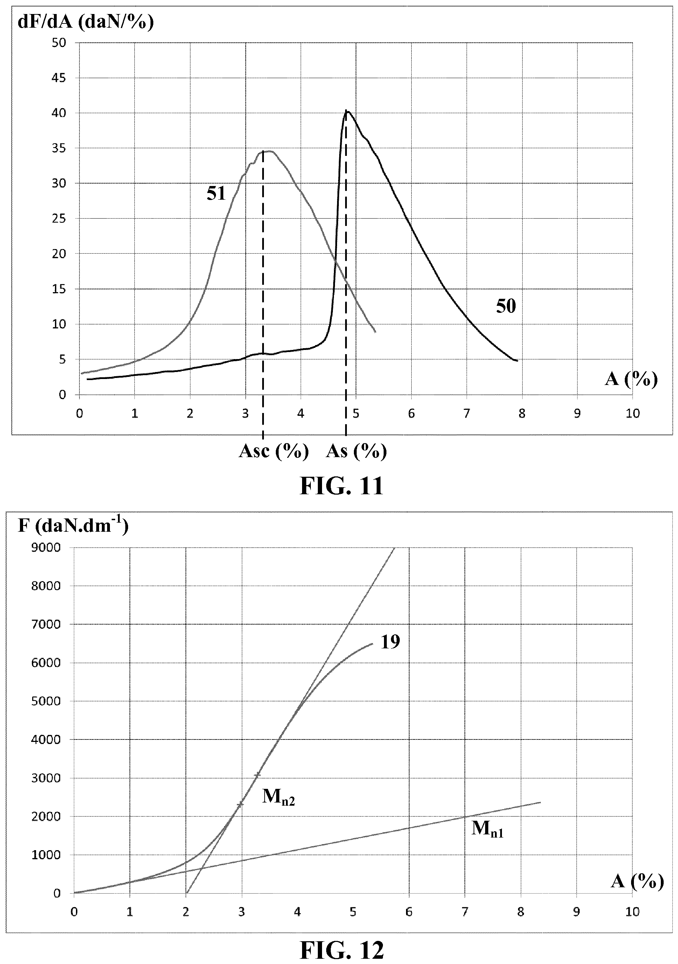

Le câble 50 présente un allongement structural As tel que As ≥ 1%, de préférence tel que As ≥ 2,5%, plus préférentiellement As ≥ 3% et encore plus préférentiellement tel que 3% ≤ As ≤ 5,5% et ici égal à 4,8%. Comme décrit précédemment, on détermine la valeur As en traçant une courbe force-allongement du câble 50 en appliquant la norme ASTM D2969-04 de 2014. On a représenté la courbe obtenue sur la figure 8. Puis, de cette courbe force allongement, on en déduit la variation de la dérivée de cette courbe force allongement. On a représenté sur la figure 11 la variation de cette dérivée en fonction de l'allongement. Le point de dérivée la plus élevée correspond alors à la valeur As.

L'angle d'hélice α de chaque élément filaire métallique du câble 50 est tel que 13° ≤ α ≤ 21°. En l'espèce, tel que décrit précédemment, avec les caractéristiques du câble 50, on a α(1)=20,05°, α(2)=20,36° et α(3)=α=20,37°.

Chaque élément filaire métallique 54 du câble 50 présente un rayon de courbure d'hélice Rf tel que 2 mm ≤ Rf ≤ 7 mm, de préférence 2 mm ≤ Rf ≤ 5 mm et plus préférentiellement 3 mm ≤ Rf ≤ 5 mm. Le rayon de courbure Rf est calculé selon la relation Rf=P/(π × Sin(2α)). Comme ici P=8 mm et α=20,37°, Rf=3,90 mm.

Le diamètre d'hélice Dh de chaque élément filaire métallique 54 du câble 50 est tel que 0,40 mm ≤ Dh ≤ 1,50 mm, de préférence 0,50 mm ≤ Dh ≤ 1,00 mm et plus préférentiellement 0,70 mm ≤ Dh ≤ 1,00 mm. Le diamètre d'hélice Dh est calculé selon la relation Dh=P × Tan(α) / π. Comme ici P=8 mm et α=20,37°, Dh=0,95 mm.

Le diamètre de voûte Dv est calculé selon la relation Dv=Dh-Df dans laquelle Df est le diamètre de chaque élément filaire métallique et Dh le diamètre d'hélice. Avantageusement, Dv est tel que Dv ≥ 0,46 mm et de préférence 0,46 mm ≤ Dv ≤ 0,70 mm. Ici, comme Dh=0,95 mm et Df=0,32 mm, on a Dv=0,63 mm.

On a 9 ≤ Rf / Df ≤ 30, et de façon préférée 11 ≤ Rf / Df ≤ 19. Ici Rf / Df=12,2. On a également 1,30 ≤ Dv / Df ≤ 2,1, de préférence 1,30 ≤ Dv / Df ≤ 2,05 et plus préférentiellement 1,30 ≤ Dv / Df ≤ 2,00 et ici Dv / Df=1,97.

En référence à la figure 7 sur laquelle on a tracé une courbe force-allongement du câble 50 en tractionnant le câble 50 dans les conditions de la norme ASTM D2969-04 de 2014, le câble 50 présente un module M₁ défini par M₁=10 / A₁₀₀ avec A₁₀₀ étant l'allongement, exprimé en %, du câble sous un effort de 100 MPa.

Le module M₁ du câble 50 est, conformément à l'invention, tel que 5 GPa ≤ M₁ ≤ 16 GPa. Par ailleurs, on a avantageusement 6 GPa ≤ M₁, de préférence 8 GPa ≤ M₁. On a également avantageusement M₁ ≤ 14 GPa, de préférence M₁ ≤ 12 GPa. Ici, on a M₁=8,2 GPa.

En référence à la figure 8 sur laquelle on a tracé une courbe force-allongement du câble 50 en tractionnant le câble 50 dans les conditions de la norme ASTM D2969-04 de 2014, le câble 50 présente un module M₂ défini par M₂=[(F₄₀-F₃₀) / (A₄₀-A₃₀)] / S avec :
- S étant la section, exprimée en mm², telle que S=MI /Mv avec :
   ▪ MI étant la masse linéique des éléments filaires métalliques, exprimée en g par m de câble,
   ▪ Mv étant la masse volumique des éléments filaires métalliques, exprimée en g par cm³,
- F₄₀ étant la force, exprimée en daN, égale à 40 % de la force théorique maximale Fₜ du câble,
- F₃₀ étant la force, exprimée en daN, égale à 30 % de la force théorique maximale Fₜ du câble,
- A₄₀ étant l'allongement du câble, exprimé en %, à 40% de la force théorique maximale Fₜ du câble,
- A₃₀ étant l'allongement du câble, exprimé en %, à 30% de la force théorique maximale Fₜ du câble,
avec Fₜ= MI × Rm /Mv, exprimée en daN, avec Rm étant la résistance mécanique à rupture moyenne, exprimée en MPa, des éléments filaires métalliques constituant la couche unique.

Le module M₂ du câble 50 est, conformément à l'invention, tel que 40 GPa ≤ M₂ ≤ 160 GPa. Par ailleurs, on a avantageusement 65 GPa ≤ M₂, de préférence 80 GPa ≤ M₂ et plus préférentiellement 90 GPa ≤ M₂. On a également avantageusement M₂ ≤ 150 GPa, de préférence M₂ ≤ 140 GPa et plus préférentiellement M₂ ≤ 130 GPa. Ici, on a M₂=110 GPa

On a conformément à l'invention, 3 ≤ M₂/M₁. Par ailleurs, on a avantageusement 6 ≤ M₂/M₁, de préférence 8 ≤ M₂/M₁ et plus préférentiellement 10 ≤ M₂/M₁. On a également avantageusement M₂/M₁ ≤ 19, de préférence M₂/M₁ ≤ 17 et plus préférentiellement M₂/M₁ ≤ 15. Ici, on a M₂/M₁=13,4.

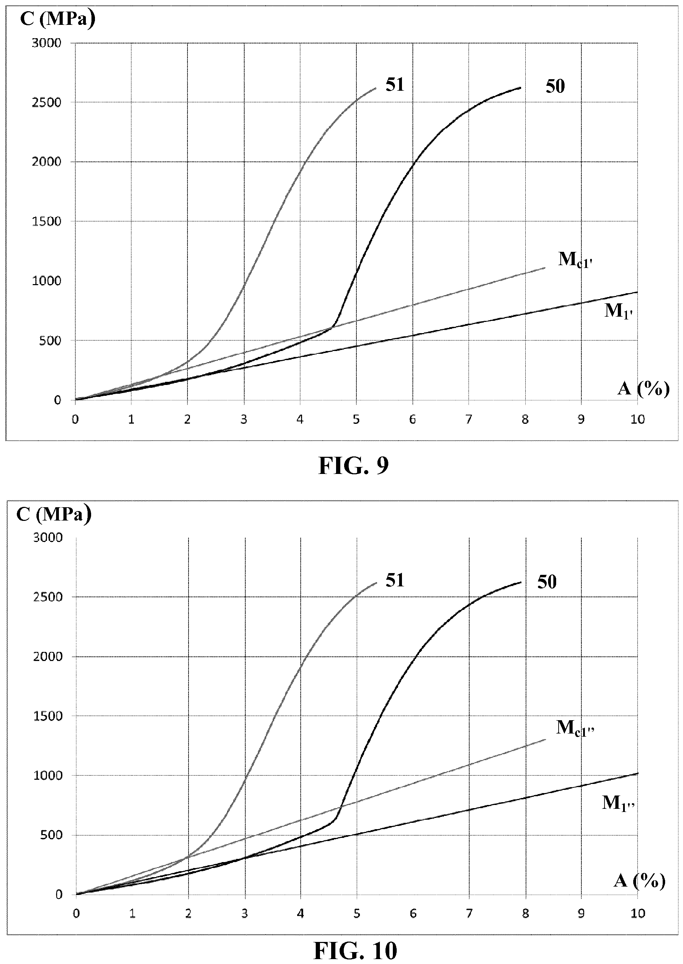

En référence à la figure 9 sur laquelle on a tracé une courbe force-allongement du câble 50 en tractionnant le câble 50 dans les conditions de la norme ASTM D2969-04 de 2014, le câble 50 présente un module M₁ défini par M₁=20/A₂₀₀ avec A₂₀₀ étant l'allongement, exprimé en %, du câble sous un effort de 200 MPa. Le module M₁, du câble 50 est tel que 5 GPa ≤ M₁ ≤ 16 GPa. On a avantageusement 6 GPa ≤ M₁, de préférence 8 GPa ≤ M_{1'} On a également avantageusement M_{1'} ≤ 14 GPa, de préférence M_{1'} ≤ 12 GPa. Ici, M_{1'}=9,1 GPa.

En référence à la figure 10 sur laquelle on a tracé une courbe force-allongement du câble 50 en tractionnant le câble 50 dans les conditions de la norme ASTM D2969-04 de 2014, le câble 50 présente un module M_{1"} défini par M_{1"}=30/A₃₀₀ avec A₃₀₀ étant l'allongement, exprimé en %, du câble sous un effort de 300 MPa. Le module M_{1"} du câble 50 est tel que 4 GPa ≤ M_{1"} ≤ 16 GPa. On a avantageusement 6 GPa ≤ M_{1"}, de préférence 8 GPa ≤ M_{1"}. On a également avantageusement M_{1"} ≤ 14 GPa, de préférence M_{1"} ≤ 12 GPa. Ici, M_{1"}=10,2 GPa.

Le câble 51 présente un allongement structural Asc tel que Asc ≥ 1%, de préférence Asc ≥ 1,5%, plus préférentiellement Asc ≥ 2% et encore plus préférentiellement 2% ≤ Asc ≤ 4% et ici égal à 3,3%. Comme précédemment, on détermine la valeur Asc en traçant une courbe force-allongement du câble rempli 51 en appliquant la norme ASTM D2969-04 de 2014. On a représenté la courbe obtenue sur la figure 8. Puis, de cette courbe force allongement, on en déduit la variation de la dérivée de cette courbe force allongement. On a représenté sur la figure 11 la variation de cette dérivée en fonction de l'allongement. Le point de dérivée la plus élevée correspond alors à la valeur Asc.

En référence à la figure 7 sur laquelle on a tracé une courbe force-allongement du câble rempli 51 en tractionnant le câble rempli 51 dans les conditions de la norme ASTM D2969-04 de 2014, le câble rempli 51 présente un module M_{c1} défini par M_{c1}=10 / A_{c100} avec A_{c100} étant l'allongement, exprimé en %, du câble rempli sous un effort de 100 MPa,

Le module M_{c1} du câble rempli 51 est, conformément à l'invention, tel que 5 GPa ≤ M_{c1} ≤ 30 GPa. Par ailleurs, on a avantageusement 7 GPa ≤ M_{c1}, de préférence 10 GPa ≤ M_{c1}. On a également avantageusement M_{c1} ≤ 25 GPa, de préférence M_{c1} ≤ 20 GPa. Ici, on a M_{c1}=11,4 GPa.

En référence à la figure 8 sur laquelle on a tracé une courbe force-allongement du câble rempli 51 en tractionnant le câble rempli 51 dans les conditions de la norme ASTM D2969-04 de 2014, le câble rempli 51 présente un module M_{c2} défini par M_{c2}=[(F_{c40}-F_{c30}) / (A_{c40}-A_{c30})] / S avec :
- S étant la section, exprimée en mm², telle que S=MI /Mv avec :
   ▪ MI étant la masse linéique des éléments filaires métalliques, exprimée en g par m de câble dépourvu du matériau de remplissage,
   ▪ Mv étant la masse volumique des éléments filaires métalliques, exprimée en g par cm³,
- F_{c40} étant la force, exprimée en daN, égale à 40 % de la force théorique maximale F_{ct} du câble dépourvu du matériau de remplissage,
- F_{c30} étant la force, exprimée en daN, égale à 30 % de la force théorique maximale F_{ct} du câble dépourvu du matériau de remplissage,
- A_{c40} étant l'allongement du câble rempli, exprimé en %, à 40% de la force théorique maximale F_{ct} du câble dépourvu du matériau de remplissage,
- A_{c30} étant l'allongement du câble rempli, exprimé en %, à 30% de la force théorique maximale F_{ct} du câble dépourvu du matériau de remplissage,
avec F_{ct}=MI × Rm / Mv, exprimée en daN, avec Rm étant la résistance mécanique à rupture moyenne, exprimée en MPa, des éléments filaires métalliques constituant la couche unique.

Le module M_{c2} du câble rempli 51 est, conformément à l'invention, tel que 40 GPa ≤ M_{c2} ≤ 150 GPa. Par ailleurs, on a avantageusement 60 GPa ≤ M_{c2}, de préférence 70 GPa ≤ M_{c2} et plus préférentiellement 80 GPa ≤ M_{c2}. On a également avantageusement M_{c2} ≤ 140 GPa, de préférence M_{c2} ≤ 130 GPa et plus préférentiellement M_{c2} ≤ 120 GPa. Ici, on a M_{c2}=97,5 GPa.

On a conformément à l'invention, 3 ≤ M_{c2}/M_{c1}. Par ailleurs, on a avantageusement 4 ≤ M_{c2}/M_{c1}, de préférence 5 ≤ M_{c2}/M_{c1} et plus préférentiellement 6 ≤ M_{c2}/M_{c1}. On a également avantageusement M_{c2}/M_{c1} ≤ 12, de préférence M_{c2}/M_{c1} ≤ 11 et plus préférentiellement M_{c2}/M_{c1} ≤ 10. Ici, on a M_{c2}/M_{c1}=8,5.

En référence à la figure 9 sur laquelle on a tracé une courbe force-allongement du câble rempli 51 en tractionnant le câble rempli 51 dans les conditions de la norme ASTM D2969-04 de 2014, le câble rempli 51 présente un module M_{c1'} défini par M_{c1'}=20/A_{c200} avec A_{c200} étant l'allongement, exprimé en %, du câble rempli sous un effort de 200 MPa. Le module M_{c1'} du câble rempli 51 est tel que 5 GPa ≤ M_{c1'} ≤ 30 GPa. On a avantageusement 7 GPa ≤ M_{c1'}, de préférence 10 GPa ≤ M_{c1'}, On a également avantageusement M_{c1'} ≤ 25 GPa, de préférence M_{c1'} ≤ 20 GPa. Ici, M_{c1'}=13,3 GPa.

En référence à la figure 10 sur laquelle on a tracé une courbe force-allongement du câble rempli 51 en tractionnant le câble rempli 51 dans les conditions de la norme ASTM D2969-04 de 2014, le câble rempli 51 présente un module M_{c1"} défini par M_{c1"}=30/A_{c300} avec A_{c300} étant l'allongement, exprimé en %, du câble rempli sous un effort de 300 MPa. Le module M_{c1"} du câble rempli 51 est tel que 5 GPa ≤ M_{c1"} ≤ 30 GPa. On a avantageusement 7 GPa ≤ M_{c1"}, de préférence 10 GPa ≤ M_{c1"}. On a également avantageusement M_{c1"} ≤ 25 GPa, de préférence M_{c1"} ≤ 20 GPa. Ici, M_{c1"}=15,6 GPa.

En revenant au pneumatique 10 selon l'invention et en référence à la figure 12 sur laquelle on a tracé une courbe force-allongement équivalente de la nappe de frettage 19 en tractionnant un câble rempli 51 dans les conditions de la norme ASTM D2969-04 de 2014 et en multipliant le résultat par la densité d, la nappe de frettage 19 présente un module Mₙ₁ défini par Mₙ₁=250 / Aₙ₂₅₀ avec Aₙ₂₅₀ étant l'allongement équivalent, exprimé en %, de la nappe de frettage 19 sous un effort de 250 daN.dm⁻¹.

Le module Mₙ₁ est, conformément à l'invention, tel que 100 daN.mm⁻¹ ≤ Mₙ₁ ≤ 600 daN.mm⁻¹. Par ailleurs, on a avantageusement, 125 daN.mm⁻¹ ≤ Mₙ₁, de préférence 150 daN.mm⁻¹ ≤ Mₙ₁. On a également avantageusement Mₙ₁ ≤ 500 daN.mm⁻¹, de préférence Mₙ₁ ≤ 400 daN.mm⁻¹. En l'espèce, on a Mₙ₁=283 daN.mm⁻¹.

Par ailleurs, la nappe de frettage 19 présente un module Mₙ₂ défini par Mₙ₂=[(Fₙ₄₀-Fₙ₃₀) / (Aₙ₄₀-Aₙ₃₀)] avec :
- Fₙ₄₀ étant la force, exprimée en daN.dm⁻¹, égale à 40 % de la force théorique maximale Fₙₜ de la nappe de frettage 19,
- Fₙ₃₀ étant la force, exprimée en daN.dm⁻¹, égale à 30 % de la force théorique maximale Fₙₜ de la nappe de frettage 19,
- Aₙ₄₀ étant l'allongement équivalent de la nappe de frettage, exprimé en %, à 40% de la force théorique maximale Fₙₜ de la nappe de frettage 19,
- Aₙ₃₀ étant l'allongement équivalent de la nappe de frettage, exprimé en %, à 30% de la force théorique maximale Fₙₜ de la nappe de frettage 19,
   avec Fₙₜ= MI × Rm × d / Mv, exprimée en daN.dm⁻¹, avec :
   ▪ MI étant la masse linéique des éléments filaires métalliques 54, exprimée en g par m de câble,
   ▪ Mv étant la masse volumique des éléments filaires métalliques 54, exprimée en g par cm³,
   ▪ Rm étant la résistance mécanique à rupture moyenne, exprimée en MPa, des éléments filaires métalliques 54 constituant la couche unique 52, et
   ▪ d étant la densité du ou des éléments filaires de renfort de frettage 48 dans la nappe de frettage 19, exprimée en nombre par dm de nappe de frettage 19.

Le module Mₙ₂ est, conformément à l'invention, tel que 1000 daN.mm⁻¹ ≤ Mₙ₂ ≤ 4500 daN.mm⁻¹. Par ailleurs, on a avantageusement 1500 daN.mm⁻¹ ≤ Mₙ₂, de préférence 1750 daN.mm⁻¹ ≤ Mₙ₂ et plus préférentiellement 2000 daN.mm⁻¹ ≤ Mₙ₂. On a également avantageusement Mₙ₂ ≤ 4000 daN.mm⁻¹, de préférence Mₙ₂ ≤ 3800 daN.mm⁻¹ et plus préférentiellement Mₙ₂ ≤ 3200 daN.mm⁻¹. En l'espèce, on a Mₙ₂ =2418 daN.mm⁻¹.

On a conformément à l'invention 3 ≤ Mₙ₂/Mₙ₁. Par ailleurs, on a avantageusement 4 ≤ Mₙ₂/Mₙ₁, de préférence 5 ≤ Mₙ₂/Mₙ₁ et plus préférentiellement 6 ≤ Mₙ₂/Mₙ₁. On a également avantageusement Mₙ₂/Mₙ₁ ≤ 12, de préférence Mₙ₂/Mₙ₁ ≤ 11 et plus préférentiellement Mₙ₂/Mₙ₁ ≤ 10. En l'espèce, on a Mₙ₂/Mₙ₁=8,5.

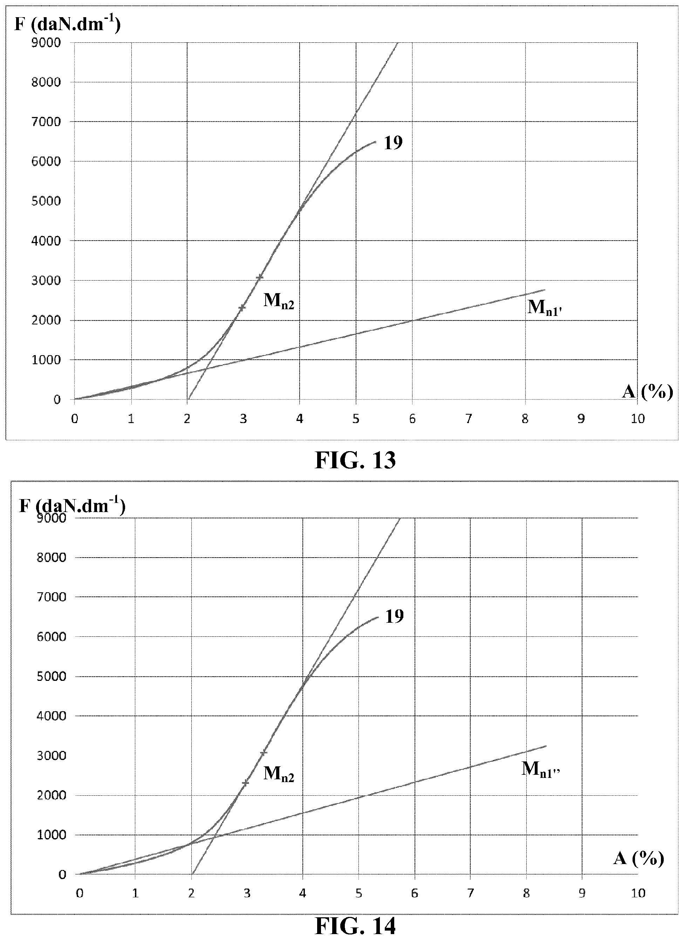

En référence à la figure 13 sur laquelle on a tracé une courbe force-allongement équivalente de la nappe de frettage 19 en tractionnant un câble rempli 51 dans les conditions de la norme ASTM D2969-04 de 2014 et en multipliant le résultat par la densité d, la nappe de frettage 19 présente un module M_{n1'} défini par M_{n1'}=500/Aₙ₅₀₀ avec Aₙ₅₀₀ étant l'allongement équivalent, exprimé en %, de la nappe de frettage 19 sous un effort de 500 daN.dm⁻¹. M_{n1'} est tel que 100 daN.mm⁻¹ ≤ M_{n1'} ≤ 600 daN.mm⁻¹. Par ailleurs, on a avantageusement 125 daN.mm⁻¹ ≤ M_{n1'}, de préférence 150 daN.mm⁻¹ ≤ M_{n1'}, On a également avantageusement M_{n1'} ≤ 500 daN.mm⁻¹, de préférence M_{n1'} ≤ 400 daN.mm⁻¹. Ici, M_{n1'}=331 daN.mm⁻¹.

En référence à la figure 14 sur laquelle on a tracé une courbe force-allongement équivalente de la nappe de frettage 19 en tractionnant un câble rempli 51 dans les conditions de la norme ASTM D2969-04 de 2014 et en multipliant le résultat par la densité d, la nappe de frettage 19 présente un module M_{n1"} défini par M_{n1"}=750/Aₙ₇₅₀ avec Aₙ₇₅₀ étant l'allongement équivalent, exprimé en %, de la nappe de frettage 19 sous un effort de 750 daN.dm⁻¹. M_{n1"} est tel que 100 daN.mm⁻¹ ≤ Mn1" ≤ 600 daN.mm⁻¹. Par ailleurs, on a avantageusement 125 daN.mm⁻¹ ≤ M_{n1"}, de préférence 150 daN.mm⁻¹ ≤ M_{n1"}. On a également avantageusement M_{n1"} ≤ 500 daN.mm⁻¹, de préférence M_{n1"} ≤ 400 daN.mm⁻¹. Ici, M_{n1"}=388 daN.mm⁻¹.

### PROCEDE DE FABRICATION DU PNEUMATIQUE SELON LE PREMIER MODE DE REALISATION

On fabrique le pneumatique 10 selon le procédé décrit ci-dessous.

Tout d'abord, on fabrique les nappes de travail 16, 18 et la nappe de carcasse 34 en agençant parallèlement les uns aux autres les éléments filaires de renfort de chaque nappe et en les noyant, par exemple par calandrage, dans une composition non réticulée comprenant au moins un élastomère, la composition étant destinée à former une matrice élastomérique une fois réticulée. On obtient une nappe dite droite, dans laquelle les éléments filaires de renfort de la nappe sont parallèles les uns aux autres et sont parallèles à la direction principale de la nappe. Puis, si nécessaire, on découpe des portions de chaque nappe droite selon un angle de découpe et on aboute ces portions les unes aux autres de façon à obtenir une nappe dite à angle, dans laquelle les éléments filaires de renfort de la nappe sont parallèles les uns aux autres et forment un angle avec la direction principale de la nappe égal à l'angle de découpe.

Puis, on met en oeuvre un procédé d'assemblage, durant lequel on agence l'armature de frettage 17, ici la nappe de frettage 19, radialement à l'extérieur de l'armature de travail 15. En l'espèce, dans une première variante, on fabrique une bandelette de largeur B significativement inférieure à L_{F}, dans laquelle l'élément filaire de renfort de frettage 48 est formé par un câble 51 noyé dans la matrice élastomérique à base de la composition élastomérique non réticulée de la bandelette et on enroule hélicoïdalement la bandelette sur plusieurs tours de façon à obtenir la largeur axiale L_{F}. Dans une deuxième variante, on fabrique la nappe de frettage 19 présentant une largeur L_{F} d'une façon analogue aux nappes de carcasse et de travail et on enroule sur un tour la nappe de frettage 19 sur l'armature de travail 15. Dans une troisième variante, on enroule l'élément filaire de renfort de frettage 48 formé par le câble 50 radialement à l'extérieur de la nappe de travail 18, puis on dépose dessus une couche à base de la composition élastomérique non réticulée de la nappe de frettage 19 et dans laquelle sera noyé l'élément filaire de renfort de frettage 48 formé par le câble 50 lors de la cuisson du pneumatique. Dans les trois variantes, on noie l'élément filaire de renfort adhérisé 48 formé par le câble 50 dans la matrice à base de la composition élastomérique non réticulée pour former, à l'issue du procédé de fabrication du pneumatique, la nappe de frettage 19 comprenant l'élément filaire de renfort de frettage 48 obtenu par noyage du câble 50 dans une matrice élastomérique à base de la composition élastomérique de la nappe de frettage 19. L'élément filaire de renfort de frettage est alors formé par la câble rempli 51.

Puis, on agence l'armature de carcasse, l'armature de travail, l'armature de frettage et la bande de roulement de façon à former une ébauche de pneumatique dans laquelle les compositions des matrices élastomériques ne sont pas encore réticulées et sont dans un état cru.

Ensuite, on conforme l'ébauche de pneumatique de façon à agrandir au moins radialement l'ébauche de pneumatique. Enfin, on réticule les compositions de l'ébauche de pneumatique conformée, par exemple par cuisson ou vulcanisation, afin d'obtenir le pneumatique dans lequel chaque composition présente un état réticulé et forme une matrice élastomérique à base de la composition.

### PNEUMATIQUE SELON UN DEUXIEME MODE DE REALISATION DE L'INVENTION

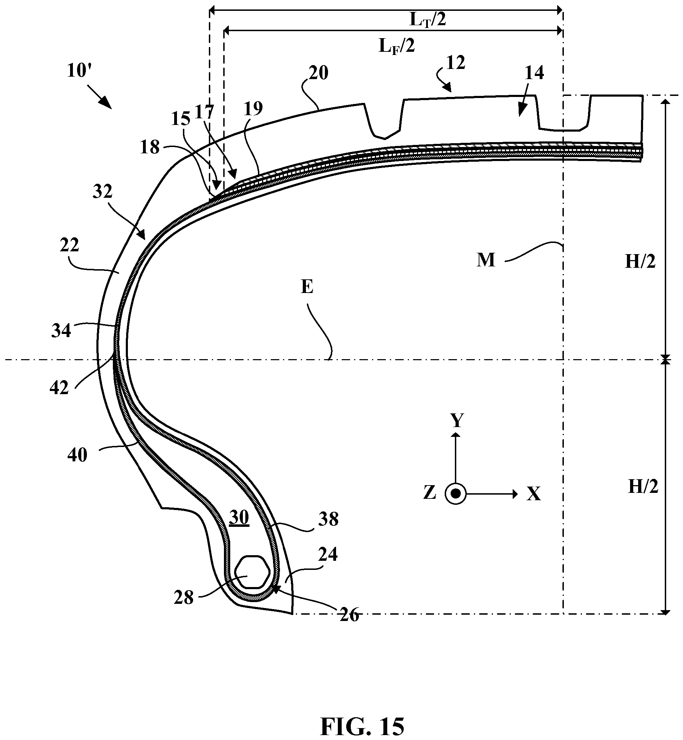

On a représenté sur les figures 15 à 17 un pneumatique 10' selon un deuxième mode de réalisation de l'invention. Sur ces figures, les éléments analogues à ceux du pneumatique 10 selon le premier mode de réalisation sont désignés par des références identiques.

Le pneumatique 10' est sensiblement de révolution autour d'un axe sensiblement parallèle à la direction axiale X. Le pneumatique 10' est ici destiné à un véhicule de tourisme.

Le pneumatique 10' comporte un sommet 12 comprenant une bande de roulement 20 et une armature de sommet 14 s'étendant dans le sommet 12 selon la direction circonférentielle Z.

L'armature de sommet 14 comprend une armature de travail 15 comprenant une unique nappe de travail 18 et une armature de frettage 17 comprenant une unique nappe de frettage 19. Ici, l'armature de travail 15 est constituée de la nappe de travail 18 et l'armature de frettage 17 est constituée de la nappe de frettage 19. L'armature de sommet 14 est constituée par l'armature de travail 15 et l'armature de frettage 17.

L'armature de sommet 14 est surmontée de la bande de roulement 20. Ici, l'armature de frettage 17, ici la nappe de frettage 19, est radialement intercalée entre l'armature de travail 15 et la bande de roulement 20.

Le pneumatique 10' comprend deux flancs 22 prolongeant le sommet 12 radialement vers l'intérieur. Le pneumatique 10' comporte en outre deux bourrelets 24 radialement intérieurs aux flancs 22 et comportant chacun une structure annulaire de renfort 26, en l'occurrence une tringle 28, surmontée d'un masse de gomme 30 de bourrage, ainsi qu'une armature de carcasse radiale 32. L'armature de sommet 14 est située radialement entre l'armature de carcasse 32 et la bande de roulement 20. Chaque flanc 22 relie chaque bourrelet 24 au sommet 12.

L'armature de carcasse 32 comporte une unique nappe de carcasse 34. Ici, l'armature de carcasse 32 est constituée de la nappe de carcasse 34. L'armature de carcasse 32 est ancrée dans chacun des bourrelets 24 par un retournement autour de la tringle 28 de manière à former dans chaque bourrelet 24 un brin aller 38 s'étendant depuis les bourrelets 24 dans les flancs 22 et dans le sommet 12, et un brin retour 40, l'extrémité radialement extérieure 42 du brin retour 40 étant radialement à l'extérieur de la structure annulaire de renfort 26. L'armature de carcasse 32 s'étend ainsi depuis les bourrelets 24 à travers les flancs 22 jusque dans le sommet 12. Dans ce mode de réalisation, l'armature de carcasse 32 s'étend également axialement au travers du sommet 12. L'armature de sommet 14 est radialement intercalée entre l'armature de carcasse 32 et la bande de roulement 20.

Chaque nappe de travail 18, de frettage 19 et de carcasse 34 comprend une matrice élastomérique dans laquelle sont noyés un ou des éléments de renfort de la nappe correspondante.

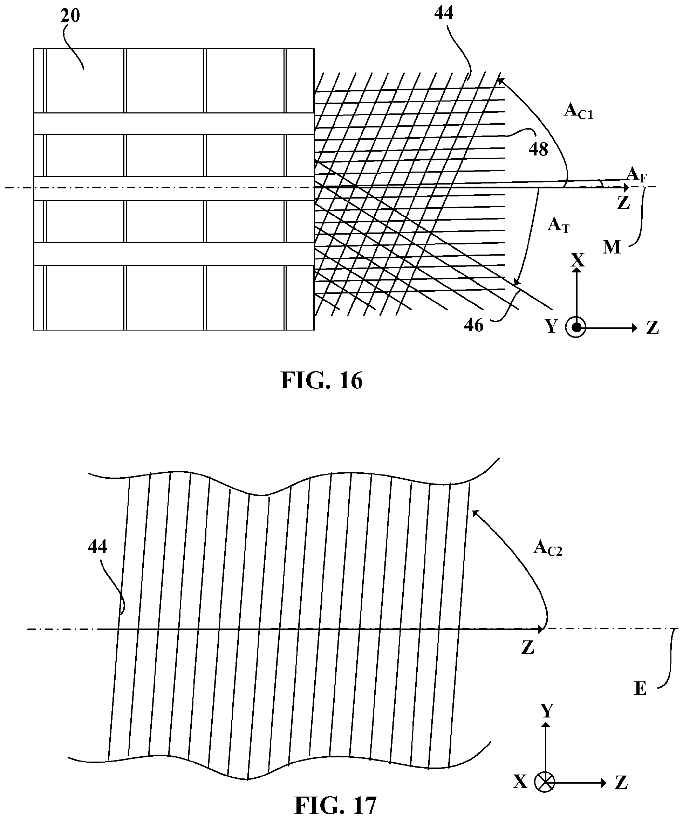

En référence à la figure 16, l'unique nappe de carcasse 34 comprend des éléments filaires de renfort de carcasse 44. Chaque élément filaire de renfort de carcasse 44 s'étend axialement d'un bourrelet 24 du pneumatique 10 à l'autre bourrelet 24 du pneumatique 10. Chaque élément filaire de renfort de carcasse 44 fait un angle A_{C1} supérieur ou égal à 55°, de préférence allant de 55° à 80° et plus préférentiellement de 60° à 70°, avec la direction circonférentielle Z du pneumatique 10 dans le plan médian M du pneumatique 10', autrement dit dans le sommet 12. En référence à la figure 17 qui est une vue simplifiée où, compte tenu de l'échelle, tous les éléments filaires de renfort de carcasse 44 sont représentés parallèles les uns aux autres, chaque élément filaire de renfort de carcasse 44 fait un angle A_{C2} supérieur ou égal à 85° avec la direction circonférentielle Z du pneumatique 10' dans le plan circonférentiel équatorial E du pneumatique 10', autrement dit dans chaque flanc 22.

Dans cet exemple, on prend comme convention qu'un angle orienté dans le sens anti-horaire à partir de la droite de référence, ici la direction circonférentielle Z, est de signe positif et qu'un angle orienté dans le sens horaire à partir de la droite de référence, ici la direction circonférentielle Z, est de signe négatif. En l'espèce, A_{C1}=+67° et A_{C2}=+90°.

En référence à la figure 16, l'unique nappe de travail 18 comprend plusieurs éléments filaires de renfort de travail 46. Les éléments filaires de renfort de travail 46 sont agencés côte à côte sensiblement parallèlement les uns aux autres. Chaque élément filaire de renfort de travail 46 s'étend axialement d'une extrémité axiale de l'armature de travail 15 du pneumatique 10 à l'autre extrémité axiale de l'armature de travail 15 du pneumatique 10. Chaque élément filaire de renfort de travail 46 fait un angle A_{T} supérieur ou égal à 10°, de préférence allant de 30° à 50° et plus préférentiellement de 35° à 45° avec la direction circonférentielle Z du pneumatique 10' dans le plan médian M. Compte tenu de l'orientation définie précédemment, A_{T}=-40

L'unique nappe de frettage 19 comprend au moins un élément filaire de renfort de frettage 48. En l'espèce, la nappe de frettage 19 comprend un unique élément filaire de renfort de frettage 48 enroulé continûment sur une largeur axiale L_{F} du sommet 12 du pneumatique 10' de sorte que la distance axiale entre deux enroulements adjacents soit égale à 1,3 mm. Avantageusement, la largeur axiale L_{F} est inférieure à la largeur L_{T} de la nappe de travail 18. L'élément filaire de renfort de frettage 48 fait un angle A_{F} strictement inférieur à 10° avec la direction circonférentielle Z du pneumatique 10', de préférence inférieur ou égal à 7°, et plus préférentiellement inférieur ou égal à 5°. En l'espèce, A_{F}=+5°.

La nappe de frettage 19 présente un module sécant en traction égal à 430 daN.mm⁻¹ pour une force égale à 15% de la force à rupture de la nappe de frettage. La force à rupture de la nappe de frettage est égale à 69 daN.mm⁻¹.

On notera que les éléments filaires de renfort de carcasse 44, de travail 46 et de frettage 48 sont agencés, dans le sommet 12, de façon à définir, en projection sur le plan circonférentiel équatorial E selon la direction radiale du pneumatique, un maillage triangulaire. Ici, l'angle A_{F} et le fait que l'orientation de l'angle A_{T} et l'orientation de l'angle A_{C1} soient opposées par rapport à la direction circonférentielle Z du pneumatique 10', permettent d'obtenir ce maillage triangulaire.

Chaque élément filaire de renfort de carcasse 44 est un élément filaire textile et comprend classiquement deux brins multifilamentaires, chaque brin multifilamentaire étant constitué d'un filé de monofilaments de polyesters, ici de PET, ces deux brins multifilamentaires étant surtordus individuellement à 240 tours.m⁻¹ dans un sens puis retordus ensemble à 240 tours.m⁻¹ dans le sens opposé. Ces deux brins multifilamentaires sont enroulés en hélice l'un autour de l'autre. Chacun de ces brins multifilamentaires présente un titre égal à 220 tex.

Chaque élément filaire de renfort de travail 46 est un élément filaire métallique et est ici un assemblage de deux monofilaments en acier présentant chacun un diamètre égal à 0,30 mm, les deux monofilaments en acier étant enroulés l'un avec l'autre au pas de 14 mm.

L'élément filaire de renfort de frettage 48 est constitué par un câble rempli 51 tel que décrit ci-dessus. L'élément filaire de renfort de frettage 48 est ainsi obtenu par noyage du câble 50 dans une matrice élastomérique à base de la composition élastomérique de la nappe de frettage 19. La nappe de frettage 19 du pneumatique 10' présente les mêmes propriétés, notamment les caractéristiques relatives à Mₙ₁, Mₙ₂, Mₙ₂/ Mₙ₁, M_{n1'} et M_{n1"}, Fₙₜ, d, MI, Mv, Rm que la nappe de frettage 19 du pneumatique 10.

On fabrique le pneumatique 10' en mettant en oeuvre un procédé similaire au procédé de fabrication du pneumatique 10. Afin de former le maillage triangulaire du pneumatique 10', on met en oeuvre un procédé d'assemblage spécifique tel que décrit dans EP1623819 ou bien dans FR1413102.

### ESSAIS COMPARATIFS

On a rassemblé dans le tableau 1 les données relatives au câble 50 et au câble rempli 51. On a également rassemblé dans le tableau 1 les données relatives à :
- un câble C1 formé par le câble 3.26 décrit dans WO2016/16605, ce câble C1 étant non conforme à l'invention et obtenu en mettant en oeuvre un procédé classique d'assemblage par retordage de l'état de la technique ;
- un élément filaire de renfort de frettage textile C2 de l'état de la technique formé par un assemblage équilibré en torsions de deux brins de nylon de 140 tex chacun, enroulés en hélice l'un autour de l'autre à 250 tours par mètre ; et
- un élément filaire de renfort de frettage textile C3 de l'état de la technique formé par un assemblage équilibré en torsions d'un premier brin d'aramide de 330 tex, d'un deuxième brin d'aramide de 330 tex et d'un troisième brin de nylon de 188 tex, enroulés à 270 tours par mètre.

Dans le tableau 1, la mention « NS » signifie que la grandeur n'a pas de sens physique pour l'élément filaire de renfort de frettage textile considéré.

Pour les éléments filaires de renfort de frettage textiles C2 et C3, on définit la masse linéique comme la somme des titres (ou densité linéique) de chaque brin, chaque titre étant déterminé selon la norme ASTM D885/D 885M - 10a de 2014. La masse volumique est déterminée par la masse volumique des brins, pondérée en moyenne par les titres de chaque brin dans le cas de l'élément C3, avec environ 1,44 g.cm⁻³ pour l'aramide et 1,14 g.cm⁻³ pour le nylon. La force théorique maximale Fₜ est définie comme la force à rupture de chaque élément filaire de renfort de frettage textile déterminée selon la norme ASTM D885/D 885M - 10a de 2014. Les autres caractéristiques sont déterminées de façon identique ou analogue.

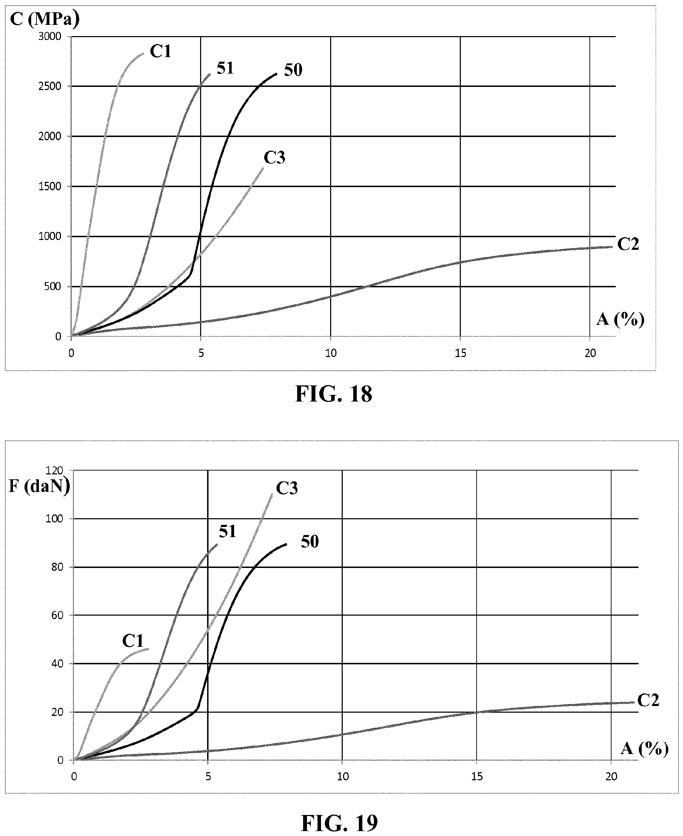

Les courbes forces-allongements de ces câbles et éléments filaires de renfort de frettage textiles sont rassemblés sur les figures 18 et 19.

On a rassemblé dans le tableau 2 les données relatives au pneumatique 10' selon l'invention. On a également rassemblé dans le tableau 2 les données relatives à :
- un pneumatique P1 identique au pneumatique 10' à l'exception de la nappe de frettage qui comprend l'élément de renfort de frettage C1 ;
- un pneumatique P2 identique au pneumatique 10' à l'exception de la nappe de frettage qui comprend l'élément de renfort de frettage C2 ; et
- un pneumatique P3 identique au pneumatique 10' à l'exception de la nappe de frettage qui comprend l'élément de renfort de frettage C3.

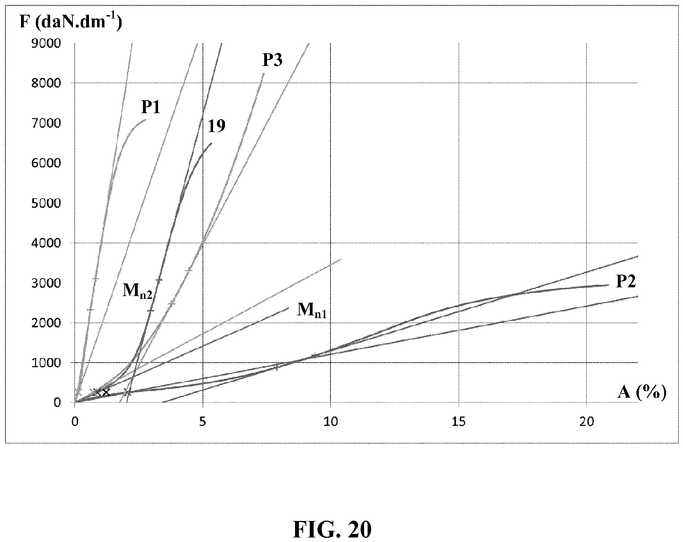

Les courbes forces-allongements des nappes de frettage de ces pneumatiques sont rassemblées sur la figure 20.

On a rassemblé dans le tableau 3 les résultats des tests visant à évaluer le bruit émis par le pneumatique et le frettage de chaque pneumatique.

### Bruit

Le bruit est évalué par simulation pour des raisons de coûts et de rapidité. On dispose de plusieurs pneumatiques testés réellement dans les conditions de la norme ISO13325:2003 et on établit une relation sous la forme d'un abaque entre la puissance acoustique rayonnée théorique de chacun de ces pneumatiques et le bruit mesuré réellement, abaque tenant notamment compte de l'influence de l'étape de conformation. Puis, on détermine la puissance acoustique rayonnée théorique de chaque pneumatique P1, P2, P3 et 10' et, en utilisant l'abaque construit précédemment, on détermine la valeur du bruit émis. On a présenté les résultats en prenant comme bruit de référence le bruit émis par le pneumatique P1 et on a indiqué le gain en bruit de chaque pneumatique testé par rapport au pneumatique P1.

### Frettage

Comme déjà rappelé ci-dessus, la capacité de frettage d'un élément filaire de renfort de frettage ou d'une nappe de frettage comprenant cet élément filaire de renfort de frettage est donnée par la valeur du module M₂, M_{c2} et Mₙ₂. Plus la valeur de ce module M₂, M_{c2} et Mₙ₂ est élevée, meilleur est le frettage du pneumatique.

### Coût

Le coût est l'estimation du coût de fabrication d'une nappe de frettage en fonction du coût moyen des matières premières mais également du coût associé au procédé de fabrication de la nappe de frettage et donc notamment du procédé de fabrication de chaque élément filaire de renfort. Le coût est donné par référence à la nappe de frettage du pneumatique P2 qui est la moins coûteuse.

Le pneumatique P1 présente la nappe ayant la capacité de frettage la plus élevée. Néanmoins, en raison d'un module M₁, M_{c1} et Mₙ₁ très élevé, le pneumatique P1 est très bruyant.

Le pneumatique P2 présente une nappe de frettage aux propriétés de frettage très faibles ne permettant pas un frettage efficace du pneumatique sous de fortes sollicitations. L'élément filaire de renfort textile C2 est particulièrement inapproprié pour un pneumatique dans lequel l'armature de travail est constituée d'une unique nappe de travail et dans lequel l'armature de frettage reprend une partie importante des efforts. Dans le cas d'un pneumatique dans lequel l'armature de travail est constituée de deux nappes de travail, l'armature de frettage n'aurait pas à reprendre cette partie importante d'effort et l'élément filaire de renfort textile C2 pourrait donc être plus approprié mais sans pour autant apporter une capacité de frettage suffisante dans le cas de sollicitations très élevées.

Le pneumatique P3 présente une nappe de frettage aux propriétés supérieures à celles du pneumatique P2 et un niveau sonore inférieur au pneumatique P1. Même si la capacité de frettage est suffisante, elle n'en reste pas moins inférieure à celle des pneumatiques P1 et 10'. De plus, le pneumatique P3 utilise des éléments filaires comprenant de l'aramide ce qui en fait en élément filaire bien plus coûteux que les éléments filaires métalliques des pneumatiques P1 et 10'.

Le pneumatique 10' présente, conformément à l'invention, une nappe de frettage à la fois performante (seule le pneumatique P1 présente une capacité de frettage supérieure), peu bruyante et très bon marché par rapport à la nappe de frettage du pneumatique P3. Les éléments filaires de renfort 50 et 51 sont, de par leur excellente capacité de frettage, particulièrement appropriés pour un pneumatique dans lequel l'armature de travail est constituée d'une unique nappe de travail et dans lequel l'armature de frettage reprend une partie importante des efforts que reprendraient les deux nappes de travail d'un pneumatique comprenant une armature de travail constitué de deux nappes de travail. Les éléments filaires de renfort 50 et 51 sont aussi particulièrement appropriés dans le cas d'un pneumatique dans lequel l'armature de travail est constituée de deux nappes de travail et dans lequel on parviendrait ainsi à renforcer très significativement la capacité de frettage du pneumatique tout en réduisant le bruit émis.

**Tableau 1**

| | **A₁₀₀ (%)** | **A₂₀₀ (%)** | **A₃₀₀ (%)** | **F₄₀ (daN)** | **F₃₀ (daN)** | **A₄₀ (%)** | **A₃₀ (%)** | **MI (g.m⁻¹)** | **Mv (g.cm⁻³)** | **Rm (MPa)** | **F**ₜ **(daN)** | **M₁ (GPa)** | **M₂ (GPa)** | **M₁, (GPa)** | **M_{1"} (GPa)** | **M₂/ M₁** | **As** |
|---|---|---|---|---|---|---|---|---|---|---|---|---|---|---|---|---|---|
| **C1** | 0,13 | 0,21 | 0,27 | 20,2 | 15,1 | 0,80 | 0,61 | 1270 | 7,8 | 3100 | 50 | 75 | 162 | 93,5 | 110 | 2,2 | <1% |
| **C2** | 3,30 | 6,50 | 8,46 | 9,6 | 7,2 | 9,39 | 7,90 | 305 | 1,14 | / | 24 | 3,0 | 6,0 | 3,1 | 3,5 | 2,0 | NS |
| **C3** | 1,26 | 2,15 | 2,78 | 44,1 | 33,1 | 4,46 | 3,78 | 900 | 1,37 | / | 110 | 7,9 | 24,8 | 9,3 | 10,8 | 3,1 | NS |
| **50** | 1,22 | 2,21 | 2,95 | 42,3 | 31,7 | 5,16 | 4,88 | 2660 | 7,8 | 3100 | 106 | 8,2 | 110 | 9,1 | 10,2 | 13,4 | 4,8% |

| | **A₁₀₀ (%)** | **A₂₀₀ (%)** | **A₃₀₀ (%)** | **F₄₀ (daN)** | **F₃₀ (daN)** | **A₄₀ (%)** | **A₃₀ (%)** | **MI (g.m⁻¹)** | **Mv (g.cm⁻³)** | **Rm (MPa)** | **Fₜ (daN)** | **M_{c1} (GPa)** | **M_{c2} (GPa)** | **M_{c1'} (GPa)** | **M_{c1"} (GPa)** | **M_{c2}/ M_{c1}** | **Asc** |
|---|---|---|---|---|---|---|---|---|---|---|---|---|---|---|---|---|---|
| **51** | 0,88 | 1,50 | 1,92 | 42,3 | 31,7 | 3,29 | 2,97 | 2660 | 7,8 | 3100 | 106 | 11,4 | 97,5 | 13,3 | 15,6 | 8,5 | 3,3% |

**Tableau 2**

| | **Aₙ₂₅₀ (%)** | **Aₙ₅₀₀ (%)** | **Aₙ₇₅₀ (%)** | **Fₙ₄₀ (daN. dm⁻¹)** | **Fₙ₃₀ (daN. dm⁻¹)** | **Aₙ₄₀ (%)** | **Aₙ₃₀ (%)** | **MI (g.m⁻¹)** | **Mv (g.cm⁻³)** | **Rm (MPa)** | **Fₙₜ (daN. dm⁻¹)** | **Mn1 (daN. mm⁻¹)** | **Mₙ₂ (daN. mm⁻¹)** | **M_{n1'} (daN. mm⁻¹)** | **M_{n1"} (daN. mm⁻¹)** | **Mₙ₂/ Mn1** | **d (dm⁻¹)** |
|---|---|---|---|---|---|---|---|---|---|---|---|---|---|---|---|---|---|
| **P1** | 0,2 | 0,2 | 0,3 | 3107 | 2330 | 0,80 | 0,61 | 1270 | 7,8 | 3100 | 6142 | 1630 | 3516 | 2339 | 2764 | 2,2 | 133 |
| **P2** | 2,1 | 5,2 | 7,1 | 1179 | 884 | 9,39 | 3,78 | 305 | 1,14 | / | 2946 | 121 | 197 | 95 | 105 | 1,6 | 123 |
| **P3** | 0,7 | 1,3 | 1,8 | 3299 | 2474 | 4,46 | 7,90 | 900 | 1,37 | / | 8248 | 346 | 1214 | 389 | 421 | 3,5 | 75 |
| **10'** | 0,9 | 1,5 | 1,9 | 3075 | 2307 | 3,29 | 2,97 | 2660 | 7,8 | 3100 | 6500 | 283 | 2418 | 331 | 388 | 8,5 | 73 |

**Tableau 3**

| | **Gain bruit** | **Capacité de Frettage** | **Coût** |
|---|---|---|---|
| **P1** | 0 dB | Excellente | ++ |
| **P2** | 4,7 dB | Médiocre | + |
| **P3** | 3,8 dB | Bonne | +++++ |
| **10'** | 3,8 dB | Très bonne | ++ |

## Revendications

1. Câble (50) comprenant une unique couche (52) d'éléments filaires métalliques (54) enroulés en hélice, chaque élément filaire métallique (54) de la couche (52) décrivant, lorsque le câble (50) s'étend selon une direction sensiblement rectiligne, une trajectoire en forme d'hélice autour d'un axe principal (A) sensiblement parallèle à la direction sensiblement rectiligne, de sorte que, dans un plan de coupe sensiblement perpendiculaire à l'axe principal (A), la distance entre le centre de chaque élément filaire métallique (54) de la couche (52) et l'axe principal (A) est sensiblement constante et égale pour tous les éléments filaires métalliques (54) de la couche (52), **caractérisé en ce que** :
- 5 GPa ≤ M₁ ≤ 16 GPa, et
- 40 GPa ≤ M₂ ≤ 160 GPa, et
- 3 ≤ M₂/M₁,
M₁ et M₂ étant exprimés en GPa avec :
- M₁=10 / A₁₀₀ avec :
- A₁₀₀ étant l'allongement, exprimé en %, du câble sous un effort de 100 MPa, et
- M₂=[(F₄₀-F₃₀) / (A₄₀-A₃₀)] / S avec :
- S étant la section, exprimée en mm², telle que S=MI /Mv avec :
▪ Ml étant la masse linéique des éléments filaires métalliques (54), exprimée en g par m de câble,
▪ Mv étant la masse volumique des éléments filaires métalliques (54), exprimée en g par cm³,
- F₄₀ étant la force, exprimée en daN, égale à 40 % de la force théorique maximale Fₜ du câble,
- F₃₀ étant la force, exprimée en daN, égale à 30 % de la force théorique maximale Fₜ du câble,
- A₄₀ étant l'allongement du câble, exprimé en %, à 40% de la force théorique maximale Fₜ du câble,
- A₃₀ étant l'allongement du câble, exprimé en %, à 30% de la force théorique maximale Fₜ du câble,
avec Fₜ= Ml x Rm /Mv, exprimée en daN, avec Rm étant la résistance mécanique à rupture moyenne, exprimée en MPa, des éléments filaires métalliques (54) constituant la couche unique (52).

2. Câble (50) selon la revendication précédente, dans lequel 6 ≤ M₂/M₁, de préférence 8 ≤ M₂/M₁ et plus préférentiellement 10 ≤ M₂/M₁.

3. Câble (50) selon l'une quelconque des revendications précédentes, dans lequel M₂/M₁ ≤ 19, de préférence M₂/M₁ ≤ 17 et plus préférentiellement M₂/M₁ ≤ 15.

4. Câble (50) selon l'une quelconque des revendications précédentes, présentant un allongement structural As tel que As ≥ 1%, de préférence As ≥ 2,5%, plus préférentiellement As ≥ 3% et encore plus préférentiellement 3% ≤ As ≤ 5,5%, l'allongement structural As étant déterminé en appliquant la norme ASTM D2969-04 de 2014 au câble de façon à obtenir une courbe force-allongement, l'allongement structural As étant égal à l'allongement, en %, correspondant à la pente maximale de la courbe force-allongement.

5. Câble rempli (51) comprenant une unique couche (52) d'éléments filaires métalliques (54) enroulés en hélice, chaque élément filaire métallique (54) de la couche (52) décrivant, lorsque le câble (50) s'étend selon une direction sensiblement rectiligne, une trajectoire en forme d'hélice autour d'un axe principal (A) sensiblement parallèle à la direction sensiblement rectiligne, de sorte que, dans un plan de coupe sensiblement perpendiculaire à l'axe principal (A), la distance entre le centre de chaque élément filaire métallique (54) de la couche (52) et l'axe principal (A) est sensiblement constante et égale pour tous les éléments filaires métalliques (54) de la couche (52), les éléments filaires métalliques (54) définissant une voûte interne (58) du câble (51), le câble rempli (51) comprenant un matériau de remplissage (53) de la voûte interne (58) à base d'une composition élastomérique et située dans la voûte interne (58) du câble rempli (51), **caractérisé en ce que** :
- 5 GPa ≤ M_{c1} ≤ 30 GPa, et
- 40 GPa ≤ M_{c2} ≤ 150 GPa, et
- 3 ≤ M_{c2}/M_{c1},
M_{c1} et M_{c2} étant exprimés en GPa avec :
- M_{c1}=10 / A_{c100} avec :
- A_{c100} étant l'allongement, exprimé en %, du câble rempli (51) sous un effort de 100 MPa, et
- M_{c2}=[(F_{c40}-F_{c30}) / (A_{c40}-A_{c30})] / S avec :
- S étant la section, exprimée en mm², telle que S=MI /Mv avec :
▪ Ml étant la masse linéique des éléments filaires métalliques (54), exprimée en g par m de câble,
▪ Mv étant la masse volumique des éléments filaires métalliques (54), exprimée en g par cm³,
- F_{c40} étant la force, exprimée en daN, égale à 40 % de la force théorique maximale F_{ct} du câble dépourvu du matériau de remplissage,
- F_{c30} étant la force, exprimée en daN, égale à 30 % de la force théorique maximale F_{ct} du câble dépourvu du matériau de remplissage,
- A_{c40} étant l'allongement du câble rempli, exprimé en %, à 40% de la force théorique maximale F_{ct} du câble dépourvu du matériau de remplissage,
- A_{c30} étant l'allongement du câble rempli, exprimé en %, à 30% de la force théorique maximale F_{ct} du câble dépourvu du matériau de remplissage,
avec F_{ct}=MI x Rm / Mv, exprimée en daN, avec Rm étant la résistance mécanique à rupture moyenne, exprimée en MPa, des éléments filaires métalliques (54) constituant la couche unique (52).

6. Câble rempli (51) selon la revendications 5, dans lequel 4 ≤ M_{c2}/M_{c1}, de préférence 5 ≤ M_{c2}/M_{c1} et plus préférentiellement 6 ≤ M_{c2}/M_{c1}.

7. Câble rempli (51) selon la revendication 5 ou 6, dans lequel M_{c2}/M_{c1} ≤ 12, de préférence M_{c2}/M_{c1} ≤ 11 et plus préférentiellement M_{c2}/M_{c1} ≤ 10.

8. Câble rempli (51) selon l'une quelconque des revendications 5 à 7, présentant un allongement structural Asc tel que Asc ≥ 1%, de préférence Asc ≥ 1,5%, plus préférentiellement Asc ≥ 2% et encore plus préférentiellement 2% ≤ Asc ≤ 4%, l'allongement structural Asc étant déterminé en appliquant la norme ASTM D2969-04 de 2014 au câble rempli de façon à obtenir une courbe force-allongement, l'allongement structural Asc étant égal à l'allongement, en %, correspondant à la pente maximale de la courbe force-allongement..

9. Pneumatique (10, 10') comprenant un sommet (12) comprenant une bande de roulement (20) et une armature de sommet (14), deux flancs (22), deux bourrelets (24), chaque flanc (22) reliant chaque bourrelet (24) au sommet (12), l'armature de sommet (14) s'étendant dans le sommet (12) selon une direction circonférentielle (Z) du pneumatique (10), le pneumatique (10) comprenant une armature de carcasse (32) ancrée dans chacun des bourrelets (24) et s'étendant dans les flancs (22) et dans le sommet (12), l'armature de sommet (14) étant radialement intercalée entre l'armature de carcasse (32) et la bande de roulement (20),
l'armature de sommet (14) comprenant une armature de frettage (17) comprenant au moins une nappe de frettage (19) comprenant au moins un élément filaire de renfort de frettage (48) noyé dans une matrice élastomérique à base d'une composition élastomérique et une armature de travail (15) comprenant au moins une nappe de travail (16, 18) comprenant des éléments filaires de renfort de travail (46, 47),
l'armature de carcasse (32) comprenant au moins une nappe de carcasse (34) comprenant des éléments filaires de renfort de carcasse (44),
au moins les éléments filaires de renfort de travail (46, 47) et les éléments filaires de renfort de carcasse (44) étant agencés de façon à définir, en projection sur le plan circonférentiel équatorial (E) selon la direction radiale (Y) du pneumatique, un maillage triangulaire, **caractérisé en ce que** le ou chaque élément filaire de renfort de frettage (48) est constitué par un câble rempli (51) comprenant une unique couche d'éléments filaires métalliques (54) enroulés en hélice, les éléments filaires métalliques (54) définissant une voûte interne (58) du câble rempli (51), le câble rempli (51) comprenant un matériau de remplissage (53) de la voûte interne (58) à base de la composition élastomérique et située dans la voûte interne (58) du câble rempli (51), **caractérisé en ce que** le câble rempli (51) est, après extraction du pneumatique (10 ; 10'), selon l'une quelconque des revendications 5 à 8.

10. Pneumatique (10 ; 10') comprenant un sommet (12) comprenant une bande de roulement (20) et une armature de sommet (14), deux flancs (22), deux bourrelets (24), chaque flanc (22) reliant chaque bourrelet (24) au sommet (12), l'armature de sommet (14) s'étendant dans le sommet (12) selon une direction circonférentielle (Z) du pneumatique (10), le pneumatique (10) comprenant une armature de carcasse (32) ancrée dans chacun des bourrelets (24) et s'étendant dans les flancs (22) et dans le sommet (12), l'armature de sommet (14) étant radialement intercalée entre l'armature de carcasse (32) et la bande de roulement (20),
l'armature de sommet (14) comprenant une armature de frettage (17) comprenant au moins une nappe de frettage (19) comprenant au moins un élément filaire de renfort de frettage (48) noyé dans une matrice élastomérique à base d'une composition élastomérique et une armature de travail (15) comprenant au moins une nappe de travail (16, 18) comprenant des éléments filaires de renfort de travail (46, 47),
l'armature de carcasse (32) comprenant au moins une nappe de carcasse (34) comprenant des éléments filaires de renfort de carcasse (44),
au moins les éléments filaires de renfort de travail (46, 47) et les éléments filaires de renfort de carcasse (44) étant agencés de façon à définir, en projection sur le plan circonférentiel équatorial (E) selon la direction radiale (Y) du pneumatique, un maillage triangulaire, le ou chaque élément filaire de renfort de frettage (48) est constitué par un câble rempli (51) comprenant une unique couche d'éléments filaires métalliques (54) enroulés en hélice, chaque élément filaire métallique (54) de la couche (52) décrivant, lorsque le câble (50) s'étend selon une direction sensiblement rectiligne, une trajectoire en forme d'hélice autour d'un axe principal (A) sensiblement parallèle à la direction sensiblement rectiligne, de sorte que, dans un plan de coupe sensiblement perpendiculaire à l'axe principal (A), la distance entre le centre de chaque élément filaire métallique (54) de la couche (52) et l'axe principal (A) est sensiblement constante et égale pour tous les éléments filaires métalliques (54) de la couche (52), les éléments filaires métalliques (54) définissant une voûte interne (58) du câble rempli (51), le câble rempli (51) comprenant un matériau de remplissage (53) de la voûte interne (58) à base de la composition élastomérique et située dans la voûte interne (58) du câble rempli (51), **caractérisé en ce que** la nappe de frettage (19) présente, après extraction du pneumatique (10 ; 10'), les caractéristiques suivantes :
- 100 daN.mm⁻¹ ≤ Mₙ₁ ≤ 600 daN.mm⁻¹, et
- 1000 daN.mm⁻¹ ≤ Mₙ₂ ≤ 4500 daN.mm⁻¹, et
- 3 ≤ Mₙ₂/Mₙ₁,
Mₙ₁ et Mₙ₂ étant exprimés en daN.mm⁻¹ avec
- Mₙ₁=250 / Aₙ₂₅₀ avec :
- Aₙ₂₅₀ étant l'allongement équivalent, exprimé en %, de la nappe de frettage (19) sous un effort de 250 daN.dm⁻¹, Aₙ₂₅₀ étant obtenu en divisant l'effort de 250 daN.dm⁻¹ par la densité d'éléments filaires de renfort de frettage (48) par décimètre de nappe de frettage (19) de façon à obtenir un effort unitaire, puis, en déterminant sur une courbe force-allongement obtenue en tractionnant le câble rempli (51) dans les conditions de la norme ASTM D2969-04 de 2014, l'allongement du câble rempli (51) sous cet effort unitaire, et
- Mₙ₂=[(Fₙ₄₀-Fₙ₃₀) / (Aₙ₄₀-Aₙ₃₀)] avec :
- Fₙ₄₀ étant la force, exprimée en daN.dm⁻¹, égale à 40 % de la force théorique maximale Fₙₜ de la nappe de frettage (19),
- Fₙ₃₀ étant la force, exprimée en daN.dm⁻¹, égale à 30 % de la force théorique maximale Fₙₜ de la nappe de frettage (19),
- Aₙ₄₀ étant l'allongement équivalent de la nappe de frettage, exprimé en %, à 40% de la force théorique maximale Fₙₜ de la nappe de frettage (19), Aₙ₄₀ étant obtenu en divisant 40% de la force théorique maximale Fₙₜ de la nappe de frettage (19) par la densité d d'éléments filaires de renfort de frettage (48) par décimètre de nappe de frettage (19) de façon à obtenir un effort unitaire à 40%, puis en déterminant sur une courbe force-allongement obtenue en tractionnant le câble rempli (51) dans les conditions de la norme ASTM D2969-04 de 2014, l'allongement du câble rempli (51) sous cet effort unitaire,
- Aₙ₃₀ étant l'allongement équivalent de la nappe de frettage, exprimé en %, à 30% de la force théorique maximale Fₙₜ de la nappe de frettage (19), Aₙ₃₀ étant obtenu en divisant 30% de la force théorique maximale Fₙₜ de la nappe de frettage (19) par la densité d d'éléments filaires de renfort de frettage (48) par décimètre de nappe de frettage (19) de façon à obtenir un effort unitaire à 30%, puis en déterminant sur une courbe force-allongement obtenue en tractionnant le câble rempli (51) dans les conditions de la norme ASTM D2969-04 de 2014, l'allongement du câble rempli (51) sous cet effort unitaire,
avec Fₙₜ= Ml x Rm x d / Mv, exprimée en daN.dm⁻¹, avec :
▪ Ml étant la masse linéique des éléments filaires métalliques (54), exprimée en g par m de câble,
▪ Mv étant la masse volumique des éléments filaires métalliques (54), exprimée en g par cm³,
▪ Rm étant la résistance mécanique à rupture moyenne, exprimée en MPa, des éléments filaires métalliques (54) constituant la couche unique (52), et
▪ d étant la densité du ou des éléments filaires de renfort de frettage dans la nappe de frettage (19), exprimée en nombre par dm de nappe de frettage (19).

11. Pneumatique (10 ; 10') selon la revendication 10, dans lequel 4 ≤ Mₙ₂/Mₙ₁, de préférence 5 ≤ Mₙ₂/Mₙ₁ et plus préférentiellement 6 ≤ Mₙ₂/Mₙ₁.

12. Pneumatique (10 ; 10') selon la revendication 10 ou 11, dans lequel Mₙ₂/Mₙ₁ ≤ 12, de préférence Mₙ₂/Mₙ₁ ≤ 11 et plus préférentiellement Mₙ₂/Mₙ₁ ≤ 10.

13. Pneumatique (10 ; 10') selon l'une quelconque des revendications 10 à 12, dans lequel l'armature de frettage comprend une unique nappe de frettage.

14. Pneumatique (10') selon l'une quelconque des revendications 10 à 13, dans lequel l'armature de travail comprend une unique nappe de travail.

15. Pneumatique (10') selon la revendication précédente, dans lequel le ou les éléments filaires de renfort de frettage (48), les éléments filaires de renfort de travail (46) et les éléments filaires de renfort de carcasse (44) sont agencés de façon à définir, en projection sur le plan circonférentiel équatorial (E) selon la direction radiale (Y) du pneumatique, un maillage triangulaire.

## Patentansprüche

1. Seil (50), umfassend eine einzelne Schicht (52) aus schraubenförmig gewickelten Metalldrahtelementen (54), wobei, wenn sich das Seil (50) in einer im Wesentlichen geradlinigen Richtung erstreckt, jedes Metalldrahtelement (54) der Schicht (52) eine schraubenförmige Bahn um eine Hauptachse (A), die zu der im Wesentlichen geradlinigen Richtung im Wesentlichen parallel ist, beschreibt, so dass in einer zur Hauptachse (A) im Wesentlichen senkrechten Schnittebene der Abstand zwischen der Mitte jedes Metalldrahtelements (54) der Schicht (52) und der Hauptachse (A) im Wesentlichen konstant und für alle Metalldrahtelemente (54) der Schicht (52) gleicht ist, **dadurch gekennzeichnet, dass**:
- 5 GPa ≤ M₁ ≤ 16 GPa und
- 40 GPa ≤ M₂ ≤ 160 GPa und
- 3 ≤ M₂/M₁,
wobei M₁ und M₂ in GPa ausgedrückt sind, wobei:
- M₁ = 10/A₁₀₀, wobei:
- A₁₀₀ die in % ausgedrückte Dehnung des Seils unter einer Belastung von 100 MPa ist, und
- M₂ = [ (F₄₀ - F₃₀) / (A₄₀ - A₃₀) ] /S, wobei:
- S der in mm² ausgedrückte Querschnitt ist, so dass S = Ml/Mv, wobei:
▪ Ml die in g pro m Seil ausgedrückte lineare Dichte der Metalldrahtelemente (54) ist,
▪ Mv die in g pro cm³ ausgedrückte Massendichte der Metalldrahtelemente (54) ist,
- F₄₀ die in daN ausgedrückte Kraft ist, die 40 % der theoretischen Maximalkraft Fₜ des Seils entspricht,
- F₃₀ die in daN ausgedrückte Kraft ist, die 30 % der theoretischen Maximalkraft Fₜ des Seils entspricht,
- A₄₀ die in % ausgedrückte Dehnung des Seils bei 40 % der theoretischen Maximalkraft Fₜ des Seils ist,
- A₃₀ die in % ausgedrückte Dehnung des Seils bei 30 % der theoretischen Maximalkraft Fₜ des Seils ist,
wobei Fₜ = Ml x Rm/Mv, ausgedrückt in daN, wobei Rm die in MPa ausgedrückte durchschnittliche mechanische Bruchfestigkeit der die einzelne Schicht (52) bildenden Metalldrahtelemente (54) ist.

2. Seil (50) nach dem vorangehenden Anspruch, wobei 6 ≤ M₂/M₁, vorzugsweise 8 ≤ M₂/M₁ und besonders vorzugsweise 10 ≤ M₂/M₁.

3. Seil (50) nach einem der vorangehenden Ansprüche, wobei M₂/M₁ ≤ 19, vorzugsweise M₂/M₁ ≤ 17 und besonders vorzugsweise M₂/M₁ ≤ 15.

4. Seil (50) nach einem der vorangehenden Ansprüche, mit einer strukturellen Dehnung As, die so ist, dass As ≥ 1 %, vorzugsweise As ≥ 2,5 %, besonders vorzugsweise As ≥ 3 % und ganz besonders vorzugsweise 3 % ≤ As ≤ 5,5 %, wobei die strukturelle Dehnung As durch Anwendung der Norm ASTM D2969-04 von 2014 auf das Seil bestimmt wird, um eine Kraft-Dehnungs-Kurve zu erhalten, wobei die strukturelle Dehnung As gleich der Dehnung in % ist, die der maximalen Steigung der Kraft-Dehnungs-Kurve entspricht.

5. Gefülltes Seil (51), umfassend eine einzelne Schicht (52) aus schraubenförmig gewickelten Metalldrahtelementen (54), wobei, wenn sich das Seil (50) in einer im Wesentlichen geradlinigen Richtung erstreckt, jedes Metalldrahtelement (54) der Schicht (52) eine schraubenförmige Bahn um eine Hauptachse (A), die zu der im Wesentlichen geradlinigen Richtung im Wesentlichen parallel ist, beschreibt, so dass in einer zur Hauptachse (A) im Wesentlichen senkrechten Schnittebene der Abstand zwischen der Mitte jedes Metalldrahtelements (54) der Schicht (52) und der Hauptachse (A) im Wesentlichen konstant und für alle Metalldrahtelemente (54) der Schicht (52) gleich ist, wobei die Metalldrahtelemente (54) ein inneres Gewölbe (58) des Seils (51) definieren, wobei das gefüllte Seil (51) ein Füllmaterial (53) des inneren Gewölbes (58) umfasst, das auf einer elastomeren Zusammensetzung basiert und sich im inneren Gewölbe (58) des gefüllten Seils (51) befindet, **dadurch gekennzeichnet, dass**:
- 5 GPa ≤ M_{c1} ≤ 30 Gpa und
- 40 GPa ≤ M_{c2} ≤ 150 GPa und
- 3 ≤ M_{c2}/M_{c1},
wobei M_{c1} und M_{c2} in GPa ausgedrückt sind, wobei:
- M_{c1} = 10/A_{c100}, wobei:
- A_{c100} die in % ausgedrückte Dehnung des gefüllten Seils (51) unter einer Belastung von 100 MPa ist, und
- M_{c2} = [(F_{c40} - F_{c30}) / (A_{c40} - A_{c30}) ] /S, wobei:
- S der in mm² ausgedrückte Querschnitt ist, so dass S = Ml/Mv, wobei:
▪ Ml die in g pro m Seil ausgedrückte lineare Dichte der Metalldrahtelemente (54) ist,
▪ Mv die in g pro cm³ ausgedrückte Massendichte der Metalldrahtelemente (54) ist,
- F_{C40} die in daN ausgedrückte Kraft ist, die 40 % der theoretischen Maximalkraft F_{ct} des Seils ohne das Füllmaterial entspricht,
- F_{c30} die in daN ausgedrückte Kraft ist, die 30 % der theoretischen Maximalkraft F_{ct} des Seils ohne das Füllmaterial entspricht,
- A_{c40} die in % ausgedrückte Dehnung des gefüllten Seils bei 40 % der theoretischen Maximalkraft F_{ct} des Seils ohne das Füllmaterial ist,
- A_{c30} die in % ausgedrückte Dehnung des gefüllten Seils bei 30 % der theoretischen Maximalkraft F_{ct} des Seils ohne das Füllmaterial ist,
wobei F_{ct} = Ml x Rm/Mv, ausgedrückt in daN, wobei Rm die in MPa ausgedrückte durchschnittliche mechanische Bruchfestigkeit der die einzelne Schicht (52) bildenden Metalldrahtelemente (54) ist.

6. Gefülltes Seil (51) nach Anspruch 5, wobei 4 ≤ M_{c2}/M_{c1}, vorzugsweise 5 ≤ M_{c2}/M_{c1} und besonders vorzugsweise 6 ≤ M_{c2}/M_{c1.}

7. Gefülltes Seil (51) nach Anspruch 5 oder 6, wobei M_{c2}/M_{c1} ≤ 12, vorzugsweise M_{c2}/M_{c1} ≤ 11 und besonders vorzugsweise M_{c2}/M_{c1} ≤ 10.

8. Gefülltes Seil (51) nach einem der Ansprüche 5 bis 7, mit einer strukturellen Dehnung Asc, die so ist, dass Asc ≥ 1 %, vorzugsweise Asc ≥ 1,5 %, besonders vorzugsweise Asc ≥ 2 % und ganz besonders vorzugsweise 2 % ≤ Asc ≤ 4 %, wobei die strukturelle Dehnung Asc durch Anwendung der Norm ASTM D2969-04 von 2014 auf das gefüllte Seil bestimmt wird, um eine Kraft-Dehnungs-Kurve zu erhalten, wobei die strukturelle Dehnung Asc gleich der Dehnung in % ist, die der maximalen Steigung der Kraft-Dehnungs-Kurve entspricht.

9. Reifen (10, 10'), umfassend einen Scheitel (12), der einen Laufstreifen (20) und eine Scheitelarmatur (14) umfasst, zwei Flanken (22) und zwei Wülste (24), wobei jede Flanke (22) jede Wulst (24) mit dem Scheitel (12) verbindet, wobei sich die Scheitelarmatur (14) im Scheitel (12) in einer Umfangsrichtung (Z) des Reifens (10) erstreckt, wobei der Reifen (10) eine Karkassenbewehrung (32) umfasst, die in jeder der Wülste (24) verankert ist und sich in die Flanken (22) und den Scheitel (12) erstreckt, wobei die Scheitelarmatur (14) radial zwischen der Karkassenbewehrung (32) und dem Laufstreifen (20) eingefügt ist,
wobei die Scheitelarmatur (14) eine Umreifungsbewehrung (17) umfasst, die mindestens eine Umreifungslage (19) umfasst, die mindestens ein filamentartiges Umreifungsverstärkungselement (48) umfasst, das in eine elastomere Matrix auf Basis einer elastomeren Zusammensetzung eingebettet ist, und eine Arbeitsbewehrung (15), die mindestens eine Arbeitslage (16, 18) umfasst, die filamentartige Arbeitsverstärkungselemente (46, 47) umfasst,
wobei die Karkassenbewehrung (32) mindestens eine Karkassenlage (34) umfasst, die filamentartige Karkassenverstärkungselemente (44) umfasst,
wobei mindestens die filamentartigen Arbeitsverstärkungselemente (46, 47) und die filamentartigen Karkassenverstärkungselemente (44) so angeordnet sind, dass sie in der Projektion auf die äquatoriale Umfangsebene (E) in der radialen Richtung (Y) des Reifens ein dreieckiges Netz definieren, **dadurch gekennzeichnet, dass** das bzw. jedes filamentartige Umreifungsverstärkungselement (48) aus einem gefüllten Seil (51) gebildet ist, das eine einzelne Schicht von schraubenförmig gewickelten Metalldrahtelementen (54) umfasst, wobei die Metalldrahtelemente (54) ein inneres Gewölbe (58) des gefüllten Seils (51) definieren, wobei das gefüllte Seil (51) ein Füllmaterial (53) des inneren Gewölbes (58) umfasst, das auf der elastomeren Zusammensetzung basiert und sich im inneren Gewölbe (58) des gefüllten Seils (51) befindet, **dadurch gekennzeichnet, dass** das gefüllte Seil (51) nach der Entnahme aus dem Reifen (10; 10') einem der Ansprüche 5 bis 8 entspricht.

10. Reifen (10; 10'), umfassend einen Scheitel (12), der einen Laufstreifen (20) und eine Scheitelarmatur (14) umfasst, zwei Flanken (22) und zwei Wülste (24), wobei jede Flanke (22) jede Wulst (24) mit dem Scheitel (12) verbindet, wobei sich die Scheitelarmatur (14) im Scheitel (12) in einer Umfangsrichtung (Z) des Reifens (10) erstreckt, wobei der Reifen (10) eine Karkassenbewehrung (32) umfasst, die in jeder der Wülste (24) verankert ist und sich in die Flanken (22) und den Scheitel (12) erstreckt, wobei die Scheitelarmatur (14) radial zwischen der Karkassenbewehrung (32) und dem Laufstreifen (20) eingefügt ist,
wobei die Scheitelarmatur (14) eine Umreifungsbewehrung (17) umfasst, die mindestens eine Umreifungslage (19) umfasst, die mindestens ein filamentartiges Umreifungsverstärkungselement (48) umfasst, das in eine elastomere Matrix auf Basis einer elastomeren Zusammensetzung eingebettet ist, und eine Arbeitsbewehrung (15), die mindestens eine Arbeitslage (16, 18) umfasst, die filamentartige Arbeitsverstärkungselemente (46, 47) umfasst,
wobei die Karkassenbewehrung (32) mindestens eine Karkassenlage (34) umfasst, die filamentartige Karkassenverstärkungselemente (44) umfasst,
wobei mindestens die filamentartigen Arbeitsverstärkungselemente (46, 47) und die filamentartigen Karkassenverstärkungselemente (44) so angeordnet sind, dass sie in der Projektion auf die äquatoriale Umfangsebene (E) in der radialen Richtung (Y) des Reifens ein dreieckiges Netz definieren, wobei das bzw. jedes filamentartige Umreifungsverstärkungselement (48) aus einem gefüllten Seil (51) gebildet ist, das eine einzelne Schicht von schraubenförmig gewickelten Metalldrahtelementen (54) umfasst, wobei, wenn sich das Seil (50) in einer im Wesentlichen geradlinigen Richtung erstreckt, jedes Metalldrahtelement (54) der Schicht (52) eine schraubenförmige Bahn um eine Hauptachse (A), die zu der im Wesentlichen geradlinigen Richtung im Wesentlichen parallel ist, beschreibt, so dass in einer zur Hauptachse (A) im Wesentlichen senkrechten Schnittebene der Abstand zwischen der Mitte jedes Metalldrahtelements (54) der Schicht (52) und der Hauptachse (A) im Wesentlichen konstant und für alle Metalldrahtelemente (54) der Schicht (52) gleich ist, wobei die Metalldrahtelemente (54) ein inneres Gewölbe (58) des gefüllten Seils (51) definieren, wobei das gefüllte Seil (51) ein Füllmaterial (53) des inneren Gewölbes (58) umfasst, das auf der elastomeren Zusammensetzung basiert und sich im inneren Gewölbe (58) des gefüllten Seils (51) befindet, **dadurch gekennzeichnet, dass** die Umreifungslage (19) nach der Entnahme aus dem Reifen (10; 10') die folgenden Merkmale aufweist:
- 100 daN.mm⁻¹ ≤ Mₙ₁ ≤ 600 daN.mm⁻¹ und
- 1.000 daN.mm⁻¹ ≤ Mₙ₂ ≤ 4.500 daN.mm⁻¹ und
- 3 ≤ Mₙ₂/Mₙ₁,
wobei Mₙ₁ und Mₙ₂ in daN.mm⁻¹ ausgedrückt sind, wobei
- Mₙ₁ = 250/Aₙ₂₅₀, wobei:
- Aₙ₂₅₀ die in % ausgedrückte äquivalente Dehnung der Umreifungslage (19) unter einer Belastung von 250 daN.dm⁻¹ ist, Aₙ₂₅₀ erhalten wird, indem die Kraft von 250 daN.dm⁻¹ durch die Dichte der filamentartigen Umreifungsverstärkungselemente (48) pro Dezimeter Umreifungslage (19) dividiert wird, um eine Einheitsbelastung zu erhalten, und indem anschließend aus einer Kraft-Dehnungs-Kurve, die durch Ziehen des gefüllten Seils (51) unter den Bedingungen der Norm ASTM D2969-04 von 2014 erhalten wird, die Dehnung des gefüllten Seils (51) unter dieser Einheitsbelastung bestimmt wird, und
- Mₙ₂ = [ (Fₙ₄₀ - Fₙ₃₀) / (Aₙ₄₀ - Aₙ₃₀) ] , wobei:
- Fₙ₄₀ die in daN.dm⁻¹ ausgedrückte Kraft ist, die 40 % der theoretischen Maximalkraft Fₙₜ der Umreifungslage (19) entspricht,
- Fₙ₃₀ die in daN.dm⁻¹ ausgedrückte Kraft ist, die 30 % der theoretischen Maximalkraft Fₙₜ der Umreifungslage (19) entspricht,
- Aₙ₄₀ die in % ausgedrückte äquivalente Dehnung der Umreifungslage bei 40 % der theoretischen Maximalkraft Fₙₜ der Umreifungslage (19) ist, Aₙ₄₀ erhalten wird, indem 40 % der theoretischen Maximalkraft Fₙₜ der Umreifungslage (19) durch die Dichte der filamentartigen Umreifungsverstärkungselemente (48) pro Dezimeter Umreifungslage (19) dividiert wird, um eine Einheitsbelastung bei 40 % zu erhalten, und indem anschließend aus einer Kraft-Dehnungs-Kurve, die durch Ziehen des gefüllten Seil (51) unter den Bedingungen der Norm ASTM D2969-04 von 2014 erhalten wird, die Dehnung des gefüllten Seils (51) unter dieser Einheitsbelastung bestimmt wird,
- wobei Aₙ₃₀ die in % ausgedrückte äquivalente Dehnung der Umreifungslage bei 30 % der theoretischen Maximalkraft Fₙₜ der Umreifungslage (19) ist, wobei Aₙ₃₀ erhalten wird, indem 30 % der theoretischen Maximalkraft Fₙₜ der Umreifungslage (19) durch die Dichte der filamentartigen Umreifungsverstärkungselemente (48) pro Dezimeter Umreifungslage (19) dividiert wird, um eine Einheitsbelastung bei 30 % zu erhalten, und indem anschließend aus einer Kraft-Dehnungs-Kurve, die durch Ziehen des gefüllten Seils (51) unter den Bedingungen der Norm ASTM D2969-04 von 2014 erhalten wird, die Dehnung des gefüllten Seils (51) unter dieser Einheitsbelastung bestimmt wird,
wobei Fₙₜ = Ml x Rm x d / Mv, ausgedrückt in daN.dm⁻¹, wobei:
▪ Ml die in g pro m Seil ausgedrückte lineare Dichte der Metalldrahtelemente (54) ist,
▪ Mv die in g pro cm³ ausgedrückte Massendichte der Metalldrahtelemente (54) ist,
▪ Rm die in MPa ausgedrückte durchschnittliche mechanische Bruchfestigkeit der die einzelne Schicht (52) bildenden Metalldrahtelemente (54) ist und
▪ d die Dichte des bzw. der filamentartigen Umreifungsverstärkungselemente in der Umreifungslage (19), ausgedrückt als Anzahl pro dm Umreifungslage (19), ist.

11. Reifen (10; 10') nach Anspruch 10, wobei 4 ≤ Mₙ₂/Mₙ₁, vorzugsweise 5 ≤ Mₙ₂/Mₙ₁ und besonders vorzugsweise 6 ≤ Mₙ₂/Mₙ₁.

12. Reifen (10; 10') nach Anspruch 10 oder 11, wobei Mₙ₂/Mₙ₁ ≤ 12, vorzugsweise Mₙ₂/Mₙ₁ ≤ 11 und besonders vorzugsweise Mₙ₂/Mₙ₁ ≤ 10.

13. Reifen (10; 10') nach einem der Ansprüche 10 bis 12, wobei die Umreifungsbewehrung eine einzelne Umreifungslage umfasst.

14. Reifen (10') nach einem der Ansprüche 10 bis 13, wobei die Arbeitsbewehrung eine einzelne Arbeitslage umfasst.

15. Reifen (10') nach dem vorangehenden Anspruch, wobei das bzw. die filamentartigen Umreifungsverstärkungselemente (48), die filamentartigen Arbeitsverstärkungselemente (46) und die filamentartigen Karkassenverstärkungselemente (44) so angeordnet sind, dass sie in der Projektion auf die äquatoriale Umfangsebene (E) in der radialen Richtung (Y) des Reifens ein dreieckiges Netz definieren.

## Claims

1. Cord (50) comprising a single layer (52) of helically wound metal filamentary elements (54), each metal filamentary element (54) of the layer (52) describing, when the cord (50) extends in a substantially rectilinear direction, a helical path about a main axis (A) substantially parallel to the substantially rectilinear direction, such that, in a section plane substantially perpendicular to the main axis (A), the distance between the centre of each metal filamentary element (54) of the layer (52) and the main axis (A) is substantially constant and identical for all the metal filamentary elements (54) of the layer (52), **characterized in that:**
- 5 GPa ≤ M₁ ≤ 16 GPa, and
- 40 GPa ≤ M₂ ≤ 160 GPa, and
- 3 ≤ M₂/M₁,
M₁ and M₂ being expressed in GPa, where:
- M₁=10 / A₁₀₀, where:
- A₁₀₀ is the elongation, expressed in %, of the cord under a load of 100 MPa, and
- M₂=[(F₄₀-F₃₀) / (A₄₀-A₃₀)] / S, where:
- S is the cross-sectional area, expressed in mm², such that S=MI /Mv, where:
▪ Ml is the linear density of the metal filamentary elements (54), expressed in g per m of cord,
▪ Mv is the mass density of the metal filamentary elements (54), expressed in g per cm³,
- F₄₀ is the force, expressed in daN, equal to 40% of the theoretical maximum force Fₜ of the cord,
- F₃₀ is the force, expressed in daN, equal to 30% of the theoretical maximum force Fₜ of the cord,
- A₄₀ is the elongation of the cord, expressed in %, at 40% of the theoretical maximum force Fₜ of the cord,
- A₃₀ is the elongation of the cord, expressed in %, at 30% of the theoretical maximum force Fₜ of the cord,
where Fₜ= Ml x Rm /Mv, expressed in daN, where Rm is the mean tensile strength, expressed in MPa, of the metal filamentary elements (54) making up the single layer (52).

2. Cord (50) according to the preceding claim, wherein 6 ≤ M₂/M₁, preferably 8 ≤ M₂/M₁ and more preferably 10 ≤ M₂/M₁.

3. Cord (50) according to either one of the preceding claims, wherein M₂/M₁ ≤ 19, preferably M₂/M₁ ≤ 17 and more preferably M₂/M₁ ≤ 15.

4. Cord (50) according to any one of the preceding claims, having a structural elongation As such that As ≥ 1%, preferably As ≥ 2.5%, more preferably As ≥ 3% and even more preferably 3% ≤ As ≤ 5.5%, the structural elongation As being determined by applying the standard ASTM D2969-04 of 2014 to the cord so as to obtain a force-elongation curve, the structural elongation As being equal to the elongation, in %, corresponding to the maximum gradient of the force-elongation curve.

5. Filled cord (51) comprising a single layer (52) of helically wound metal filamentary elements (54), each metal filamentary element (54) of the layer (52) describing, when the cord (50) extends in a substantially rectilinear direction, a helical path about a main axis (A) substantially parallel to the substantially rectilinear direction, such that, in a section plane substantially perpendicular to the main axis (A), the distance between the centre of each metal filamentary element (54) of the layer (52) and the main axis (A) is substantially constant and identical for all the metal filamentary elements (54) of the layer (52), the metal filamentary elements (54) defining an internal enclosure (58) of the cord (51), the filled cord (51) comprising a filling material (53) for the internal enclosure (58) that is based on an elastomeric composition and situated in the internal enclosure (58) of the filled cord (51), **characterized in that:**
- 5 GPa ≤ M_{c1} ≤ 30 GPa, and
- 40 GPa ≤ M_{c2} ≤ 150 GPa, and
- 3 ≤ M_{c2}/M_{c1},
M_{c1} and M_{c2} being expressed in GPa, where:
- M_{c1}=10 / A_{c100}, where:
- A_{c100} is the elongation, expressed in %, of the filled cord (51) under a load of 100 MPa, and
- M_{c2}=[(F_{c40}-F_{c30}) / (A_{c40}-A_{c30})] / S, where:
- S is the cross-sectional area, expressed in mm², such that S=MI /Mv, where:
▪ Ml is the linear density of the metal filamentary elements (54), expressed in g per m of cord,
▪ Mv is the mass density of the metal filamentary elements (54), expressed in g per cm³,
- F_{c40} is the force, expressed in daN, equal to 40% of the theoretical maximum force F_{ct} of the cord without filling material,
- F_{c30} is the force, expressed in daN, equal to 30% of the theoretical maximum force F_{ct} of the cord without filling material,
- A_{c40} is the elongation of the filled cord, expressed in %, at 40% of the theoretical maximum force F_{ct} of the cord without filling material,
- A_{c30} is the elongation of the filled cord, expressed in %, at 30% of the theoretical maximum force F_{ct} of the cord without filling material,
where F_{ct}= Ml x Rm / Mv, expressed in daN, where Rm is the mean tensile strength, expressed in MPa, of the metal filamentary elements (54) making up the single layer (52).

6. Filled cord (51) according to Claim 5, wherein 4 ≤ M_{c2}/M_{c1}, preferably 5 ≤ M_{c2}/M_{c1} and more preferably 6 ≤ M_{c2}/M_{c1}.

7. Filled cord (51) according to Claim 5 or 6, wherein M_{c2}/M_{c1} ≤ 12, preferably M_{c2}/M_{c1} ≤ 11 and more preferably M_{c2}/M_{c1} ≤ 10.

8. Filled cord (51) according to any one of Claims 5 to 7, having a structural elongation Asc such that Asc ≥ 1%, preferably Asc ≥ 1.5%, more preferably Asc ≥ 2% and even more preferably 2% ≤ Asc ≤ 4%, the structural elongation Asc being determined by applying the standard ASTM D2969-04 of 2014 to the filled cord so as to obtain a force-elongation curve, the structural elongation Asc being equal to the elongation, in %, corresponding to the maximum gradient of the force-elongation curve.

9. Tyre (10, 10') comprising a crown (12) comprising a tread (20) and a crown reinforcement (14), two sidewalls (22), two beads (24), each sidewall (22) connecting each bead (24) to the crown (12), the crown reinforcement (14) extending in the crown (12) in a circumferential direction (Z) of the tyre (10), the tyre (10) comprising a carcass reinforcement (32) that is anchored in each of the beads (24) and extends in the sidewalls (22) and in the crown (12), the crown reinforcement (14) being radially interposed between the carcass reinforcement (32) and the tread (20),
the crown reinforcement (14) comprising a hoop reinforcement (17) comprising at least one hooping ply (19) comprising at least one hooping filamentary reinforcing element (48) embedded in an elastomeric matrix based on an elastomeric composition and a working reinforcement (15) comprising at least one working ply (16, 18) comprising working filamentary reinforcing elements (46, 47),
the carcass reinforcement (32) comprising at least one carcass ply (34) comprising carcass filamentary reinforcing elements (44),
at least the working filamentary reinforcing elements (46, 47) and the carcass filamentary reinforcing elements (44) being arranged so as to define a triangle mesh in projection onto the equatorial circumferential plane (E) in the radial direction (Y) of the tyre, **characterized in that** the or each hooping filamentary reinforcing element (48) is formed by a filled cord (51) comprising a single layer of helically wound metal filamentary elements (54), the metal filamentary elements (54) defining an internal enclosure (58) of the filled cord (51), the filled cord (51) comprising a filling material (53) for the internal enclosure (58) that is based on the elastomeric composition and situated in the internal enclosure (58) of the filled cord (51), **characterized in that** the filled cord (51), once it has been extracted from the tyre (10; 10'), is according to any one of Claims 5 to 8.

10. Tyre (10; 10') comprising a crown (12) comprising a tread (20) and a crown reinforcement (14), two sidewalls (22), two beads (24), each sidewall (22) connecting each bead (24) to the crown (12), the crown reinforcement (14) extending in the crown (12) in a circumferential direction (Z) of the tyre (10), the tyre (10) comprising a carcass reinforcement (32) that is anchored in each of the beads (24) and extends in the sidewalls (22) and in the crown (12), the crown reinforcement (14) being radially interposed between the carcass reinforcement (32) and the tread (20),
the crown reinforcement (14) comprising a hoop reinforcement (17) comprising at least one hooping ply (19) comprising at least one hooping filamentary reinforcing element (48) embedded in an elastomeric matrix based on an elastomeric composition and a working reinforcement (15) comprising at least one working ply (16, 18) comprising working filamentary reinforcing elements (46, 47),
the carcass reinforcement (32) comprising at least one carcass ply (34) comprising carcass filamentary reinforcing elements (44),
at least the working filamentary reinforcing elements (46, 47) and the carcass filamentary reinforcing elements (44) being arranged so as to define a triangle mesh in projection onto the equatorial circumferential plane (E) in the radial direction (Y) of the tyre, the or each hooping filamentary reinforcing element (48) being formed by a filled cord (51) comprising a single layer of helically wound metal filamentary elements (54), each metal filamentary element (54) of the layer (52) describing, when the cord (50) extends in a substantially rectilinear direction, a helical path about a main axis (A) substantially parallel to the substantially rectilinear direction, such that, in a section plane substantially perpendicular to the main axis (A), the distance between the centre of each metal filamentary element (54) of the layer (52) and the main axis (A) is substantially constant and identical for all the metal filamentary elements (54) of the layer (52), the metal filamentary elements (54) defining an internal enclosure (58) of the filled cord (51), the filled cord (51) comprising a filling material (53) for the internal enclosure (58) that is based on the elastomeric composition and situated in the internal enclosure (58) of the filled cord (51), **characterized in that** the hooping ply (19), once it has been extracted from the tyre (10; 10'), has the following characteristics:
- 100 daN.mm⁻¹ ≤ Mₙ₁ ≤ 600 daN.mm⁻¹, and
- 1000 daN.mm⁻¹ ≤ Mₙ₂ ≤ 4500 daN.mm⁻¹, and
- 3 ≤ Mₙ₂/Mₙ₁,
Mₙ₁ et Mₙ₂ being expressed in daN.mm⁻¹, where
- Mₙ₁=250 / Aₙ₂₅₀, where:
- Aₙ₂₅₀ is the equivalent elongation, expressed in %, of the hooping ply (19) under a load of 250 daN.dm⁻¹, Aₙ₂₅₀ being obtained by dividing the load of 250 daN.dm⁻¹ by the density of hooping filamentary reinforcing elements (48) per decimetre of hooping ply (19) so as to obtain a unitary load, then by determining, from a force-elongation curve obtained by tensioning the filled cord (51) under the conditions of the standard ASTM D2969-04 of 2014, the elongation of the filled cord (51) under this unitary load, and
- Mₙ₂=[(Fₙ₄₀-Fₙ₃₀) / (Aₙ₄₀-Aₙ₃₀)], where:
- Fₙ₄₀ is the force, expressed in daN.dm⁻¹, equal to 40% of the theoretical maximum force Fₙₜ of the hooping ply (19),
- Fₙ₃₀ is the force, expressed in daN.dm⁻¹, equal to 30% of the theoretical maximum force Fₙₜ of the hooping ply (19),
- Aₙ₄₀ is the equivalent elongation of the hooping ply, expressed in %, at 40% of the theoretical maximum force Fₙₜ of the hooping ply (19), Aₙ₄₀ being obtained by dividing 40% of the theoretical maximum force Fₙₜ of the hooping ply (19) by the density d of hooping filamentary reinforcing elements (48) per decimetre of hooping ply (19) so as to obtain a unitary load at 40%, then by determining, from a force-elongation curve obtained by tensioning the filled cord (51) under the conditions of the standard ASTM D2969-04 of 2014, the elongation of the filled cord (51) under this unitary load,
- Aₙ₃₀ is the equivalent elongation of the hooping ply, expressed in %, at 30% of the theoretical maximum force Fₙₜ of the hooping ply (19), Aₙ₃₀ being obtained by dividing 30% of the theoretical maximum force Fₙₜ of the hooping ply (19) by the density d of hooping filamentary reinforcing elements (48) per decimetre of hooping ply (19) so as to obtain a unitary load at 30%, then by determining, from a force-elongation curve obtained by tensioning the filled cord (51) under the conditions of the standard ASTM D2969-04 of 2014, the elongation of the filled cord (51) under this unitary load,
where Fₙₜ= Ml x Rm x d / Mv, expressed in daN.dm⁻¹, where:
▪ Ml is the linear density of the metal filamentary elements (54), expressed in g per m of cord,
▪ Mv is the mass density of the metal filamentary elements (54), expressed in g per cm³,
▪ Rm is the mean tensile strength, expressed in MPa, of the metal filamentary elements (54) making up the single layer (52), and
▪ d is the density of the one or more hooping filamentary reinforcing elements in the hooping ply (19), expressed in number per dm of hooping ply (19).

11. Tyre (10; 10') according to Claim 10, wherein 4 ≤ Mₙ₂/Mₙ₁, preferably 5 ≤ Mₙ₂/Mₙ₁ and more preferably 6 ≤ Mₙ₂/Mₙ₁.

12. Tyre (10; 10') according to Claim 10 or 11, wherein Mₙ₂/Mₙ₁ ≤ 12, preferably Mn₂/Mn₁ ≤ 11 and more preferably Mₙ₂/Mₙ₁ ≤ 10.

13. Tyre (10; 10') according to any one of Claims 10 to 12, wherein the hoop reinforcement comprises a single hooping ply.

14. Tyre (10') according to any one of Claims 10 to 13, wherein the working reinforcement comprises a single working ply.

15. Tyre (10') according to the preceding claim, wherein the one or more hooping filamentary reinforcing elements (48), the working filamentary reinforcing elements (46) and the carcass filamentary reinforcing elements (44) are arranged so as to define a triangle mesh in projection onto the equatorial circumferential plane (E) in the radial direction (Y) of the tyre.
